# EUROPEAN PATENT SPECIFICATION

(11) **EP 2 484 543 B1**
(45) Date of publication and mention of the grant of the patent: **06.06.2018**
(21) Application number: 10820644.2
(22) Date of filing: 30.09.2010
(51) Int. Cl.: B60G 17/015, B60G 17/016, B60G 7/00

(54) **CONTROL DEVICE FOR VEHICLE**
STEUERVORRICHTUNG FÜR EIN FAHRZEUG
DISPOSITIF DE COMMANDE POUR VÉHICULE

(30) Priority: 30.09.2009 JP 2009227326; 30.09.2009 JP 2009228447; 25.06.2010 JP 2010145216; 30.06.2010 JP 2010150531
(43) Date of publication of application: 08.08.2012
(73) Proprietor: Equos Research Co., Ltd., Chiyoda-ku Tokyo 101-0021 (JP)
(72) Inventor: HORIGUCHI, Munehisa, Tokyo 101-0021 (JP); MIZUNO, Akira, Tokyo 101-0021 (JP)
(74) Representative: TBK
(86) International application number: PCT/JP2010/067085
(87) International publication number: WO 2011/040529

(56) References cited:
- JP-A- 3 231 017
- JP-A- 60 193 781
- JP-A- 2006 327 571
- JP-A- 2009 184 540
- JP-U- 60 114 004

## Description

### Technical Field

The present invention relates to a vehicle control apparatus to be used on a vehicle equipped with a camber angle adjuster for adjusting camber angles of wheels, and more particularly to a vehicle control apparatus capable of both extending the service lives of tires by restraining partial wear of tires and ensuring the running stability of the vehicle.

### Background Art

Techniques by which the running stability of a vehicle can be ensured by adjusting the camber angles of wheels according to the running state of the vehicle are already known. Regarding such a technique, Patent Literature 1 for instance discloses a technique by which the limit performance of a vehicle in cornering is improved by detecting the running speed of the vehicle and giving negative cambers to its wheels at or above a predetermined speed. Patent Literature 1 is considered to disclose a vehicle control apparatus according to the preamble of claim 1.

A further vehicle control apparatus is known from Patent Literature 2.

### Citation List

### Patent Literature

Patent Literature 1: JP-A No. Sho 60-193781
Patent Literature 2: JP 2009 184540 A

### Summary of Invention

### Technical Problem

However, the technique disclosed in Patent Literature 1 cited above involves the problem that, when a vehicle runs an expressway, a trunk highway or the like for many hours at or above a predetermined speed, the wheels continue to be given negative cambers all that while with the consequences that the tires wear unevenly to shorten their service lives and that the ground contact faces of the tires also become uneven to adversely affect the running stability of the vehicle.

The present invention, attempted with a view to solving the problems noted above, is intended to provide a vehicle control apparatus capable of both extending the service lives of tires by restraining partial wear of tires and ensuring the running stability of the vehicle.

### Solution to Problem and Advantageous Effects of Invention

According to the present invention, the above object is achieved with a vehicle control apparatus having the features of claim 1.

In order to achieve this object, a vehicle control apparatus according to Claim 1 can restrain partial wear of tires because, if vertical load judging means judges that the vertical loads of the wheels are equal to or more than a predetermined vertical load, second camber angle adjusting means so adjusts the vertical loads of the wheels as to reduce at least the absolute values thereof. Thus, as the tendency is that the greater the vertical loads of wheels, the greater the disadvantage to the wear of tires, partial wear of tires can be restrained when the vertical loads of the wheels are equal to or more than the predetermined vertical load by so adjusting the vertical loads of the wheels as to reduce at least the absolute values thereof. This results in an advantage that the service lives of tires can be extended. Also, by restraining partial wear of tires, the ground contact faces of the tires can be prevented from becoming uneven to provide an additional advantage of making it possible to ensure the running stability of the vehicle. Furthermore, as partial wear of tires can be restrained, another advantage of correspondingly saving the consumption of fuel can be achieved.

A vehicle control apparatus according to Claim 1 can ensure the straight line stability of the vehicle by utilizing the side rigidity of the wheels when the vehicle runs, for instance, an expressway or a trunk highway having a relatively high proportion of straight sections because first camber angle adjusting means gives positive cambers or negative cambers to the wheels if running state judging means judges that the running state of the vehicle is a predetermined straight running state. Also, partial wear of tires can be so restrained because, if the running state judging means judges that the running state of the vehicle is the predetermined straight running state and the vertical load judging means judges that the vertical loads of the wheels are equal to or more than the predetermined vertical load, as to be at least smaller in absolute value than the camber angles adjusted by the second camber angle adjusting means.

Therefore, there is a further effect of compatibly ensuring the straight line stability of the vehicle and restraining partial wear of tires.

To add, the "predetermined straight running state" mentioned in Claim 1 can be exemplified by a case in which the acceleration in the side direction, the yaw rate and the like of the vehicle are equal to or less than respectively predetermined values, in a case in which the operation quantities of operational members operated by the driver (e.g. the steering wheel) to turn the running direction of the vehicle leftward or rightward are equal to or less than respectively predetermined values and a case in which the current position of the vehicle in positioned on a straight road on which the vehicle is expected to run straight in a predetermined section of map data such as on an expressway or on a trunk road.

A vehicle control apparatus according to Claim 2 can ensure the running stability of the vehicle when, for instance, the acceleration in the longitudinal direction or in the side direction of the vehicle is great to make the vehicle abruptly accelerated, abruptly braked or abruptly turned because, if state quantity judging means judges that a state quantity or quantities of the vehicle satisfy predetermined condition or conditions, third camber angle adjusting means gives positive cambers or negative cambers to the wheels. Also, partial wear of tires can be so restrained because, if the state quantity judging means judges that the state quantity or quantities of the vehicle do not satisfy the predetermined condition or conditions and the vertical load judging means judges that the vertical loads of the wheels are equal to or more than the predetermined vertical load, the second camber angle adjusting means so adjusts the camber angles of the wheels as to be at least smaller in absolute value than the camber angles adjusted by the second camber angle adjusting means. Therefore, in addition to the advantageous effects of Claim 1, there is a further effect of compatibly ensuring the running stability of the vehicle and restraining partial wear of tires.

To add, the "state quantity or quantities of the vehicle" mentioned in Claim 2 are not limited to states of the vehicle itself such as the acceleration in the longitudinal direction or in the side direction of the vehicle referred to above, and they may include the states of operational members operated by the driver, such as the extent of the accelerator pedal or the brake pedal being depressed or that of the steering wheel being turned.

A vehicle control apparatus according to Claim 3 can ensure straight line stability of the vehicle use because the second camber angle adjusting means adjusts the camber angles of front wheels and rear wheels. Further, as the first camber angle adjusting means adjusts the camber angles of the front wheels or the rear wheels, a state in which the front wheels or the rear wheels are given positive cambers or negative cambers can be maintained while restraining partial wear of the front wheels or the rear wheels. This feature gives the advantageous effects of ensuring straight line stability of the vehicle at the same time as restraining partial wear of tires in addition to those of Claim 1.

In a vehicle control apparatus according to Claim 4, even if the running state judging means judges that the running state of the vehicle is the predetermined straight running state and the vertical load judging means judges that the vertical loads of the wheels are equal to or more than the predetermined vertical load, maintaining means maintains the camber angles adjusted by the third camber angle adjusting means if the continuous state judging means judges that the vehicle continues to satisfy the predetermined condition or conditions. This means that, in addition to the advantageous effects of Claim 1 or 3, there is a further effect of restraining, in a state in which the camber angles of the wheels are adjusted by the third camber angle adjusting means, frequent switching of the camber angles by avoiding actuation of the camber angle adjuster to adjust the camber angles of the wheels every time the vertical loads of the wheels reach or surpass the predetermined vertical load.

In a vehicle control apparatus according to Claim 5, even if the running state judging means judges that the running state of the vehicle is the predetermined straight running state, standby means stands by for a start of adjustment of the camber angles of the wheels by the third camber angle adjusting means. This means that, in addition to the advantageous effects of any of Claims 1 and 2 to 4, there is a further effect of restraining, in a state in which the camber angle adjuster is driven by the third camber angle adjusting means to adjust the camber angles of the wheels, frequent switching of the camber angles by avoiding frequent actuation of the camber angle adjuster to adjust the camber angles frequently.

A vehicle control apparatus according to Claim 6, as the vertical load judging means judges whether or not the vertical loads of the wheels are equal to or more than the predetermined vertical load on the basis of the expansion/contraction quantity of the suspension acquired by expansion/contraction quantity acquiring means, gives a further advantageous effect that whether the vertical loads of the wheels are equal to or more than the predetermined vertical load can be accurately judged with a simple structure by utilizing the proportional relationship between the expansion/contraction quantity of the suspension and the vertical loads of the wheels in addition to the effects stated in any of Claims 1 and 3 to 5.

Also, there is another advantageous effect that restraint on partial wear of the tire serves to prevent the ground contact face of the tire from becoming uneven and thereby to ensure the running stability of the vehicle.

Furthermore, as a negative camber never continues to be given to the predetermined wheel while the vehicle is running, the rolling resistance of the tire can be correspondingly reduce and, therefore, there is another advantageous effect of saving fuel consumption.

### Brief Description of Drawings

[Fig. 1] Fig. 1 is a diagram schematically showing a vehicle to be mounted with a vehicle control apparatus in a first embodiment of the invention.
[Fig. 2] Fig. 2 shows a front view of a suspension.
[Fig. 3] Fig. 3 is a block diagram showing the electrical configuration of the vehicle control apparatus.
[Fig. 4] Fig. 4 is a flow chart showing state quantity judgment processing.
[Fig. 5] Fig. 5 is a flow chart showing running state judgment processing.
[Fig. 6] Fig. 6 is a flow chart showing partial wear load judgment processing.
[Fig. 7] Fig. 7 is a flow chart showing camber control processing.
[Fig. 8] Fig. 8 is a diagram schematically showing a vehicle to be mounted with a vehicle control apparatus in a second embodiment of the invention.
[Fig. 9] Fig. 9 is a block diagram showing the electrical configuration of the vehicle control apparatus.
[Fig. 10] Fig. 10 is a flow chart showing partial wear load judgment processing in the second embodiment of the invention.
[Fig. 11] Fig. 11 is a flow chart showing camber control processing in the second embodiment of the invention.
[Fig. 12] Fig. 12 is a block diagram showing the electrical configuration of the vehicle control apparatus in a third embodiment of the invention.
[Fig. 13] Fig. 13 is a flow chart showing running state judgment processing.
[Fig. 14] Fig. 14 is a flow chart showing partial wear load judgment processing.
[Fig. 15] Fig. 15 is a flow chart showing partial wear load judgment processing.
[Fig. 16] Fig. 16 is a flow chart showing camber control processing.
[Fig. 17] Fig. 17 is a block diagram showing the electrical configuration of a vehicle control apparatus in a fourth embodiment of the invention.
[Fig. 18] Fig. 18 is a flow chart showing partial wear load judgment processing.
[Fig. 19] Fig. 19 is a flow chart showing partial wear load judgment processing in a fifth embodiment of the invention.
[Fig. 20] Fig. 20 is a block diagram showing the electrical configuration of a vehicle control apparatus in a sixth embodiment of the invention.
[Fig. 21] Fig. 21 is a flow chart showing camber control processing.
[Fig. 22] Fig. 22 is a conceptual diagram of a vehicle in a seventh embodiment of the invention.
[Fig. 23] Fig. 23 shows a cross section of a wheel.
[Fig. 24] Fig. 24 is a control block diagram of a vehicle.
[Fig. 25] Fig. 25 is a first main flow chart showing actions of a control unit.
[Fig. 26] Fig. 26 is a second main flow chart showing actions of the control unit.
[Fig. 27] Fig. 27 shows a subroutine of drive stabilizing camber needed/unneeded judgment processing.
[Fig. 28] Fig. 28 shows a subroutine of straight line stabilizing camber needed/unneeded judgment processing.
[Fig. 29] Fig. 29 shows a subroutine of vertical load judgment processing.
[Fig. 30] Fig. 30 shows a subroutine of straight line stabilizing camber needed/unneeded judgment processing in an eighth embodiment of the invention.
[Fig. 31] Fig. 30 shows a subroutine of straight line stabilizing camber needed/unneeded judgment processing in a ninth embodiment of the invention.
[Fig. 32] Fig. 32 shows a front view of a suspension.
[Fig. 33] Fig. 33 is a diagram schematically showing a vehicle.
[Figs. 34] Figs. 34 (a) and (b) show front views of a rear wheel supported by a suspension.
[Figs. 35] Figs. 35 (a) and (b) show front views of the rear wheel supported by the suspension.
[Fig. 36] Fig. 36 is a diagram schematically showing the wheel supported by the suspension.

### Description of Embodiments

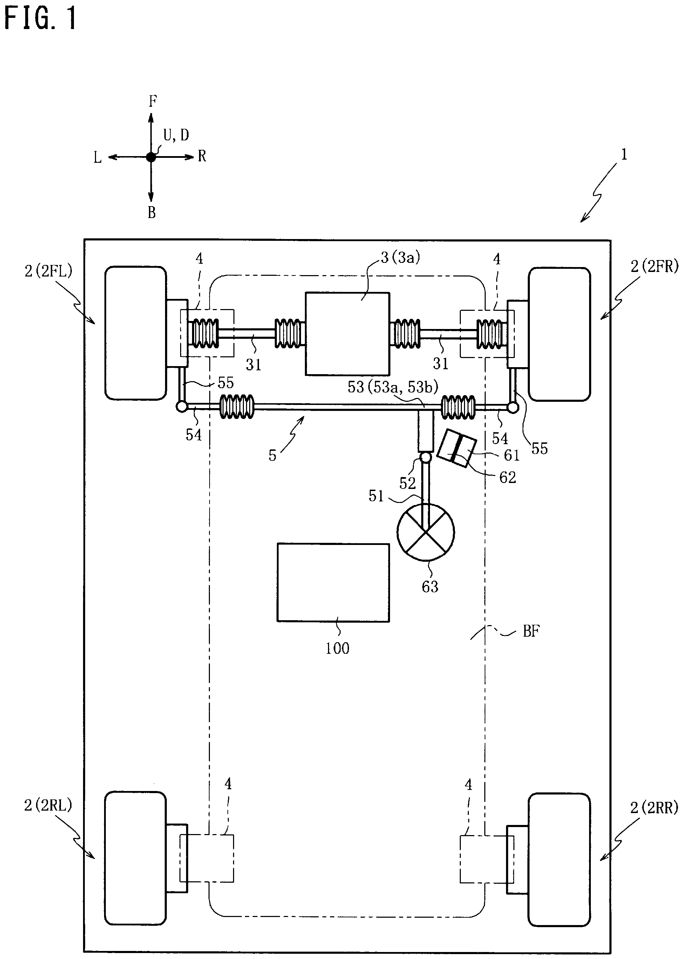

Preferred embodiments of the present invention will be described below with reference to accompanying drawings. Fig. 1 is a diagram schematically showing a vehicle 1 to be mounted with a vehicle control apparatus 100 in a first embodiment of the invention. Incidentally, arrows U-D, L-R and F-B in Fig. 1 respectively represent the vertical direction, side direction and longitudinal direction of the vehicle 1.

First, the configuration of the vehicle 1 will be outlined. The vehicle 1, as shown in Fig. 1, is mainly configured of a body frame BF, a plurality of (four in this embodiment) wheels 2 that support the body frame BF, a wheel running gear 3 that rotationally drives some of the plurality of wheels 2 (left and right front wheels 2FL and 2FR in this embodiment), a plurality of suspensions 4 that suspend the wheels 2 from the body frame BF, and a steering unit 5 that steers some of the plurality of wheels 2 (the left and right front wheels 2FL and 2FR in this embodiment).

Next, a detailed configuration of each component will be described. The wheels 2, as shown in Fig. 1, comprise left and right front wheels 2FL and 2FR positioned toward the front of the vehicle 1 (in the direction of arrow F) and left and right rear wheels 2RL and 2RR positioned toward the rear of the vehicle 1 (in the direction of arrow B). In this embodiment, while the left and right front wheels 2FL and 2FR are configured as driving wheels rotationally driven by the wheel running gear 3, the left and right rear wheels 2RL and 2RR are driven wheels rotated by the running of the vehicle 1.

Further, the wheels 2, as shown in Fig. 1, are so configured that all of the left and right front wheels 2FL and 2FR and the left and right rear wheels 2RL and 2RR are the same in shape and characteristics, and their treads (the dimension in the side direction in Fig. 1) have the same width.

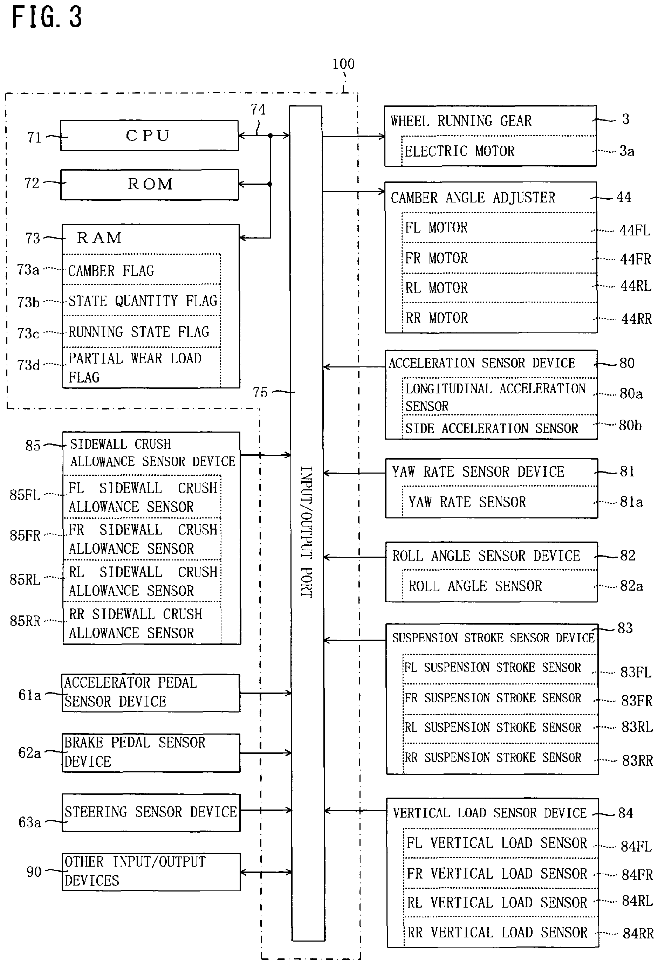

The wheel running gear 3, as stated above, is a device for rotationally driving the left and right front wheels 2FL and 2FR, and is configured of an electric motor 3a as will be described afterwards (see Fig. 3). Further, the electric motor 3a, as shown in Fig. 1, is connected to the left and right front wheels 2FL and 2FR via a differential gear (not shown) and a pair of drive shafts 31.

When a driver depresses an accelerator pedal 61, rotational driving force is given from the wheel running gear 3 to the left and right front wheels 2FL and 2FR, and those left and right front wheels 2FL and 2FR are rotationally driven according to the extent of depressing the accelerator pedal 61. Any difference in rotation between the left and right front wheels 2FL and 2FR is absorbed by the differential gear.

The suspensions 4, functioning as a system to ease vibrations transmitted from the road surface to the body frame BF via the wheels 2, are configured to be expandable and, as shown in Fig. 1, one is provided for each of the wheels 2. Also, the suspensions 4 in this embodiment have an additional function of a camber angle adjusting mechanism that adjusts the camber angles of the wheels 2.

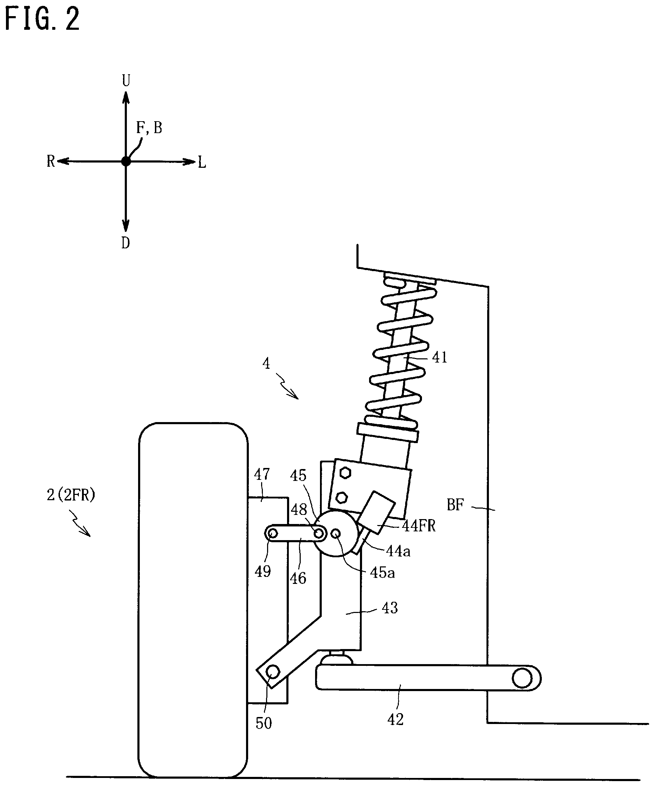

Now a detailed configuration of the suspensions 4 will be described with reference to Fig. 2. Fig. 2 shows a front view of a suspension 4. The description will concern only the configurational aspects of functioning as a camber angle adjusting mechanism, but those of functioning as a suspension will be omitted in the description because they are similar to the known configuration of a suspension. As the configuration of each of the suspensions 4 is common to every one of the wheels 2, the suspension 4 for the right front wheel 2FR is illustrated in Fig. 2 as a typical example. However, illustration of a drive shaft 31 and some other elements is dispensed with in Fig. 2 to facilitate understanding.

The suspension 4, as shown in Fig. 2, mainly comprises a knuckle 43 supported by the body frame BF via a strut 41 and a lower arm 42, an FR motor 44FR that generates driving force, a worm wheel 45 and an arm 46 that transmit the driving force of the FR motor 44FR, and a moving plate 47 that is driven, oscillatingly relative to the knuckle 43, by the driving force of the FR motor 44FR transmitted by the worm wheel 45 and the arm 46.

The knuckle 43, which is to steerably support the wheel 2, has its upper end (upper in Fig. 2) linked to the strut 41 and its lower end (lower in Fig. 2) linked to the lower arm 42 via a ball joint as shown in Fig. 2.

The FR motor 44FR, which is to give driving force for oscillatory driving to the moving plate 47, is configured of a DC motor, and a worm (not shown) is formed on its output shaft 44a.

The worm wheel 45, which is to transmit driving force of the FR motor 44FR to the arm 46, meshes with a worm formed on the output shaft 44a of the FR motor 44FR and, together with this worm, constitutes a gear pair with non-parallel and non-intersecting axes.

The arm 46, which is to transmit driving force of the FR motor 44FR transmitted from the worm wheel 45 to the moving plate 47; while one of its ends (on the right side in Fig. 2) is linked to a position eccentric from the rotation shaft 45a of the worm wheel 45 via a the first coupling shaft 48, the other end (on the left side in Fig. 2) is linked to the upper end (upper in Fig. 2) of the moving plate 47 via a second coupling shaft 49 as shown in Fig. 2.

The moving plate 47, which is to support the wheel 2 rotatably, has its upper end (upper in Fig. 2) linked to the arm 46 and its lower end (lower in Fig. 2) linked to the knuckle 43 via a camber shaft 50 as described above.

The suspension 4 configured as described above, when the FR motor 44FR is driven, causes the worm wheel 45 to rotate and the rotational motion of the worm wheel 45 to be converted into a linear motion of the arm 46. As a result, the linear motion of the arm 46 causes the moving plate 47 to be driven oscillably with the camber shaft 50 as the axis of oscillation and the camber angle of the wheel 2 to be adjusted.

Incidentally in this embodiment, the camber angle of the wheel 2 is so adjusted into either a first camber state in which the first coupling shaft 48, the rotation shaft 45a and the second coupling shaft 49 are arrayed on a straight line in the direction from the body frame BF toward the wheel 2 (the direction of arrow R) in the order of the coupling shafts 48 and 49 and the rotation shaft 45a of the worm wheel 45 or in a second camber state in which the rotation shaft 45, the first coupling shaft 48 and the second coupling shaft 49 are arrayed on a straight line in this order (the state shown in Fig. 2).

In this way, in a state in which the camber angles of the wheels 2 are adjusted, even if external forces work on the wheels 2, no force arises in the direction of turning the arms 46 to enable the camber angles of the wheels 2 to be maintained.

Further in this embodiment, in the first camber state, the camber angles of the wheels 2 are adjusted to a predetermined angle in the minus direction (-3° in this embodiment, hereinafter referred to as "the first camber angle"), and negative cambers are given to the wheels 2. On the other hand, in the second camber state (the state shown in Fig. 2), the camber angles of the wheels 2 are adjusted to 0° (hereinafter referred to as "the second camber angle").

To continue description referring back to Fig. 1, the steering unit 5 is a device for steering by transmitting the operation of a steering wheel 63 by the driver to the left and right front wheels 2FL and 2FR, and is configured as a rack-and-pinion type steering gear.

With this steering unit 5, any operation (turning) of the steering wheel 63 by the driver is first transmitted to a universal joint 52 via a steering column 51 and then transmitted to a pinion 53a of a steering box 53 as a rotational motion while being varied in angle by the universal joint 52. And the rotational motion transmitted to the pinion 53a is converted into a linear motion of a rack 53b, and the linear motion of the rack 53b causes tie rods 54 connected to the two ends of the rack 53b to shift. The resultant pushing and pulling of knuckles 55 by the tie rod 54 give predetermined steering angles to the wheels 2.

The accelerator pedal 61 and a brake pedal 62 are operational members operated by the driver; according to the operational condition (such as the extent of depression or the depressing speed) of each of the pedals 61 and 62, the running speed or the braking force of the vehicle 1 is determined and the wheel running gear 3 is placed under driving control. The steering wheel 63 is another operational member operated by the driver; according to its operational condition (such as the steering angle or the steering angle velocity), the left and right front wheels 2FL and 2FR are steered by the steering unit 5.

The vehicle control apparatus 100, which is an apparatus configured as described for controlling different parts of the vehicle 1, controls the actions of a camber angle adjuster 44 (see Fig. 3) according to the operational condition of, for instance, each of the pedals 61 and 62 or the steering wheel 63.

Next, a detailed configuration of the vehicle control apparatus 100 will be described with reference to Fig. 3. Fig. 3 is a block diagram showing the electrical configuration of the vehicle control apparatus 100. The vehicle control apparatus 100, as shown in Fig. 3, is equipped with a CPU 71, a ROM 72 and a RAM 73, which are connected to an input/output port 75 via a bus line 74. Also, devices including the wheel running gear 3 are connected to the input/output port 75.

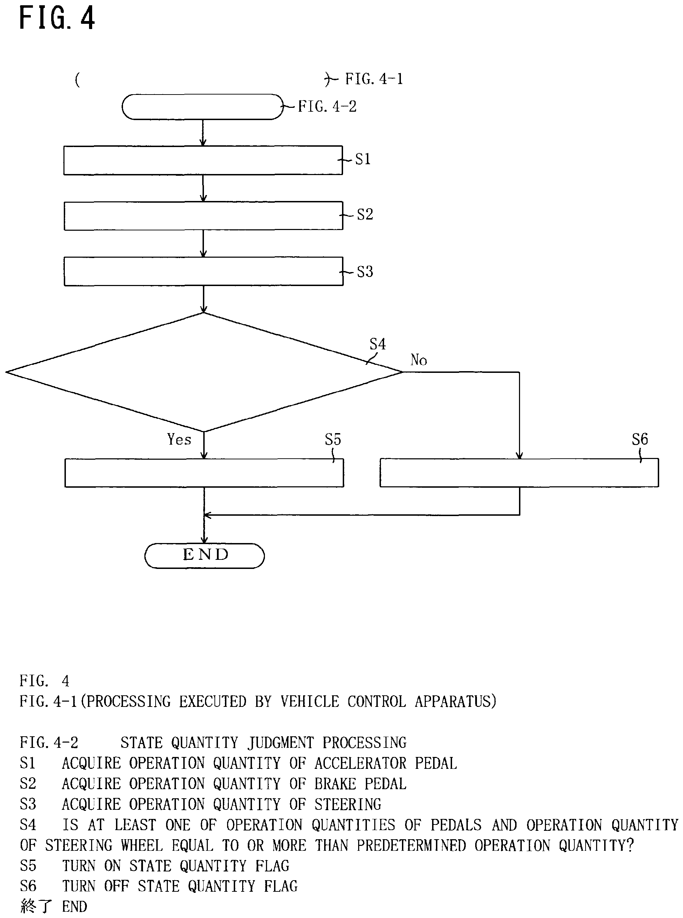

The CPU 71 is an arithmetic device that controls different parts connected by the bus line 74, and the ROM 72 is an nonvolatile unrewritable memory that stores control programs executed by the CPU 71 (e.g. the programs of flow charts shown in Fig. 4 through Fig. 7), fixed value data and so forth.

The RAM 73 is a memory that rewritably stores various kinds of data at the time of executing a control program and, as shown in Fig. 3, is provided with a camber flag 73a, a state quantity flag 73b, a running state flag 73c and a partial wear load flag 73d.

The camber flag 73a is a flag showing whether or not the camber angles of the wheels 2 are in a state of being adjusted to the first camber angle; the CPU 71 judges that the camber angles of the wheels 2 are in a state of being adjusted to the first camber angle when this camber flag 73a is on.

The state quantity flag 73b is a flag showing whether or not the state quantity of the vehicle 1 satisfies predetermined conditions, and is switched on or off at the time of execution of state quantity judgment processing (see Fig. 4) to be described afterwards. To add, the state quantity flag 73b in this embodiment is switched on when at least one of the predetermined operation quantities of the accelerator pedal 61, the brake pedal 62 and the steering wheel 63 is equal to or more than its predetermined level, and the CPU 71 judges that the state quantity of the vehicle 1 satisfies the predetermined conditions when this state quantity flag 73b is on.

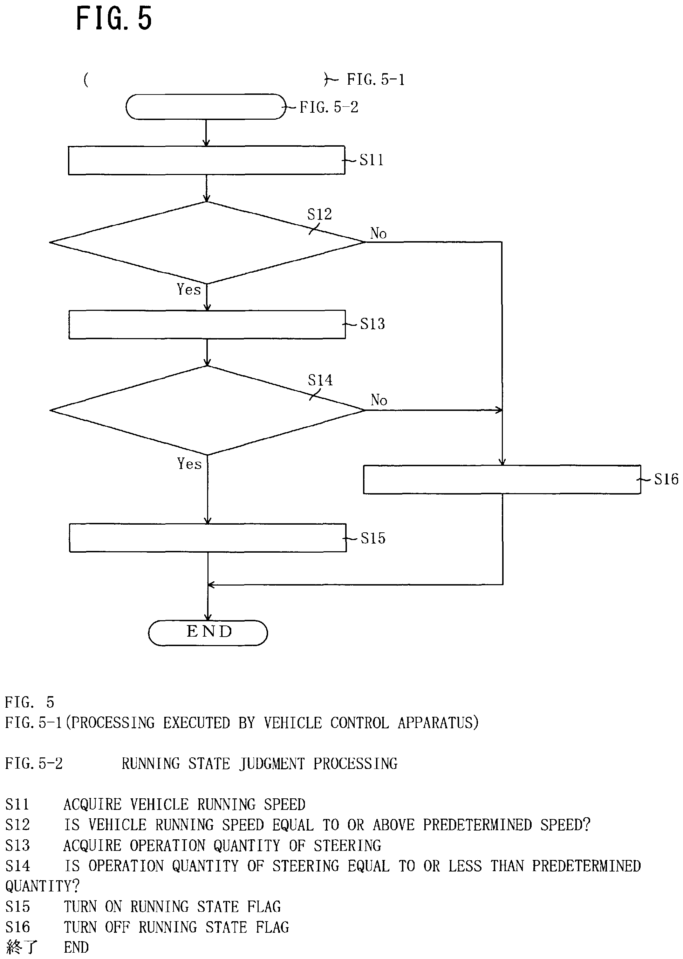

The running state flag 73c is a flag showing whether or not the running state of the vehicle 1 is the predetermined straight running state (whether or not it is stable), and is switched on or off at the time of execution of running state judgment (see Fig. 5) to be described afterwards. To add, the running state flag 73c in this embodiment is switched on when the running speed of the vehicle 1 is equal to or more than the predetermined running speed and the operation quantity of the steering wheel 63 is equal to or less than the predetermined operation quantity, and the CPU 71 judges that the running state of the vehicle 1 is the predetermined running state when this running state flag 73c is on.

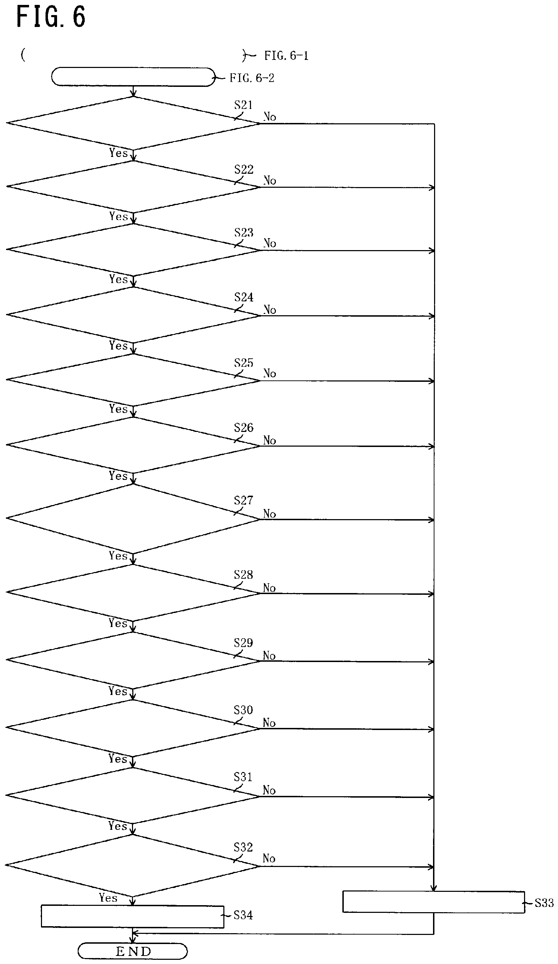

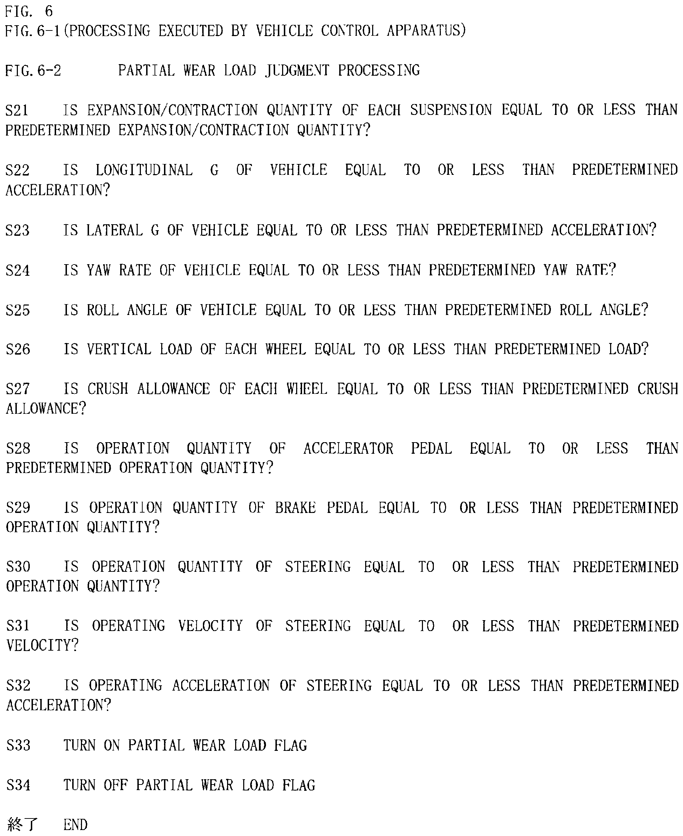

The partial wear load flag 73d is a flag showing whether or not the vertical load of a wheel 2 may give rise to partial wear on the tire (tread) (hereinafter referred to as "partial wear load") when the vehicle 1 runs in a condition in which the camber angle of the wheel 2 is the first camber angle, namely in a condition in which a negative camber is given to the wheel 2, and is switched on or off at the time of execution of partial wear load judgment (see Fig. 6). When this partial wear load flag 73d is on, the CPU 71 judges that the vertical load of the wheel 2 is a partial wear load that may give rise to partial wear of the tire.

The wheel running gear 3, as described above, is a device for rotationally driving the left and right front wheels 2FL and 2FR (see Fig. 1), and is mainly equipped with the electric motor 3a that gives rotational driving force to those left and right front wheels 2FL and 2FR and a drive control circuit (not shown) that controls the driving of that electric motor 3a under instruction from the CPU 71. However, the wheel running gear 3 is not limited to the electric motor 3a, and some other drive power source can obviously be used. Conceivable alternatives for the drive power source include, for instance, a hydraulic motor and an engine.

The camber angle adjuster 44 is a device for adjusting the camber angles of the wheels 2 and, as stated above, mainly comprises a total of four FL to RR motors 44FL to 44RR giving a driving force for oscillation to the moving plate 47 of each the suspension 4 (see Fig. 2) and a drive control circuit (not shown) that controls the driving of the motors 44FL to 44RR in accordance with instructions from the CPU 71.

An acceleration sensor device 80 is a device for detecting the acceleration of the vehicle 1 as well as outputting the result of detection to the CPU 71, and mainly comprises a longitudinal acceleration sensor 80a, a side acceleration sensor 80b and an output circuit (not shown) that processes the results of detection by the acceleration sensors 80a and 80b for outputting to the CPU 71.

The longitudinal acceleration sensor 80a is a sensor that detects the acceleration of the vehicle 1 (the body frame BF) in the longitudinal direction (the arrow F-B direction in Fig. 1), the so-called longitudinal G, and the side acceleration sensor 80b is a sensor that detects the acceleration of the vehicle 1 (the body frame BF) in the lateral direction (the arrow L-R direction in Fig. 1), the so-called lateral G. Incidentally in this embodiment, these acceleration sensors 80a and 80b are configured as piezoelectric sensors using piezoelectric elements.

Also, the CPU 71 subjects the results of detection (longitudinal G and lateral G) by the acceleration sensors 80a and 80b inputted from the acceleration sensor device 80 to time integration to calculate speeds in two directions (longitudinal and lateral), and can acquire the running speed of the vehicle 1 by synthesizing the components in those two directions.

A yaw rate sensor device 81, which is a device for detecting the yaw rate of the vehicle 1 and outputting the result of detection to the CPU 71, mainly comprises a yaw rate sensor 81a that detects the turning angle velocity of the vehicle 1 (the body frame BF) around a vertical axis passing the center of gravity of the vehicle 1 (the arrow U-D direction in Fig. 1) and an output circuit (not shown) that processes and outputs to the CPU 71 the result of detection by that yaw rate sensor 81a.

A roll angle sensor device 82, which is a device for detecting the roll angle of the vehicle 1 and outputting the result of detection to the CPU 71, mainly comprises a roll angle sensor 82a that detects the turning angle of the vehicle 1 (the body frame BF) around a longitudinal axis passing the center of gravity of the vehicle 1 (the arrow F-B direction in Fig. 1) and an output circuit (not shown) that processes and outputs to the CPU 71 the result of detection by that roll angle sensor 82a.

Incidentally in this embodiment, the yaw rate sensor 81a and the roll angle sensor 82a are configured of optical gyrosensors that detect the turning angle velocity and the turning angle by the Sagnac effect. It is obviously possible, however, to use gyrosensors of some other type. Examples of other usable types of gyrosensor include mechanical or hydraulic gyrosensors.

A suspension stroke sensor device 83, which is a device for detecting the expansion/contraction quantity of each of the suspensions 4 and outputting the result of detection to the CPU 71, comprises a total of four FL to RR suspension stroke sensors 83FL to 83RR which detect the expansion/contraction quantities of the suspensions 4 and an output circuit (not shown) that processes and outputs to the CPU 71 the result of detection by those suspension stroke sensors 83FL to 83RR.

Incidentally in this embodiment, the suspension stroke sensors 83FL to 83RR are configured as strain gauges, and each of these suspension stroke sensors 83FL to 83RR is disposed on a shock absorber (not shown) of one or another of the suspensions 4.

The CPU 71 acquires the vertical load of each of the wheels 2 on the basis of the detection result (expansion/contraction quantity) of each of the suspension stroke sensors 83FL to 83RR inputted from the suspension stroke sensor device 83. Thus, as the vertical loads of the wheels 2 and the expansion/contraction quantities of the suspensions 4 are in a proportional relationship to each other, the vertical load F of the wheel 2 equals kX where X is the expansion/contraction quantity of the suspension 4 and k is the attenuation constant of the suspension 4.

A vertical load sensor device 84, which is a device for detecting the vertical load of each of the wheels 2 and outputting the result of detection to the CPU 71, comprises a total of four FL to RR vertical load sensors 84FL to 84RR that detect the vertical loads of the wheels 2 and an output circuit (not shown) that processes and outputs to the CPU 71 the results of detection by the vertical load sensors 84FL to 84RR.

Incidentally in this embodiment, each of the vertical load sensors 84FL to 84RR is configured as a piezoresistive type load sensor, and each of these vertical load sensors 84FL to 84RR is disposed on a shock absorber (not shown) of one or another of the suspensions 4.

A sidewall crush allowance sensor device 85, which is a device for detecting the crush allowance of the tire sidewall of each wheel 2 and outputting the result of detection to the CPU 71, comprises a total of four FL to RR sidewall crush allowance sensors 85FL to 85RR that detect the tire sidewall crush allowances of the wheels 2 and an output circuit (not shown) that processes and outputs to the CPU 71 the results of detection by those sidewall crush allowance sensors 85FL to 85RR.

Incidentally in this embodiment, the suspension stroke sensors 85FL to 85RR are configured as strain gauges, and each of these sidewall crush allowance sensors 85FL to 85RR is disposed in one or another of the wheels 2.

An accelerator pedal sensor device 61a, which is a device for detecting the operation quantity of the accelerator pedal 61 and outputting the result of detection to the CPU 71, mainly comprises an angle sensor (not shown) that detects the extent of depression of the accelerator pedal 61 and an output circuit (not shown) that processes and outputs to the CPU 71 the results of detection by that angle sensor.

A brake pedal sensor device 62a, which is a device for detecting the operation quantity of the brake pedal 62 and outputting the result of detection to the CPU 71, mainly comprises an angle sensor (not shown) that detects the extent of depression of the brake pedal 62 and an output circuit (not shown) that processes and outputs to the CPU 71 the results of detection by that angle sensor.

A steering sensor device 63a, which is a device for detecting the operation quantity of the steering wheel 63 and outputting the result of detection to the CPU 71, mainly comprises an angle sensor (not shown) that detects the steering angle of the steering wheel 63 and an output circuit (not shown) that processes and outputs to the CPU 71 the results of detection by that angle sensor.

Incidentally in this embodiment, each angle sensor is configured as a contact type potentiometer utilizing electrical resistance. Also, the CPU 71 can acquire the depressing speed of each of the pedals 61 and 62 and the steering angle velocity of the steering wheel 63 by subjecting to time differentiation the results of detection by the angle sensors (operation quantities) inputted from the sensor devices 61a, 62a and 63a. The CPU 71 can further acquire the steering angle acceleration of the steering wheel 63 by subjecting the acquired steering angle velocity of the steering wheel 63 to time differentiation.

As other examples of input/output devices 90 shown in Fig. 3, a navigation device that acquires the current position of the vehicle 1 by utilizing GPS and further acquires the acquired current position of the vehicle 1 in association with map data in which information on roads is stored can be cited.

Now, the state quantity judgment processing will be described with reference to Fig. 4. Fig. 4 is a flow chart showing the state quantity judgment processing. This processing, executed repeatedly (e.g. at 0.2 second intervals) by the CPU 71 as long as power is supplied to the vehicle control apparatus 100, is intended to judge whether or not the state quantities of the vehicle 1 satisfy predetermined conditions.

The CPU 71, regarding the state quantity judgment processing, first acquires the operation quantity (extent of depression) of the accelerator pedal 61, the operation quantity (extent of depression) of the brake pedal 62 and the operation quantity (steering angle) of the steering wheel 63 (S1, S2 and S3), and judges whether or not at least one of the operation quantities of the pedals 61 and 62 and the operation quantity of the steering wheel 63 is equal to or more than the predetermined operation quantity (S4). To add, by the processing at S4, the operation quantities of the pedals 61 and 62 and the operation quantity of the steering wheel 63 acquired by processing from S1 to S3 are compared with thresholds stored in advance in the ROM 72 correspondingly to the operation quantities of the pedals 61 and 62 and the operation quantity of the steering wheel 63 (in this embodiment, the respective limit values that may invite slipping of the wheels 2 when the vehicle 1 is accelerated, braked or turned in a condition in which the camber angles of the wheels 2 are judged to be in the second camber angle state), and it is judged whether or not the operation quantities of the pedals 61 and 62 and the operation quantity of the steering wheel 63 are equal to or more than the predetermined operation quantities.

If as a result at least one of the operation quantities of the pedals 61 and 62 and the operation quantity of the steering wheel 63 is judged to be equal to or more than the corresponding predetermined operation quantity (S4: Yes), the state quantity flag 73b is turned on (S5) and this state quantity judgment processing is completed. Thus, in this state quantity judgment processing, if at least one of the operation quantities of the pedals 61 and 62 and the operation quantity of the steering wheel 63 is judged to be equal to or more than the corresponding predetermined operation quantity, the state quantities of the vehicle 1 are judged to be satisfying the predetermined conditions.

On the other hand, if as a result of the processing at S4 every one of the operation quantities of the pedals 61 and 62 and the operation quantity of the steering wheel 63 is judged to be less than the corresponding predetermined operation quantity (S4: No), the state quantity flag 73b is turned off (S6), and this state quantity judgment processing is ended.

Next, running state judgment processing will be described with reference to Fig. 5. Fig. 5 is a flow chart showing the running state judgment processing. This processing, executed repeatedly (e.g. at 0.2 second intervals) by the CPU 71 as long as power is supplied to the vehicle control apparatus 100, is intended to judge whether or not the running state of the vehicle 1 is in the predetermined straight line state.

The CPU 71, regarding the running state judgment processing, first acquires the running speed of the vehicle 1 (S11), and judges whether or not the running speed of the vehicle 1 is equal to or more than the predetermined speed (S12). To add, by the processing at S12, the running speed of the vehicle 1 acquired by the processing at S11 and a threshold stored in advance in the ROM 72 are compared, and it is judged whether or not the current running speed of the vehicle 1 is equal to or more than the predetermined speed.

If as a result the running speed of the vehicle 1 is judged to be less than the predetermined speed (S12: No), the running state flag 73c is turned off (S16), and this running state judgment processing is ended.

On the other hand, if as a result of the processing at S12 the running speed of the vehicle 1 is judged to be equal to or more than the predetermined speed (S12: Yes), the operation quantity of the steering wheel 63 (steering angle) is acquired (S13), and it is judged whether or not the acquired operation quantity of the steering wheel 63 is equal to or more than the predetermined operation quantity (S14). To add, by the processing at S14, the operation quantity of the steering wheel 63 acquired by the processing at S13 and a threshold (in this embodiment a smaller value than the operation quantity of the steering wheel 63 for judging whether or not the state quantity of the vehicle 1 satisfies the predetermined condition in the state quantity judgment processing charted in Fig. 4) stored in advance in the ROM 72 are compared, and it is judged whether or not the current operation quantity of the steering wheel 63 is equal to or more than the predetermined operation quantity.

If as a result the operation quantity of the steering wheel 63 is judged to be equal to or less than the predetermined operation quantity (S14: Yes), the running state flag 73c is turned on (S15), and this running state judgment processing is ended. Thus in this running state judgment processing, if the running speed of the vehicle 1 is equal to or more than a predetermined level and the operation quantity of the steering wheel 63 is equal to or less than the predetermined operation quantity, the running state of the vehicle 1 is judged to be in a predetermined straight line state.

On the other hand, if as a result of the processing at S14 the operation quantity of the steering wheel 63 is judged to be greater than the predetermined operation quantity (S14: No), the running state flag 73c is turned off (S16), and this running state judgment processing is ended.

Now, partial wear load judgment processing will be described with reference to Fig. 6. Fig. 6 is a flow chart showing the partial wear load judgment processing. This processing, executed repeatedly (e.g. at 0.2 second intervals) by the CPU 71 as long as power is supplied to the vehicle control apparatus 100, is intended to judge whether or not, when the vehicle 1 runs in a state in which negative cambers are given to the wheels 2, the vertical loads of the wheels 2 are partial wear loads that may give rise to partial wear on the tires (treads).

The CPU 71, regarding the partial wear load judgment processing, first judges whether or not the expansion/contraction quantity of each of the suspensions 4 is equal to or less than a predetermined expansion/contraction quantity (S21). To add, by the processing at S21, the suspension stroke sensor device 83 not only detects the expansion/contraction quantity of each of the suspensions 4 but also compares the detected expansion/contraction quantity of each of the suspensions 4 with a threshold stored in advance in the ROM 72 to judge whether or not the current expansion/contraction quantity of each of the suspensions 4 is equal to or less than the predetermined expansion/contraction quantity.

If as a result the expansion/contraction quantity of at least one of the suspensions 4 is judged to be greater than the predetermined expansion/contraction quantity (S21: No), it is judged that the vertical load of the wheel 2 matching the suspension 4 whose expansion/contraction quantity is greater than the predetermined vertical load and the vertical load of this wheel 2 is a partial wear load, and therefore the partial wear load flag 73d is turned off (S33) to end this partial wear load judgment processing.

On the other hand, if as a result of the processing at S21, the expansion/contraction quantity of any of the suspensions 4 is judged to be equal to or less than the predetermined expansion/ contraction quantity (S21: Yes), it is judged whether or not the longitudinal G of the vehicle 1 is greater than a predetermined acceleration (S22). To add, by the processing at S22, the longitudinal G of the vehicle 1 detected by the acceleration sensor device 80 (the longitudinal acceleration sensor 80a) and a threshold stored in advance in the ROM 72 are compared to judge whether or not the current longitudinal G of the vehicle 1 is equal to or less than the predetermined acceleration.

If as a result the longitudinal G of the vehicle 1 is judged to be greater than the predetermined acceleration (S22: No), it is presumed that the vertical loads of either the left and right front wheels 2FL and 2FR or the left and right rear wheels 2RL and 2RR are greater than the predetermined vertical load and, as it is judged that the vertical loads of these wheels 2 are partial wear loads, the partial wear load flag 73d is turned on (S33) to end this partial wear load judgment processing.

On the other hand, if as a result of the processing at S22 it is judged that the longitudinal G of the vehicle 1 is equal to or less than the predetermined acceleration (S22: Yes), it is judged whether or not the lateral G of the vehicle 1 is equal to or less than the predetermined acceleration (S23). To add, by the processing at S23, the lateral G of the vehicle 1 detected by the acceleration sensor device 80 (the side acceleration sensor 80) and a threshold stored in advance in the ROM 72 are compared to judge whether or not the current lateral G of the vehicle 1 is equal to or less than the predetermined acceleration.

If as a result the lateral G of the vehicle 1 is judged to be greater than the predetermined acceleration (S23: No), either the vertical loads of the left front and rear wheels 2FL and 2RL or the right front and rear wheels 2FR and 2RR are presumed to be greater than the predetermined vertical load and, as it is judged that the vertical loads of these wheels 2 are partial wear loads, the partial wear load flag 73d is turned on (S33) to end this partial wear load judgment processing.

On the other hand, if as a result of the processing at S23, the lateral G of the vehicle 1 is judged to be equal to or less than the predetermined acceleration (S23: Yes), it is judged whether or not the yaw rate of the vehicle 1 is equal to or below a predetermined yaw rate (S24). To add, by the processing at S24, the yaw rate of the vehicle 1 detected by the yaw rate sensor device 81 is compared with a threshold stored in advance in the ROM 72 to judge whether or not the current yaw rate of the vehicle 1 is equal to or below a predetermined yaw rate.

If as a result the yaw rate of the vehicle 1 is judged to be above the predetermined yaw rate (S24: No), either the vertical loads of the left front and rear wheels 2FL and 2RL or the right front and rear wheels 2FR and 2RR are presumed to be above the predetermined vertical load and, as it is judged that the vertical loads of these wheels 2 are partial wear loads, the partial wear load flag 73d is turned on (S33) to end this partial wear load judgment processing.

On the other hand, if as a result of the processing at S24, the yaw rate of the vehicle 1 is judged to be equal to or below the predetermined yaw rate (S24: Yes), it is judged whether or not the roll angle of the vehicle 1 is equal to or less than a predetermined roll angle (S25). To add, by the processing at S25, the roll angle of the vehicle 1 detected by the roll angle sensor device 82 and a threshold stored in advance in the ROM 72 are compared to judge whether or not the current roll angle of the vehicle 1 is equal to or less than the predetermined roll angle.

If as a result the roll angle of the vehicle 1 is judged to be greater than the predetermined roll angle (S25: No), the vertical loads of either the left and right front wheels 2FL and 2FR or the left and right rear wheels 2RL and 2RR are presumed to be above the predetermined vertical load and, as it is judged that the vertical loads of these wheels 2 are partial wear loads, the partial wear load flag 73d is turned on (S33) to end this partial wear load judgment processing.

On the other hand, if as a result of the processing at S25 the roll angle of the vehicle 1 is judged to be equal to or less than the predetermined roll angle (S25: Yes), it is judged whether or not the vertical load of each of the wheels 2 is equal to or less than the predetermined vertical load (S26). To add, by the processing at S26, the vertical load of each of the wheels 2 detected by the vertical load sensor device 84 and a threshold stored in advance in the ROM 72 are compared to judge whether or not the current vertical load of each of the wheels 2 is equal to or less than the predetermined vertical load.

If as a result the vertical load of at least one of the wheels 2 is judged to be greater than the predetermined vertical load (S26: No), the vertical load of this wheel 2 is judged to be a partial wear load, and accordingly the partial wear load flag 73d is turned on (S33) to end this partial wear load judgment processing.

On the other hand, if as a result of the processing at S26 the vertical load of each of the wheels 2 is judged to be not greater than a predetermined load (S26: Yes), it is judged whether or not the crush allowance of the tire sidewall of each wheel 2 is equal to or less than a predetermined crush allowance (S27). To add, by the processing at S27, the crush allowance of the tire sidewall of each wheel 2 detected by the sidewall crush allowance sensor device 85 and a threshold stored in advance in the ROM 72 are compared to judge whether or not the current crush allowance of the tire sidewall of each wheel 2 is equal to or less than the predetermined crush allowance.

If as a result the crush allowance of the tire sidewall of at least one of the wheels 2 is judged to be greater than the predetermined crush allowance (S27: No), the vertical load of that wheel 2 having a greater crush allowance is presumed to be greater than the predetermined vertical load and the vertical load of this wheel 2 is judged to be a partial wear load; accordingly the partial wear load flag 73d is turned on (S33) to end this partial wear load judgment processing.

On the other hand, if as a result of the processing at S27 the crush allowance of the tire sidewall of each wheel 2 is judged to be equal to or less than the predetermined crush allowance (S27: Yes), it is judged whether or not the operation quantity (extent of depression) of the accelerator pedal 61 is equal to or less than the predetermined operation quantity (S28). To add, by the processing at S28, the operation quantity of the accelerator pedal 61 detected by the accelerator pedal sensor device 61a and a threshold stored in advance in the ROM 72 (in this embodiment a smaller value than the operation quantity of the accelerator pedal 61 for judging whether or not the state quantity of the vehicle 1 satisfies the predetermined condition in the state quantity judgment processing charted in Fig. 4) are compared to judge whether or not the current operation quantity of the accelerator pedal 61 is equal to or less than the predetermined operation quantity.

If as a result the operation quantity of the accelerator pedal 61 is judged to be greater than the predetermined operation quantity (S28: No), the vertical loads of the left and right rear wheels 2RL and 2RR are presumed to be greater than the predetermined vertical load and the vertical loads of these wheels 2 are judged to be partial wear loads, and accordingly the partial wear load flag 73d is turned on (S33) to end this partial wear load judgment processing.

On the other hand, if as a result of the processing at S28 the operation quantity of the accelerator pedal 61 is judged to be equal to or less than the predetermined operation quantity (S28: Yes), it is judged whether or not the operation quantity (extent of depression) of the brake pedal 62 is equal to or less than the predetermined operation quantity (S29). To add, by the processing at S29, the operation quantity of the brake pedal 62 detected by the brake pedal sensor device 62a and a threshold stored in advance in the ROM 72 (in this embodiment a smaller value than the operation quantity of the brake pedal 62 for judging whether or not the state quantity of the vehicle 1 satisfies the predetermined condition in the state quantity judgment processing charted in Fig. 4) are compared to judge whether or not the current operation quantity of the brake pedal 62 is equal to or less than the predetermined operation quantity.

If as a result the operation quantity of the brake pedal 62 is judged to be greater than the predetermined operation quantity (S29: No), the vertical loads of the left and right front wheels 2FL and 2FR are presumed to be greater than the predetermined vertical load and the vertical loads of these wheels 2 are judged to be partial wear loads; accordingly the partial wear load flag 73d is turned on (S33) to end this partial wear load judgment processing.

On the other hand, if as a result of the processing at S29 the operation quantity of the brake pedal 62 is judged to be equal to or less than the predetermined operation quantity (S29: Yes), it is judged whether or not the operation quantity (steering angle) of the steering wheel 63 is equal to or less than the predetermined operation quantity (S30). To add, by the processing at S30, the operation quantity of the steering wheel 63 detected by the steering sensor device 63a and a threshold stored in advance in the ROM 72 (in this embodiment a smaller value than the operation quantity of the steering wheel 63 for judging whether or not the state quantity of the vehicle 1 satisfies the predetermined condition in the state quantity judgment processing charted in Fig. 4 and a greater value than the operation quantity of the steering wheel 63 for judging whether or not the running state of the vehicle 1 is in the predetermined straight line state in the running state judgment processing shown in Fig. 5) are compared to judge whether or not the current operation quantity of the steering wheel 63 is equal to or less than the predetermined operation quantity.

If as a result the operation quantity of the steering wheel 63 is judged to be greater than the predetermined operation quantity (S30: No), the vertical loads of either the left and rear wheels 2FL and 2RL or the right front rear wheels 2FR and 2RR are presumed to be greater than the predetermined vertical load and the vertical loads of these wheels 2 are judged to be partial wear loads; accordingly the partial wear load flag 73d is turned on (S33) to end this partial wear load judgment processing.

On the other hand, if as a result of the processing at S30 the operation quantity of the steering wheel 63 is judged to be equal to or less than the predetermined operation quantity (S30: Yes), it is judged whether or not the operating velocity of the steering wheel 63 (steering angle velocity) is equal to or less than the predetermined velocity (S31). To add, by the processing at S31, the operating velocity of the steering wheel 63 acquired by subjecting the operation quantity of the steering wheel 63 to time differentiation and a threshold stored in advance in the ROM 72 are compared to judge whether or not the current operating velocity of the steering wheel 63 is equal to or less than the predetermined velocity.

If as a result the operating velocity of the steering wheel 63 is judged to be more than the predetermined velocity (S31: No), as the vertical loads of either the left and rear wheels 2FL and 2RL or the right front rear wheels 2FR and 2RR are presumed to be greater than the predetermined vertical load and the vertical loads of these wheels 2 are judged to be partial wear loads, the partial wear load flag 73d is turned on (S33) to end this partial wear load judgment processing.

On the other hand, if as a result of the processing at S31 the operating velocity of the steering wheel 63 is judged to be equal to or less than the predetermined velocity (S31: Yes), it is judged whether or not the operation acceleration of the steering wheel 63 (steering angle acceleration) is equal to or less than the predetermined acceleration (S32). To add, by the processing at S32, the operation acceleration of the steering wheel 63 acquired by subjecting the operating velocity of the steering wheel 63 to time differentiation and a threshold stored in advance in the ROM 72 are compared to judge whether or not the current operation acceleration of the steering wheel 63 is equal to or less than the predetermined acceleration.

If as a result the operation acceleration of the steering wheel 63 is judged to be more than the predetermined acceleration (S32: No), as the vertical loads of either the left and rear wheels 2FL and 2RL or the right front rear wheels 2FR and 2RR are presumed to be greater than the predetermined vertical load and the vertical loads of these wheels 2 are judged to be partial wear loads, the partial wear load flag 73d is turned on (S33) to end this partial wear load judgment processing.

On the other hand, if as a result of the processing at S32 the operation acceleration of the steering wheel 63 is judged to be equal to or less than the predetermined acceleration (S32: Yes), the partial wear load flag 73d is turned off (S34) to end this partial wear load judgment processing.

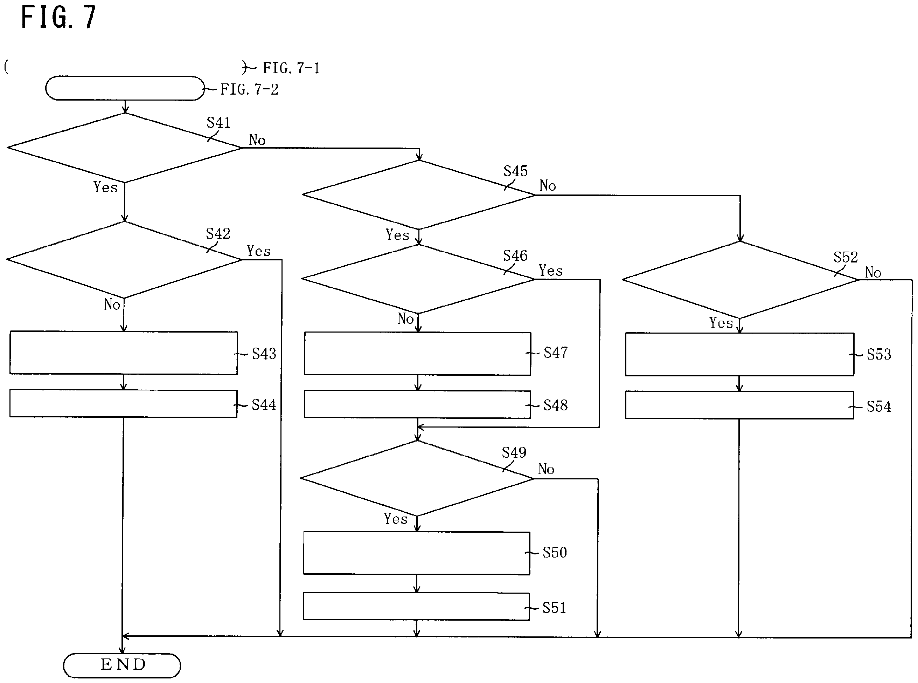

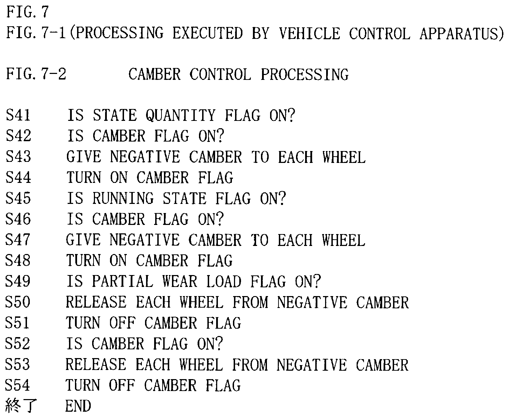

Next, camber control processing will be described with reference to Fig. 7. Fig. 7 is a flow chart showing the camber control processing. This processing, executed repeatedly (e.g. at 0.2 second intervals) by the CPU 71 as long as power is supplied to the vehicle control apparatus 100, is intended to adjust the camber angles of the wheels 2 (left and right front wheels 2FL and 2FR and left and right rear wheels 2RL and 2RR).

The CPU 71, regarding the camber control processing, first judges whether or not the state quantity flag 73b is on (S41) and, if the state quantity flag 73b is judged to be on (S41: Yes), judges whether or not the camber flag 73a is on (S42). If as a result the camber flag 73a is judged to be off (S42: No), the FL to RR motors 44FL to 44RR are actuated to adjust the camber angles of the wheels 2 (left and right front wheels 2FL and 2FR and left and right rear wheels 2RL and 2RR) to the first camber angle and to give negative cambers to the wheels 2 (S43), and at the same time the camber flag 73a is turned on (S44) to end this camber control processing.

If the state quantity of the vehicle 1 is thereby enabled to satisfy the predetermined condition, namely if at least one of the operation quantities of the pedals 61 and 62 and the operation quantity of the steering wheel 63 is equal to the applicable predetermined operation quantity and if it is judged that accelerating, braking or turning the vehicle 1 in the second camber angle state of camber angles may invite slipping of the wheels 2, the running stability the vehicle 1 can be ensured by giving negative cambers to the wheels 2 and utilizing camber thrusts thereby generated on the wheels 2.

Or, if as a result of the processing at S42 the camber flag 73a is judged to be on (S42: Yes), as the camber angles of the wheels 2 are already adjusted to the first camber angle, the processing at S43 and S44 is skipped and this camber control processing is ended.

On the other hand, if as a result of the processing at S41 the state quantity flag 73b is judged to be off (S41: No), it is judged whether or not the running state flag 73c is on (S45) and, if the running state flag 73c is judged to be on (S45: Yes), it is judged whether or not the camber flag 73a is on (S46). If as a result the camber flag 73a is judged to be off (S46: No), the FL to RR motors 44FL to 44RR are actuated to adjust the camber angles of the wheels 2 (left and right front wheels 2FL and 2FR and left and right rear wheels 2RL and 2RR) to the first camber angle and to give negative cambers to the wheels 2 (S47), and at the same time the camber flag 73a is turned on (S48) to execute processing at S49.

This enables, when the running state of the vehicle 1 is in a predetermined straight line state, namely when the running speed of the vehicle 1 is equal to or above a predetermined speed, the operation quantity of the steering wheel 63 is equal to or greater than the predetermined operation quantity, and the vehicle 1 is running straight at a relatively high speed, the straight line stability of the vehicle 1 to be secured by ensuring lateral rigidity of the wheels 2 by giving negative cambers to the wheels 2.

On the other hand, if as a result of the processing at S46 the camber flag 73a is judged to be on (S46: Yes), as the camber angles of the wheels 2 are already adjusted to the first camber angle, the processing at S47 and S48 is skipped and it is judged whether or not the partial wear load flag 73d is on (S49). If as a result the partial wear load flag 73d is judged to be on (S49: Yes), the FL to RR motors 44FL to 44RR are actuated to adjust the camber angles of the wheels 2 (left and right front wheels 2FL and 2FR and left and right rear wheels 2RL and 2RR) to the second camber angle, the wheels 2 are released from negative cambers (S50), at the same time the camber flag 73a is turned off (S51), and this camber control processing is ended.

This enables, when the tires (treads) may incur partial wear if the vehicle 1 runs with partial wear loads as the vertical loads of the wheels 2, namely in a state in which negative cambers are given to the wheels 2, the partial wear on the tires to be restrained by releasing the wheels 2 from the negative cambers.

Or, if as a result of the processing at S49 the partial wear load flag 73d is judged to be off (S49: No), as it is judged that the vertical loads of the wheels 2 are not partial wear loads and there is no fear that the tires (treads) incur partial wear if the vehicle 1 runs in a state in which negative cambers are given to the wheels 2, the processing at S50 and S51 is skipped and this camber control processing is ended.

On the other hand, if as a result of the processing at S45 the running state flag 73c is judged to be off (S45: No), it is judged whether or not the camber flag 73a is on (S52). If as a result the camber flag 73a is judged to be on (S52: Yes), the FL to RR motors 44FL to 44RR are actuated to adjust the camber angles of the wheels 2 (left and right front wheels 2FL and 2FR and left and right rear wheels 2RL and 2RR) to the second camber angle, the wheels 2 are released from negative cambers (S53), at the same time the camber flag 73a is turned off (S54), and this camber control processing is ended.

This enables, when the state quantity of the vehicle 1 does not satisfy the applicable predetermined condition and the running state of the vehicle 1 is not in the predetermined straight line state, namely when there is no need to give priority to securing the running stability of the vehicle 1, the influence of camber thrusts to be avoided by releasing the wheels 2 from the negative cambers and fuel consumption to be saved.

Or, if as a result of the processing at S52 the camber flag 73a is judged to be off (S52: No), as the camber angles of the wheels 2 are already adjusted to the second camber angle, the processing at S53 and S54 is skipped and this camber control processing is ended.

As hitherto described, in the first embodiment, when it is judged that the vertical loads of the wheels 2 are equal to or more than the predetermined vertical load, as the camber angles of the wheels 2 are adjusted to the second camber angle (a camber angle smaller in absolute value than the first camber angle) and the wheels 2 are released from negative cambers, partial wear of the tires can be restrained. Thus, the tendency is that the greater the vertical loads of the wheels 2, the greater the disadvantage to the wear of the tires. Therefore, when the vertical loads of the wheels 2 are equal to or more than the predetermined vertical load, partial wear of the tires can be restrained by releasing the wheels 2 from the negative cambers. As a result, the service lives of tires can be extended. Also, by restraining partial wear of tires, the ground contact faces of the tires can be prevented from becoming uneven to ensure the running stability of the vehicle 1. Furthermore, as partial wear of tires can be restrained, the consumption of fuel can be correspondingly saved.

Also, in the first embodiment, when it is judged that the state quantity of the vehicle 1 satisfies the applicable predetermined condition, as the camber angles of the wheels 2 are adjusted to the first camber angle and negative cambers are given to the wheels 2, the running stability of the vehicle 1 can be ensured by utilizing camber thrusts thereby generated on the wheels 2. Or if the state quantity of the vehicle 1 is judged to be not satisfying the predetermined condition and the vertical loads of the wheels 2 are judged to be equal to or more than the predetermined vertical load, as the camber angles of the wheels 2 are adjusted to the second camber angle (a camber angle smaller in absolute value than the first camber angle) and the wheels 2 are released from negative cambers, partial wear of the tires can be restrained. Therefore, ensuring the running stability and restraining the partial wear of tires can be compatibly achieved.

Further, in the first embodiment, when the running state of the vehicle 1 is judged to be the predetermined straight line state, as the camber angles of the wheels 2 are adjusted to the first camber angle and negative cambers are given to the wheels 2, the straight line stability of the vehicle 1 can be ensured by utilizing the lateral rigidity of the wheels 2. Or if the running state of the vehicle 1 is judged to be the predetermined straight line state and the vertical loads of the wheels 2 are judged to be equal to or more than the predetermined vertical load, as the camber angles of the wheels 2 are adjusted to the second camber angle (a camber angle smaller in absolute value than the first camber angle) and the wheels 2 are released from negative cambers, partial wear of the tires can be restrained. Therefore, ensuring the straight line stability and restraining the partial wear of tires can be compatibly achieved.

To add, in the flow chart shown in Fig. 4 (state quantity judgment processing), the processing at S1 to S3 corresponds to state quantity acquiring means according to Claim 2; in the flow chart shown in Fig. 5 (running state judgment processing), the processing at S11 and S13 corresponds to running state acquiring means according to Claim 3; in the flow chart shown in Fig. 6 (the partial wear load judgment processing), the processing at S21 to 32 corresponds to vertical load information acquiring means according to Claim 1, and the processing by the suspension stroke sensor device 83 to detect the expansion/contraction quantity of each of the suspensions 4 in the processing at S21 corresponds to expansion/contraction quantity acquiring means according to Claim 7; in the flow chart shown in Fig. 7 (the camber control processing), the processing at S49 corresponds to vertical load judging means according to Claim 1, the processing at S50 corresponds to first camber angle adjusting means, the processing at S41 corresponds to state quantity judging means according to Claim 2, the processing at S43 corresponds to second camber angle adjusting means, the processing at S45 corresponds to judging means according to Claim 3, and the processing at S47 corresponds to third camber angle adjusting means.

Further in the flow chart shown in Fig. 7, the processing at S45 corresponds to stable running state judging means according to Claim 8 and the processing at S47 corresponds to camber giving means. To add, the stable running state judging means corresponds to the running state judging means, and the camber giving means corresponds to part of the third camber angle adjusting means.

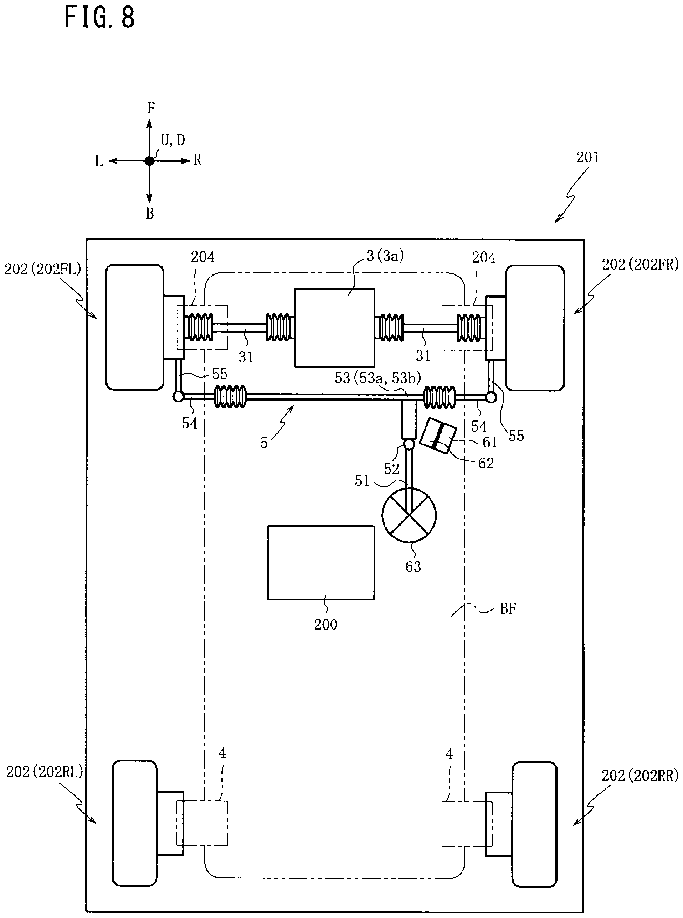

Next, a second embodiment will be described with reference to Fig. 8 through Fig. 11. While in the first embodiment described above, the camber angles of all the wheels 2 including the left and right front wheels 2FL and 2FR and left and right rear wheels 2RL and 2RR of the vehicle 1 to be controlled by the vehicle control apparatus 100 are adjustable by the camber angle adjuster 44, a vehicle 201 in the second embodiment has a configuration in which the camber angles of only the left and right rear wheels 202RL and 202RR are adjustable by a camber angle adjuster 244 but the camber angles of the left and right front wheels 202FL and 202FR are not adjusted.

Also, while in the first embodiment all the wheels 2 including the left and right front wheels 2FL and 2FR and left and right rear wheels 2RL and 2RR are of the same configuration, in the vehicle 201 in the second embodiment the left and right front wheels 202FL and 202FR are differently configured from the left and right rear wheels 202RL and 202RR. Incidentally, the same constituent parts in the first embodiment will be denoted by respectively the same reference signs, and their description will be dispensed with.

Fig. 8 is a diagram schematically showing the vehicle 201 to be mounted with the vehicle control apparatus 200 in the second embodiment of the invention. Incidentally, arrows U-D, L-R and F-B in Fig. 8 respectively represent the vertical direction, side direction and longitudinal direction of the vehicle 201.

First, the configuration of the vehicle 201 will be outlined. As shown in Fig. 8, the vehicle 201 has a plurality of (four in this embodiment) wheels 202, and these wheels 202 comprise left and right front wheels 202FL and 202FR positioned toward the front of the vehicle 201 (in the direction of arrow F) and left and right rear wheels 202RL and 202RR positioned toward the rear of the vehicle 201 (in the direction of arrow B) of the vehicle 201. In this embodiment, while the left and right front wheels 202FL and 202FR are configured as driving wheels rotationally driven by the wheel running gear 3, the left and right rear wheels 202RL and 202RR are driven wheels rotated by the running of the vehicle 201.

The wheels 202 are so configured that the left and right front wheels 202FL and 202FR are the same in shape and characteristics and that the left and right rear wheels 202RL and 202RR are also the same in shape and characteristics. The tread widths (the dimension in the side direction in Fig. 8) of the left and right front wheels 202FL and 202FR are configured to be broader than the tread widths of the left and right rear wheels 202RL and 202RR. Incidentally the treads of left and right front wheels 202FL and 202FR and the treads of the left and right rear wheels 202RL and 202RR are configured to have the same characteristics.

Further, out of the wheels 202, while the left and right front wheels 202FL and 202FR are suspended by suspensions 204 from the body frame BF, the left and right rear wheels 202RL and 202RR are suspended by the suspensions 4 from the body frame BF. To add, as the suspensions 204 are configured in the same way as the suspensions 4 except that the function to adjust the camber angles of the left and right front wheels 202FL and 202FR is absent (namely in the suspensions 4 shown in Fig. 2 the expanding/contracting function of the FR motor 44FR is absent), their description is dispensed with.

As the tread widths of the left and right rear wheels 202RL and 202RR in the vehicle 201 in the second embodiment are set narrower than the tread widths of the left and right front wheels 202FL and 202FR, the coefficient of friction of the front wheels 202 FL and 202FR with the road surface can be made greater than the coefficient of friction of the rear wheels 202 RL and 202RR with the road surface. As a result, the braking force can be enhanced. Furthermore, this embodiment in which the left and right front wheels 202FL and 202FR are driving wheels can contribute to improving the acceleration performance.

At the same time, as the rolling resistances of the left and right rear wheels 202RL and 202RR can be made smaller than the rolling resistances of the left and right front wheels 202FL and 202FR, fuel consumption can be correspondingly saved. Also, as camber angles can be given to the left and right rear wheels 202RL and 202RR, when the vehicle 201 turns, not only the ground camber angles of the left and right rear wheels 202RL and 202RR can be corrected but also the turning characteristic of the vehicle 201 can be caused to have an under-steering trend, thereby to ensure the turning stability of the vehicle 201. Furthermore, when the vehicle 201 is running straight, the straight line stability of the vehicle 201 can be secured by utilizing the lateral rigidity of the left and right rear wheels 202RL and 202RR.

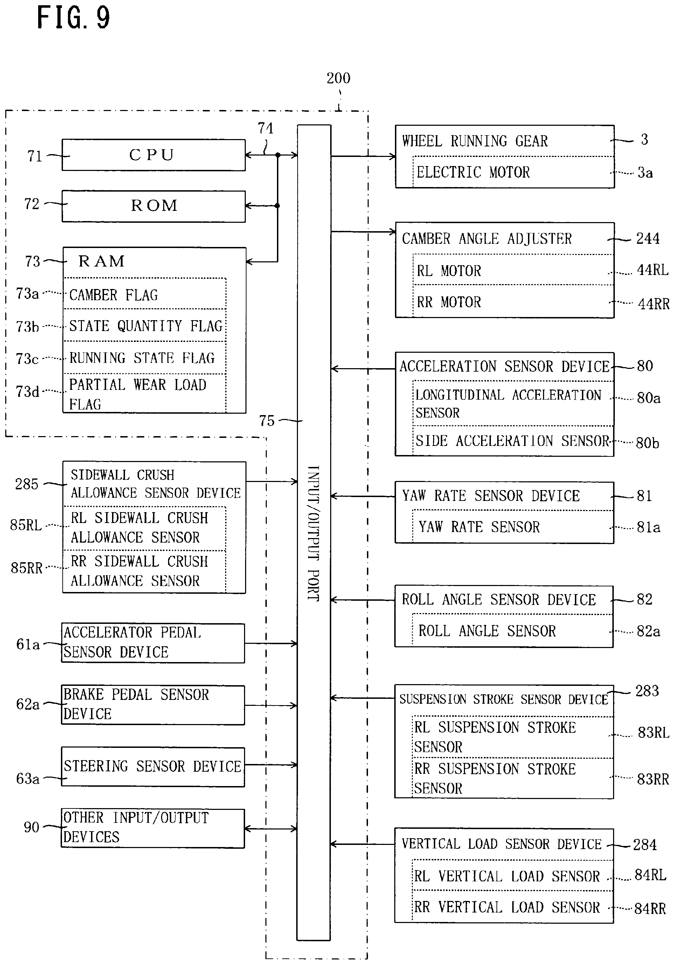

The vehicle control apparatus 200, which is an apparatus configured as described above for controlling different parts of the vehicle 201, controls the actions of a camber angle adjuster 244 (see Fig. 9) according to the operational condition of, for instance, each of the pedals 61 and 62 or the steering wheel 63.

Next, a detailed configuration of the vehicle control apparatus 200 will be described with reference to Fig. 9. Fig. 9 is a block diagram showing the electrical configuration of the vehicle control apparatus 200. The vehicle control apparatus 200 is mainly equipped with the camber angle adjuster 244 in place of the camber angle adjuster 44 in the vehicle control apparatus 100 in the first embodiment.

The camber angle adjuster 244 is a device for adjusting the camber angles of the left and right rear wheels 202RL and 202RR, and mainly comprises a total of two RL and RR motors 44RL and 44RR giving camber angles to the left and right rear wheels 202RL and 202RR and a drive control circuit (not shown) that controls the driving of the motors 44RL to 44RR in accordance with instructions from the CPU 71. Thus, the camber angle adjuster 244 in the second embodiment is configured by dispensing with part of the camber angle adjuster 44 in the first embodiment (the FL and FR motors 44FL and 44FR matching the left and right front wheels 202FL and 202FR).

A suspension stroke sensor device 283, which is a device for detecting the expansion/contraction quantity of each of the suspensions 4 and at the same time outputting the detection results to the CPU 71, is provided with RL and RR suspension stroke sensors 83RL and 83RR for respectively detecting the expansion/contraction quantities of the suspensions 4 and an output circuit (not shown) for processing and outputting to the CPU 71 the results of detection by the suspension stroke sensors 83RL and 83RR. Thus, the suspension stroke sensor device 283 in the second embodiment is configured by dispensing with part of the suspension stroke sensor device 83 in the first embodiment (the FL and FR suspension stroke sensors 83FL and 83FR matching the left and right front wheels 202FL and 202FR).

A vertical load sensor device 284, which is a device for detecting the vertical loads of the left and right rear wheels 202RL and 202RR and at the same time outputting the detection results to the CPU 71, is provided with RL and RR vertical load sensors 84RL and 84RR for respectively detecting the vertical loads of the left and right rear wheels 202RL and 202RR and an output circuit (not shown) for processing and outputting to the CPU 71 the results of detection by the vertical load sensors 84RL and 84RR. Thus, the vertical load sensor device 284 in the second embodiment is configured by dispensing with part of the vertical load sensor device 84 in the first embodiment (the FL and FR vertical load sensors 84FL and 84FR matching the left and right front wheels 202FL and 202FR).

A sidewall crush allowance sensor device 285, which is a device for detecting the current crush allowances of the tire sidewalls of the left and right rear wheels 202RL and 202RR and at the same time outputting the detection results to the CPU 71, is provided with RL and RR sidewall crush allowance sensors 85RL and 85RR for respectively detecting the current crush allowances of the tire sidewalls of the left and right rear wheels 202RL and 202RR and an output circuit (not shown) for processing and outputting to the CPU 71 the results of detection by those sidewall crush allowance sensors 85RL and 85RR. Thus, the sidewall crush allowance sensor device 285 in the second embodiment is configured by dispensing with part of the sidewall crush allowance sensor device 85 in the first embodiment (the FL and FR sidewall crush allowance sensors 85FL and 85FR matching the left and right front wheels 202FL and 202FR).

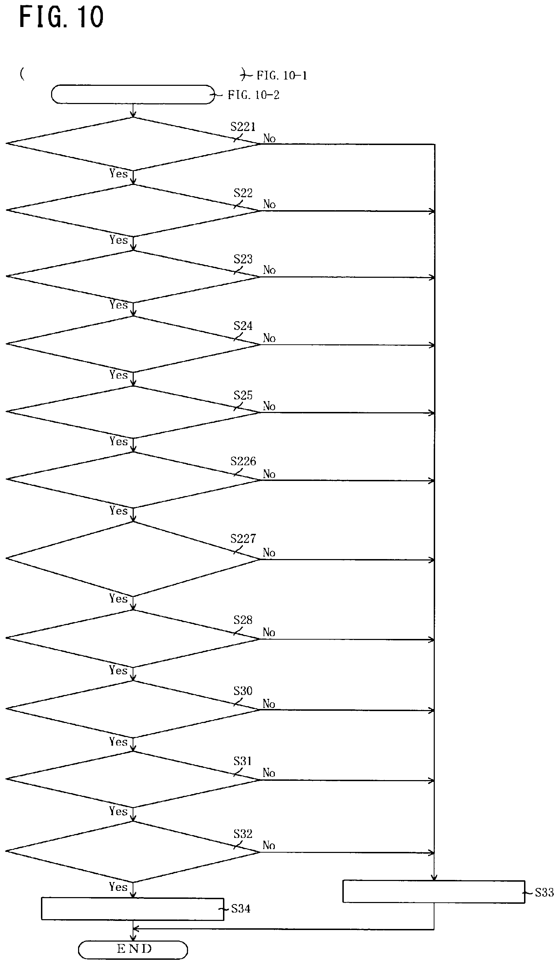

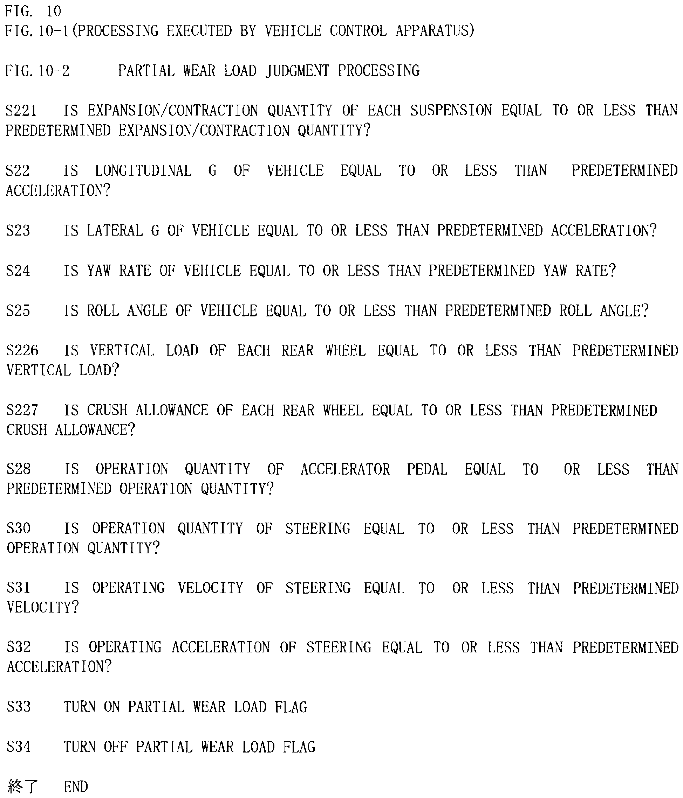

Next, a detailed configuration of the partial wear load judgment processing in the second embodiment will be described with reference to Fig. 10. Fig. 10 is a flow chart showing the partial wear load judgment processing in the second embodiment. This processing, executed repeatedly (e.g. at 0.2 second intervals) by the CPU 71 as long as power is supplied to the vehicle control apparatus 200, is intended to judge whether or not, when the vehicle 201 runs in a state in which negative cambers are given to the left and right rear wheels 202RL and 202RR, the vertical loads of the left and right rear wheels 202RL and 202RR are partial wear loads that may give rise to partial wear on the tires (treads). Incidentally, the same processing as the partial wear load judgment processing in the first embodiment will be denoted by the same reference signs in the description.

The CPU 71, regarding the partial wear load judgment processing in the second embodiment, first judges whether or not the expansion/contraction quantity of each of the suspensions 4 is equal to or less than the predetermined expansion/contraction quantity (S221). To add, by the processing at S221, the expansion/ contraction quantity of each of the suspensions 4 is detected by the suspension stroke sensor device 283 and the extracted expansion/contraction quantity of each of the suspensions 4 and a threshold stored in advance in the ROM 72 are compared to judge whether or not the current expansion/contraction quantity of each of the suspensions 4 is equal to or smaller than the expansion/ contraction quantity.

If as a result the expansion/contraction quantity of at least one of the suspensions 4 is judged to be greater than the predetermined expansion/contraction quantity (S221: No), as it is judged that the vertical load of the wheel 202(the left or right rear wheels 202RL or 202RR) corresponding to the suspension 4 having that greater expansion/contraction quantity is greater than the predetermined vertical load and the vertical load of this wheel 202 is a partial wear load, the partial wear load flag 73d is turned on (S33) to end this partial wear load judgment processing.

Or, if as a result of the processing at S221, the expansion/contraction quantity of at least one of the suspensions 4 is judged to be equal to or smaller than the predetermined expansion/ contraction quantity (S221: Yes), it is judged whether or not the longitudinal G of the vehicle 1 is equal to or less than the predetermined acceleration (S22). If as a result the longitudinal G of the vehicle 1 is judged to be more than the predetermined acceleration (S22: No), as it is presumed that the vertical load of the left or right rear wheels 202RL or 202RR may be greater than the predetermined vertical load and the vertical load of this wheel 202 is judged to be a partial wear load, the partial wear load flag 73d is turned on (S33) to end this partial wear load judgment processing.

Or, if as a result of the processing at S22, the longitudinal G of the vehicle 1 is judged to be equal to or less than the predetermined acceleration (S22: Yes), it is judged whether or not the lateral G of the vehicle 1 is equal to or less than the predetermined acceleration (S23). If as a result the lateral G of the vehicle 1 is judged to be more than the predetermined acceleration (S23: No), as the vertical load of either the left rear wheel 202 RL or the right rear wheel 202 RR is presumed to be more than the predetermined vertical load and the vertical load of this wheels 202 is judged to be a partial wear load, the partial wear load flag 73d is turned on (S33) to end this partial wear load judgment processing.

Or, if as a result of the processing at S23, the lateral G of the vehicle 1 is judged to be equal to or below the predetermined acceleration (S23: Yes), it is judged whether or not the yaw rate of the vehicle 1 is equal to or below the predetermined yaw rate (S24). If as a result the yaw rate of the vehicle 1 is above the predetermined yaw rate (S24: No), as the vertical load of either the left rear wheel 202 RL or the right rear wheel 202 RR is presumed to be greater than the predetermined vertical load and the vertical load of this wheel 202 is judged to be a partial wear load, the partial wear load flag 73d is turned on (S33) to end this partial wear load judgment processing.

Or, if as a result of the processing at S24 the yaw rate of the vehicle 1 is judged to be equal to or below the predetermined yaw rate (S24: Yes), it is judged whether or not the roll angle of the vehicle 1 is smaller than the predetermined roll angle (S25). If as a result the roll angle of the vehicle 1 is judged to be greater than the predetermined roll angle (S25: No), as it is presumed that the vertical loads of the left and right rear wheels 202RL and 202RR may be greater than the predetermined vertical load and the vertical loads of these wheels 202 are judged to be partial wear loads, the partial wear load flag 73d is turned on (S33) to end this partial wear load judgment processing.

Or, if as a result of the processing at S25 the roll angle of the vehicle 1 is judged to be equal to or smaller than the predetermined roll angle (S25: Yes), it is judged whether or not the vertical loads of the left and right rear wheels 202RL and 202RR are equal to or less than the predetermined vertical load (S226). To add, by the processing at S226, the vertical loads of the left and right rear wheels 202RL and 202RR detected by the vertical load sensor device 284 are compared with a threshold stored in advance in the ROM 72 to judge whether the vertical loads of the current left and right rear wheels 202RL and 202RR are equal to or less than the predetermined vertical load.

If as a result the vertical load of at least one of the left and right rear wheels 202RL and 202RR is judged to be equal to or less than the predetermined vertical load (S226: No), as the vertical load of this wheel 202 is judged to be a partial wear load, the partial wear load flag 73d is turned on (S33) to end this partial wear load judgment processing.

Or, if as a result of the processing at S226 the vertical loads of the left and right rear wheels 202RL and 202RR are judged to be equal to or less than the predetermined load (S226: Yes), it is judged whether or not the crush allowances of the tire sidewalls of the left and right rear wheels 202RL and 202RR are equal to or less than the predetermined crush allowance (S227). To add, by the processing at S227, the crush allowances of the tire sidewalls of the left and right rear wheels 202RL and 202RR detected by the sidewall crush allowance sensor device 285 and a threshold stored in advance in the ROM 72 are compared to judge whether or not the current crush allowances of the tire sidewalls of the left and right rear wheels 202RL and 202RR are equal to or less than the predetermined crush allowance.

If as a result the crush allowance of the tire sidewall of at least one of the left and right rear wheels 202RL and 202RR is judged to be greater than the predetermined crush allowance (S227: No), as the vertical load of that wheel 202 with the greater crush allowance is presumed to be greater than the predetermined vertical load and the vertical load of this wheel 202 is judged to be a partial wear load, the partial wear load flag 73d is turned on (S33) to end this partial wear load judgment processing.

Or, if as a result of the processing at S227 the crush allowances of the tire sidewalls of the left and right rear wheels 202RL and 202RR are judged to be equal to or smaller than the predetermined crush allowance (S227: Yes), it judged whether or not the operation quantity of the accelerator pedal 61 (extent of depression) is equal to or smaller than the predetermined operation quantity (S28). If as a result the operation quantity of the accelerator pedal 61 is judged to be greater than the predetermined operation quantities (S28: No), as the vertical loads of the left and right rear wheels 202RL and 202RR are presumed to be greater than the predetermined vertical load and the vertical loads of these wheels 202 are judged to be partial wear loads, the partial wear load flag 73d is turned on (S33) to end this partial wear load judgment processing.

Or, if as a result of the processing at S28 the operation quantity of the accelerator pedal 61 is judged to be equal to or smaller than the predetermined operation quantity (S28: Yes), it is judged whether or not the operation quantity (steering angle) of the steering wheel 63 is equal to or smaller than the predetermined operation quantities (S30). If as a result the operation quantity of the steering wheel 63 is judged to be greater than the predetermined operation quantity (S30: No), as the vertical load of either the left rear wheel 202RL or the right rear wheel 202RR is presumed to be greater than the predetermined vertical load and the vertical load of this wheel 202 is judged to be a partial wear load, the partial wear load flag 73d is turned on (S33) to end this partial wear load judgment processing.

Or, if as a result of the processing at S30 the operation quantity of the steering wheel 63 is judged to be equal to or greater than the predetermined operation quantities (S30: Yes), it is judged whether or not the operating velocity (steering angle velocity) of the steering wheel 63 is equal to or below a predetermined velocity (S31). If as a result the operating velocity of the steering wheel 63 is judged to be above the predetermined velocity (S31: No), as the vertical load of either the left rear wheel 202RL or the right rear wheel 202RR is presumed to be greater than the predetermined vertical load and the vertical load of the wheel 202 is judged to be a partial wear load, the partial wear load flag 73d is turned on (S33) to end this partial wear load judgment processing.

Or, if as a result of the processing at S31 the operating velocity of the steering wheel 63 is judged to be equal to or below the predetermined velocity (S31: Yes), it is judged whether or not the operation acceleration (steering angle acceleration) of the steering wheel 63 is equal to or below the predetermined acceleration (S32). If as a result the operation acceleration of the steering wheel 63 is judged to be above the predetermined acceleration (S32: No), as the vertical load of either the left rear wheel 202RL of the right rear wheel 202RR is presumed to be greater than the predetermined vertical load and the vertical load of this wheel 202 is judged to be a partial wear load, the partial wear load flag 73d is turned on (S33) to end this partial wear load judgment processing.

Or, if as a result of the processing at S32 the operation acceleration of the steering wheel 63 is judged to be below the predetermined acceleration (S32: Yes), the partial wear load flag 73d is turned off (S34) to end this partial wear load judgment processing.

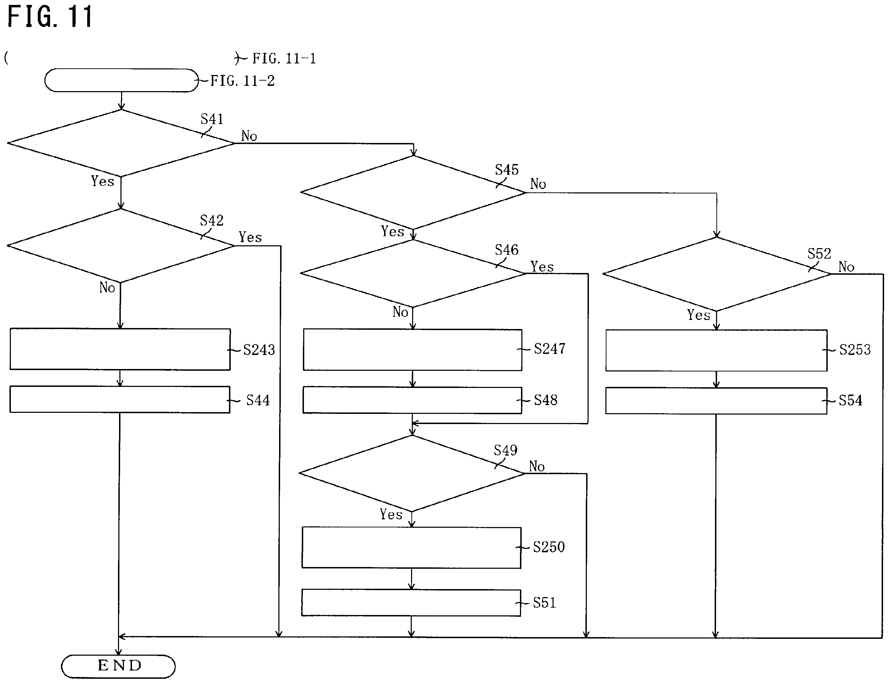

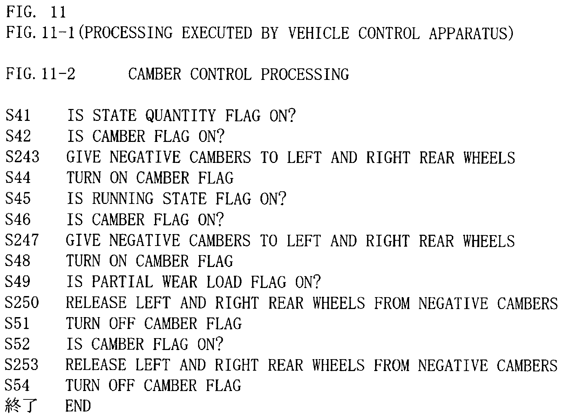

Next, the camber control processing in the second embodiment will be described with reference to Fig. 11. Fig. 11 is a flow chart showing the camber control processing in the second embodiment. This processing, executed repeatedly (e.g. at 0.2 second intervals) by the CPU 71 as long as power is supplied to the vehicle control apparatus 200, is intended to adjust the camber angles of the left and right rear wheels 202RL and 202RR. Incidentally, the same steps of processing as in the camber control processing in the first embodiment will be denoted by the same reference signs in the description.

The CPU 71, regarding the camber control processing in the second embodiment, first judges whether or not the state quantity flag 73b is on (S41) and, if the state quantity flag 73b is judged to be on (S41: Yes), judges whether or not the camber flag 73a is on (S42). If as a result the camber flag 73a is judged to be off (S42: No), the RL and RR motors 44RL and 44RR are actuated to adjust the camber angles of the left and right rear wheels 202RL and 202RR to the first camber angle, give negative cambers to the left and right rear wheels 202RL and 202RR (S243) and turns on the camber flag 73a (S44) to end this camber control processing.

If the state quantity of the vehicle 201 is thereby enabled to satisfy the predetermined condition, namely if at least one of the operation quantities of the pedals 61 and 62 and the operation quantity of the steering wheel 63 is equal to or more than the applicable predetermined operation quantity and if it is judged that accelerating, braking or turning the vehicle 201 when the camber angles of the left and right rear wheels 202RL and 202RR are in the state of the second camber angle may invite slipping of the left and right rear wheels 202RL and 202RR, the running stability of the vehicle 201 can be ensured by giving negative cambers to the left and right rear wheels 202RL and 202RR and utilizing camber thrusts thereby generated on the left and right rear wheels 202RL and 202RR.

Or, if as a result of the processing at S42 the camber flag 73a is judged to be on (S42: Yes), as the camber angles of the left and right rear wheels 202RL and 202RR are already adjusted to the first camber angle, the processing at S243 and S244 is skipped and this camber control processing is ended.

On the other hand, if as a result of the processing at S41 the state quantity flag 73b is judged to be off (S41: No), it is judged whether or not the running state flag 73c is on (S45) and, if running state flag 73c is judged to be on (S45: Yes), it is judged whether or not the camber flag 73a is on (S46). If as a result the camber flag 73a is judged to be off (S46: No), the RL and RR motors 44RL and 44RR are actuated to adjust the camber angles of the left and right rear wheels 202RL and 202RR to the first camber angle to give negative cambers to the left and right rear wheels 202RL and 202RR (S247), and at the same time the camber flag 73a is turned on (S48) to execute processing of S49.

This enables, when the running state of the vehicle 201 is the predetermined straight line state (stable), namely when the running speed of the vehicle 201 is equal to or above a predetermined speed, the operation quantity of the steering wheel 63 is equal to or smaller than the predetermined operation quantity, and the vehicle 291 is running straight at a relatively high speed, the straight line stability of the vehicle 201 to be secured by utilizing lateral rigidity of the left and right rear wheels 202RL and 202RR by giving negative cambers to the left and right rear wheels 202RL and 202RR.

On the other hand, if as a result of the processing at S46 the camber flag 73a is judged to be on (S46: Yes), as the camber angles of the left and right rear wheels 202RL and 202RR are already adjusted to the first camber angle, the processing at S247 and S48 is skipped and it is judged whether or not the partial wear load flag 73d is on (S49). If as a result the partial wear load flag 73d is judged to be on (S49: Yes), the RL and RR motors 44RL and 44RR are actuated to adjust the camber angles of the left and right rear wheels 202RL and 202RR to the second camber angle, the left and right rear wheels 202RL and 202RR are released from negative cambers (S250), at the same time the camber flag 73a is turned off (S51), and this camber control processing is ended.

This enables, if the vehicle 201 runs when the vertical loads of the left and right rear wheels 202RL and 202RR are partial wear loads, namely in a state in which negative cambers are given to the left and right rear wheels 202RL and 202RR, the tires (treads) may suffer partial wear, the partial wear of tires to be restrained by releasing the left and right rear wheels 202RL and 202RR from the negative cambers.

Or, if as a result of the processing at S49 the partial wear load flag 73d is judged to be off (S49: No), as it is judged that the vertical loads of the left and right rear wheels 202RL and 202RR are not partial wear load and that, even if the vehicle 201 runs in a state in which negative cambers are given to the left and right rear wheels 202RL and 202RR, there is no fear for the tires (treads) to suffer partial wear, processing at S250 and S51 is skipped to end this camber control processing.

On the other hand, if as a result of the processing at S45 the running state flag 73c is judged to be off (S45: No), it is judged whether or not the camber flag 73a is on (S52). If as a result the camber flag 73a is judged to be on (S52: Yes), the RL and RR motors 44RL and 44RR are actuated to adjust the camber angles of the left and right rear wheels 202RL and 202RR to the second camber angle, the left and right rear wheels 202RL and 202RR are released from the negative cambers (S253), and at the same time the camber flag 73a is turned off (S54) to end this camber control processing.

This enables, when the state quantity of the vehicle 201 does not satisfy the predetermined conditions and the running state of the vehicle 201 is not the predetermined straight line state, namely when it is unnecessary to give priority to securing the running stability of the vehicle 201, fuel consumption can be saved by releasing the left and right rear wheels 202RL and 202RR from negative cambers and thereby avoiding the influence of camber thrusts.

Or, if as a result of the processing at S52 the camber flag 73a is judged to be off (S52: No), as the camber angles of the left and right rear wheels 202RL and 202RR are already adjusted to the second camber angle, the processing at S253 and S54 is skipped to end this camber control processing.

To add, in the flow chart shown in Fig. 10 (partial wear load judgment processing), the processing at S221, S22 to 25, S226, S227, S28 and S30 to S32 corresponds to vertical load information acquiring means according to Claim 1 and the processing to detect the expansion/contraction quantity of each suspension 4 by the suspension stroke sensor device 283 in the processing at S221, to expansion/contraction quantity acquiring means according to Claim 7; in the flow chart shown in Fig. 11 (camber control processing), the processing at S49 corresponds to vertical load judging means and the processing at S250, to first camber angle adjusting means both according to Claim 1, the processing at S41 to state quantity judging means according to Claim 2, the processing at S45, to running state judging means and the processing at S247, to third camber angle adjusting means both according to Claim 3.

Further in the flow chart shown in Fig. 11, the processing at S45 corresponds to stable running state judging means and the processing at S247, to camber giving means both according to Claim 8.

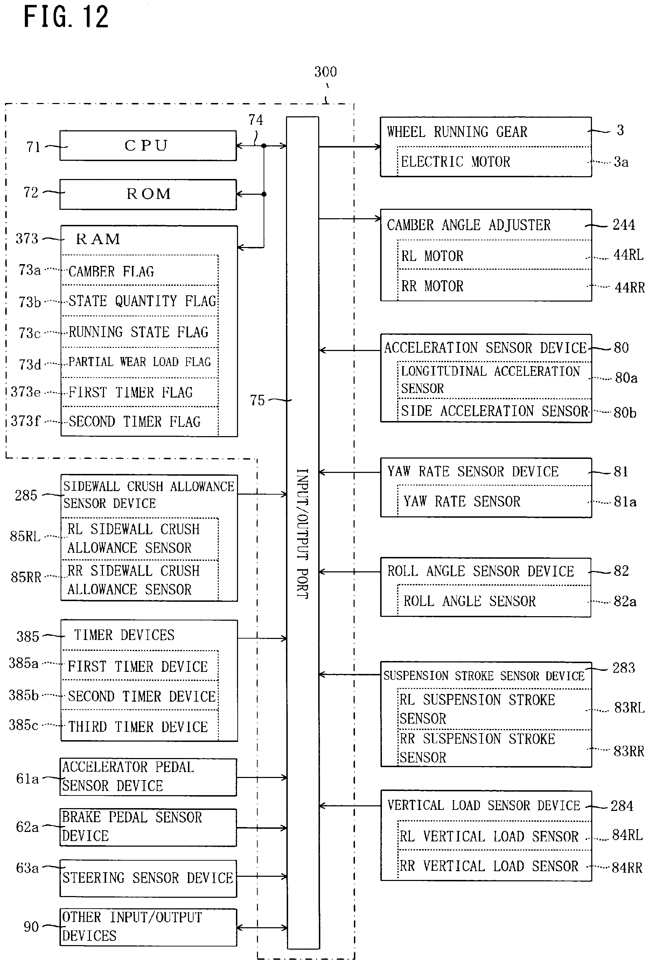

Next, a third embodiment will be described with reference to Fig. 12 through Fig. 16. With respect to the first embodiment and the second embodiment, cases in which the camber angles of the wheels 2 or 202 are adjusted to the second camber angle when the running state of the vehicle 1 or 201 is judged to be in the predetermined straight line state (stable) and the vertical loads of the wheels 2 or 202 are judged to be equal to or greater than the predetermined vertical load were described. In contrast to the foregoing, the description of the third embodiment will concern a case in which the camber angles of the wheels 202 are maintained in the first camber angle when the running state of the vehicle 201 is judged to be in the predetermined straight line state (stable), the vertical loads of the wheels 202 are judged to be equal to or greater than the predetermined vertical load and, in addition, the vertical loads of the wheels 202 are judged to be not satisfying predetermined conditions. Also, a vehicle control apparatus 300 to be described with respect to the third embodiment will be described as what replaces the vehicle control apparatus 200 mounted on the vehicle 201 in the second embodiment. Incidentally, the same constituent parts as in the first embodiment and the second embodiment will be denoted by respectively the same reference signs, and their description will be dispensed with.

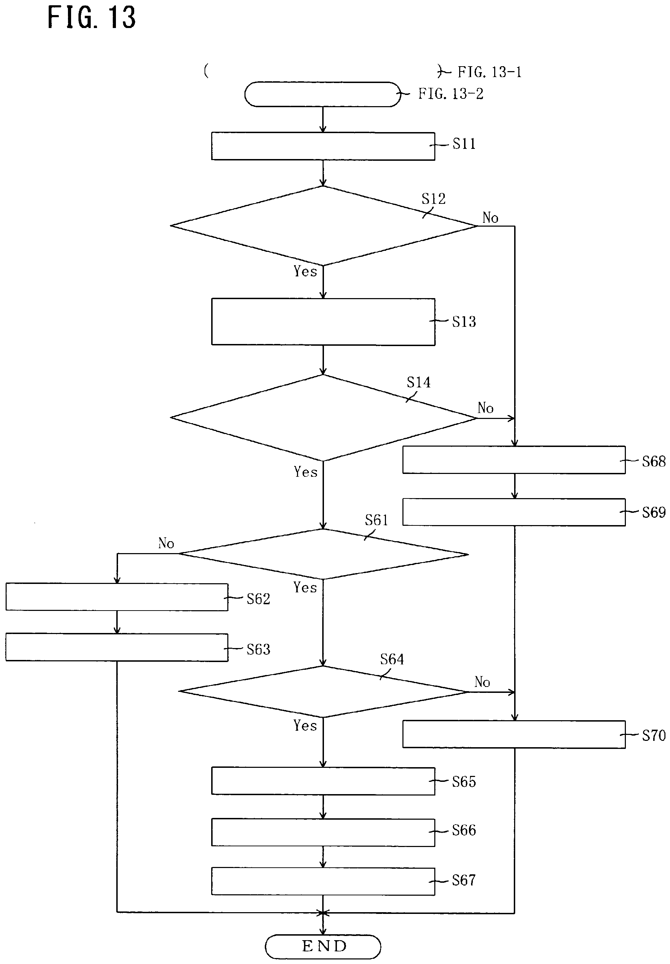

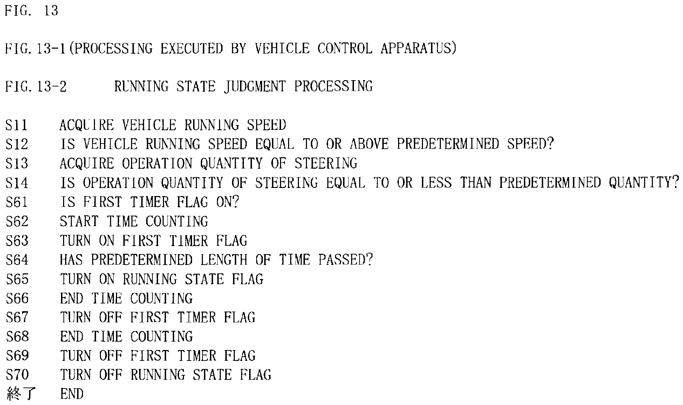

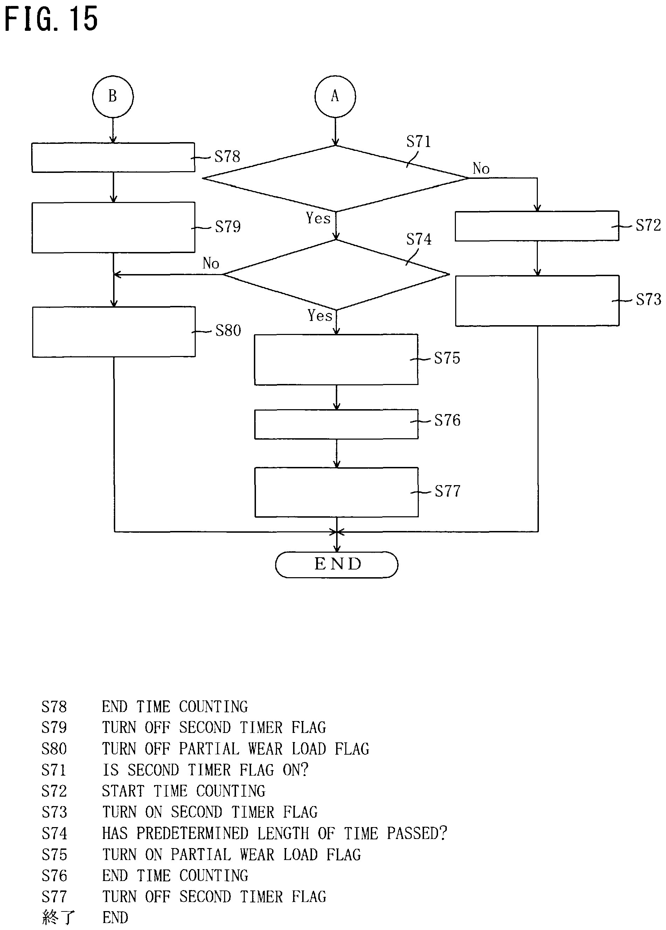

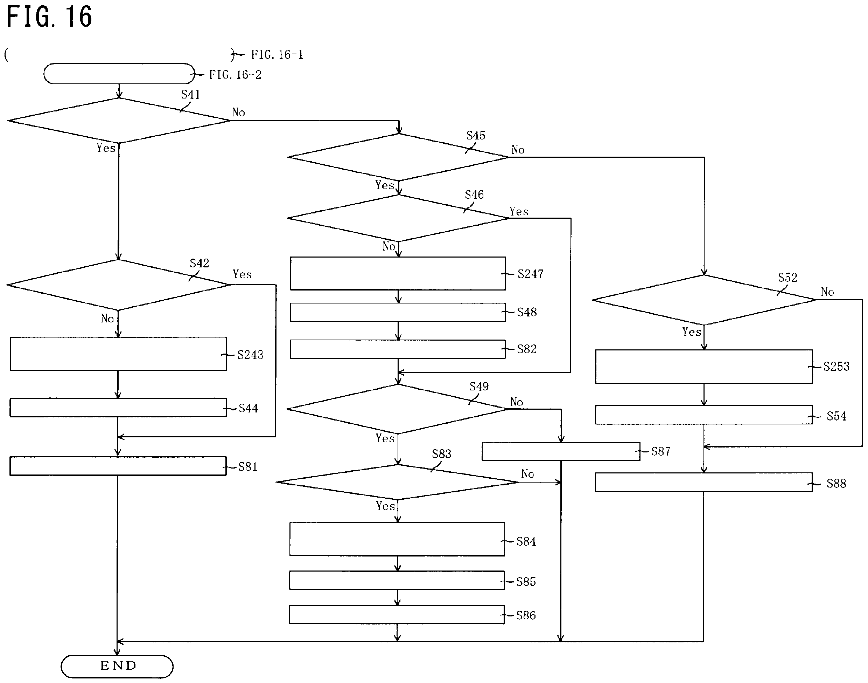

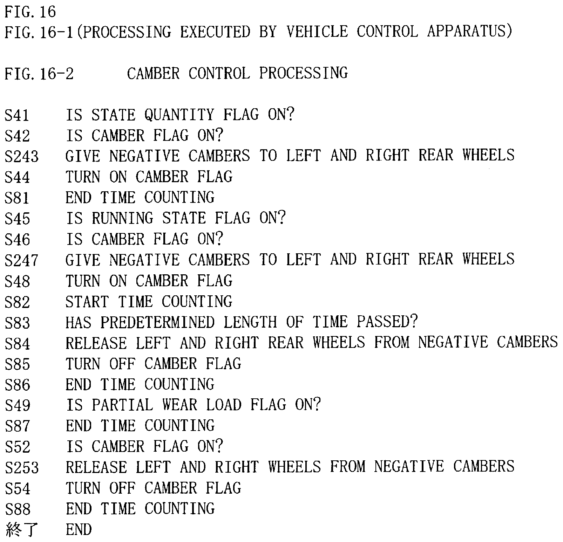

First, the electrical configuration of a vehicle control apparatus 300 in the third embodiment will be described with reference to Fig. 12. Fig. 12 is a block diagram showing the electrical configuration of the vehicle control apparatus 300 in the third embodiment of the invention. Timer devices 385 are devices for taking time counts, and each timer device is mainly provided with a timer circuit (not shown) that takes time counts in accordance with instructions from the CPU 71 and an output circuit (not shown) that processes time counts taken by the timer circuit and outputs the processed counts to the CPU 71. To add, a first timer device 385a is a device for taking time counts in running state judgment processing (see Fig. 13) to be described afterwards, a second timer device 385b, a device for taking time counts in partial wear load judgment processing (see Fig. 15) to be described afterwards, and a third timer device 385c, a device for taking time counts in camber control processing (see Fig. 16) to be described afterwards.

A RAM 373 is a memory for rewritably storing various sets of data at the time of executing a control program and, as shown in Fig. 12, is provided with a first timer flag 373e and a second timer flag 373f in addition to the camber flag 73a, the state quantity flag 73b, the running state flag 73c and the partial wear load flag 73d.

The first timer flag 373e is a flag that shows whether or not the first timer device 385a is taking time counts, and is turned on or off while the running state judgment processing (see Fig. 13) is being executed. The second timer flag 373f is a flag that shows whether or not the second timer device 385b is taking time counts, and is turned on or off while the partial wear load judgment processing (see Fig. 15) is being executed.

Next, the running state judgment processing in the third embodiment will be described with reference to Fig. 13. Fig. 13 is a flow chart showing the running state judgment processing. This processing, executed repeatedly (e.g. at 0.2 second intervals) by the CPU 71 as long as power is supplied to the vehicle control apparatus 300, is intended to judge whether or not the running state of the vehicle 201 is the predetermined straight line state.

The CPU 71, regarding the running state judgment processing, first acquires the running speed of the vehicle 201 (S11), and judges whether not the acquired running speed of the vehicle 201 is equal to or above the predetermined speed (S12). If as a result the running speed of the vehicle 201 is judged to be equal to or above the predetermined speed (S12: Yes), the operation quantity of the steering wheel 63 (steering angle) is acquired (S13), and it is judged whether or not the acquired operation quantity of the steering wheel 63 is equal to or smaller than the predetermined operation quantity (S14). If as a result the operation quantity of the steering wheel 63 is judged to be equal to or smaller than the predetermined operation quantity (S14: Yes), it is judged whether or not the first timer flag 373e is on (S61). If as a result the first timer flag 373e is judged to be off (S61: No), time counting is started with the first timer device 385a (S62), and the first timer flag 373e is turned on (S63) to end this running state judgment processing.

Or, if as a result of the processing at S61 the first timer flag 373e is judged to be on (S61: Yes), it is judged whether or not a predetermined length of time has passed since the first timer device 385a began to take time counts (S64). This predetermined length of time is preset and stored in the ROM 72. If as a result the predetermined length of time is judged to have passed (S64: Yes), the running state flag 73c is turned on (S65), at the same time the time counting by the first timer device 385a is ended (S66), and the first timer flag 373e is turned off (S67) to end this running state judgment processing. Thus in this running state judgment processing, when not only the running speed of the vehicle 201 is judged to be equal to or above the predetermined speed but also the operation quantity of the steering wheel 63 is judged to be equal to or smaller than the predetermined operation quantity and furthermore this state is judged to have continued for the predetermined length of time, the running state flag 73c is turned on.

On the other hand, if the running speed of the vehicle 201 is judged to be below the predetermined speed (S12: No), and if as a result of the processing at S14 the operation quantity of the steering wheel 63 is judged to be greater than the predetermined operation quantity (S14: No), the time counting by the first timer device 385a is ended (S68), at the same time the first timer flag 373e is turned off (S69), and the running state flag 73c is turned off (S70) to end this running state judgment processing. Or if as a result of the processing at S64 the predetermined length of time is judged to have not passed since the first timer device 385a began time counting (S64: No), the running state flag 73c is turned off (S70) to end this running state judgment processing.

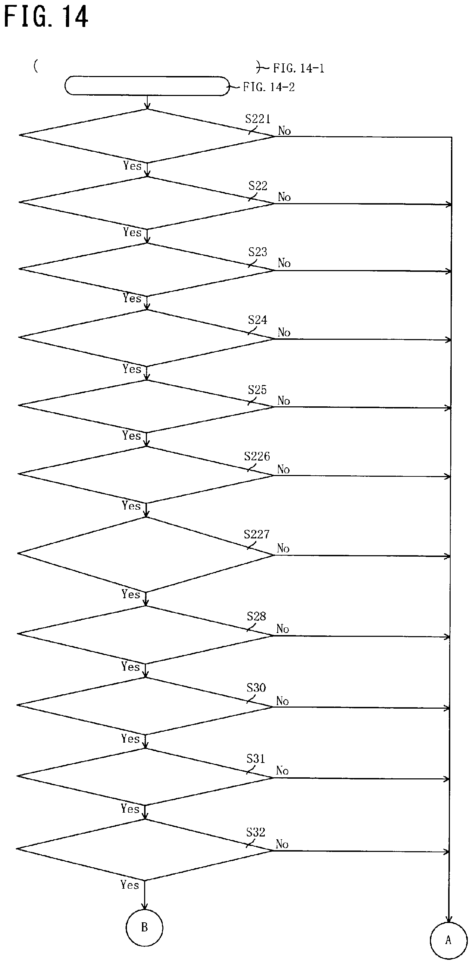

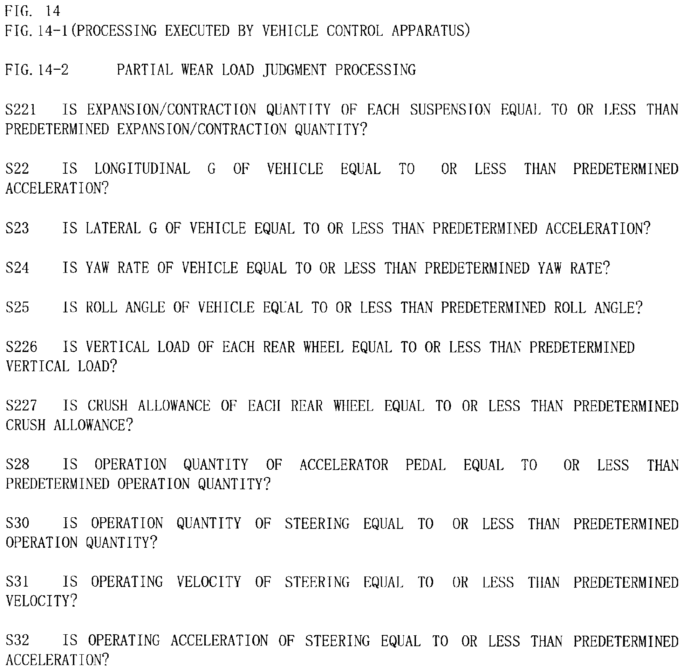

Next, the partial wear load judgment processing in the third embodiment will be described with reference to Fig. 14 and Fig. 15. Fig. 14 and Fig. 15 are flow charts showing the partial wear load judgment processing. This processing, executed repeatedly (e.g. at 0.2 second intervals) by the CPU 71 as long as power is supplied to the vehicle control apparatus 300, is intended to judge whether or not, if the vehicle 201 runs in a state in which negative cambers are given to the left and right rear wheels 202RL and 202RR, the vertical loads of the rear wheels 202RL and 202RR are partial wear loads that may invite partial wear of the tires (treads). Incidentally, as parts shown in Fig. 14 of the partial wear load judgment processing are the same as their counterparts in the partial wear load judgment processing by the second embodiment, respectively the same reference signs are assigned, and their description is dispensed with.

If as a result of processing at any of S221 to S32 shown in Fig. 14 the vertical load of one of the rear wheels 202 RL and 202RR is presumed to be greater than the predetermined vertical load and the vertical load of this wheel 202 is judged to be a partial wear load (Fig. 14: A), the CPU 71 judges whether or not the second timer flag 373f is on as shown in Fig. 15 (S71). If as a result the second timer flag 373f is judged to be off (S71: No), time counting is begun with the second timer device 385b (S72) and at the same time the second timer flag 373f is turned on (S73) to end this partial wear load judgment processing.

Or if as a result of the processing at S71 the second timer flag 373f is judged to be on (S71: Yes), the second timer device 385b judges whether or not the predetermined length of time has passed since time counting started (S74). This predetermined length of time is preset and stored in the ROM 72. If as a result the predetermined length of time is judged to have passed (S74: Yes), partial wear load flag 73d (S75), the time counting by the second timer device 385b is ended (S76) and the second timer flag 373f is turned off (S77) to end this partial wear load judgment processing. Thus in this partial wear load judgment processing, if a state in which the vertical loads of the rear wheels 202RL and 202RR are presumed to be greater than the predetermined vertical load is judged to have continued for a predetermined length of time, the partial wear load flag 73d is turned on.

On the other hand, if as a result of the processing at S221 to S32 shown in Fig. 14 the vertical load of either of the rear wheels 202RL and 202RR is presumed to be equal to or smaller than the predetermined vertical load and the vertical load of the rear wheels 202RL and 202RR are judged not to be partial wear load (Fig. 14: B), time counting by the second timer device 385b as shown in Fig. 15 is ended (S78), at the same time the second timer flag 373f is turned off (S79), and the partial wear load flag 73d is turned off (S80) to end this partial wear load judgment processing. Or if as a result of the processing at S74 the predetermined length of time is judged not to have passed since time counting by the second timer device 385b started (the predetermined state of the vehicle 201 is not continued) (S74: No), partial wear load flag 373f is turned off (S80) to end this partial wear load judgment processing.

Next, the camber control processing in the third embodiment will be described with reference to Fig. 16. Fig. 16 is a flow chart showing the camber control processing. This processing, executed repeatedly (e.g. at 0.2 second intervals) by the CPU 71 as long as power is supplied to the vehicle control apparatus 300, is intended to adjust the camber angles of the left and right rear wheels 2RL and 2RR.

The CPU 71, regarding the camber control processing, first judges whether or not the state quantity flag 73b is on (S41) and, if the state quantity flag 73b is judged to be on (S41: Yes), judges whether or not the camber flag 73a is on (S42). If as a result the camber flag 73a is judged to be off (S42: No), the RL and RR motors 44RL and 44RR are actuated to adjust the camber angles of the rear wheels 202RL and 202RR to the first camber angle to give negative cambers to the rear wheels 202RL and 202RR (S243), at the same time the camber flag 73a is turned on (S44) and time counting by the third timer device 385c is ended (S81) to end this camber control processing.

Or if as a result of the processing at S42 the camber flag 73a is judged to be on (S42: Yes), as the camber angles of the rear wheels 202RL and 202RR are already adjusted to the first camber angle, the processing at S43 and S44 is skipped and time counting by the third timer device 385c is ended (S81) to end this camber control processing.

On the other hand, if as a result of the processing at S41 the state quantity flag 73b is judged to be off (S41: No), it is judged whether or not the running state flag 73c is on (S45) and, if the running state flag 73c is judged to be on (S45: Yes), it is judged whether or not the camber flag 73a is on (S46). If as a result the camber flag 73a is judged to be off (S46: No), the RL and RR motors 44RL and 44RR are actuated to adjust the camber angles of the rear wheels 202RL and 202RR to the first camber angle to give negative cambers to the rear wheels 202RL and 202RR (S247), at the same time the camber flag 73a is turned on (S48), and time counting by the third timer device 385c is started (S82) to execute processing at S49. This enables, when the running state of the vehicle 201 is the predetermined straight line state, the straight line stability of the vehicle 201 can be ensured by giving negative cambers to the rear wheels 202RL and 202RR thereby to utilize the lateral rigidity of the rear wheels 202RL and 202RR.

Or if as a result of the processing at S46 the camber flag 73a is judged to be on (S46: Yes), as the camber angles of the rear wheels 202RL and 202RR are already adjusted to the first camber angle, the processing at S247, S48 and S82 is skipped, and it is judged whether or not the partial wear load flag 73d is on (S49). If as a result the partial wear load flag 73d is judged to be on (S49: Yes), it is judged whether or not the predetermined length of time has passed since time counting by the third timer device 385c started (S83) and, if the predetermined length of time is judged to have passed (S83: Yes), the RL and RR motors 44RL and 44RR are actuated to adjust the camber angles of the rear wheels 202RL and 202RR to the second camber angle to release the rear wheels 202RL and 202RR from negative cambers (S84), at the same time the camber flag 73a is turned off (S85), and time counting by the third timer device 385c is ended (S86) to end this camber control processing.

This enables, in the case of fear for the tires (treads) to suffer partial wear if the vehicle 201 runs when the vertical loads of the rear wheels 202RL and 202RR are partial wear loads, namely in a state in which negative cambers are given to the rear wheels 202RL and 202RR, partial wear of the tires can be restrained by releasing the rear wheels 202RL and 202RR from negative cambers.

On the other hand, if as a result of the processing at S49 the partial wear load flag 73d is judged to be off (S49: No), as it is judged that the vertical loads of the rear wheels 202RL and 202RR are not partial wear loads and it is judged, even if the vehicle 201 runs in a state in which negative cambers are given to the rear wheels 202RL and 202RR, there is no fear for the tires (treads) to suffer partial wear, time counting by the third timer device 385c is ended (S87), and the processing at S83 to S86 is skipped to end this camber control processing.

Or if as a result of the processing at S83 it is judged that the predetermined length of time has not passed (S83: No), the processing at S84, S85 and S86 is skipped to end this camber control processing. In this way, even in a case in which the partial wear load flag 73d is judged to be on (S49: Yes), if it is judged as a result of the processing at S83 that the predetermined length of time has not passed (the vehicle 201 remains in the predetermined state in which negative cambers are given to the rear wheels 202RL and 202RR) (S83: No), frequent switching-over of the camber angles of the rear wheels 202RL and 202RR can be restrained by keeping the rear wheels 202RL and 202RR provided with negative cambers.

Or if as a result of the processing at S45 the running state flag 73c is judged to be off (S45: No), it is judged whether or not the camber flag 73a is on (S52). If as a result the camber flag 73a is judged to be on (S52: Yes), the RL and RR motors 44RL and 44RR are actuated to adjust the camber angles of the rear wheels 202RL and 202RR to the second camber angle, the rear wheels 202RL and 202RR are released from negative cambers (S253), at the same time the camber flag 73a is turned off (S54) to end time counting by the third timer device 385c (S88), and this camber control processing is ended.

This enables, when the state quantity of the vehicle 201 does not satisfy the predetermined condition and the running state of the vehicle 201 is not the predetermined straight line state, namely when there is no need to ensure priority to the running stability of the vehicle 201, fuel consumption can be saved by releasing the left and right rear wheels 202RL and 202RR from negative cambers and thereby avoiding the influence of camber thrusts.

Or if as a result of the processing at S52 the camber flag 73a is judged to be off (S52: No), as the camber angles of the rear wheels 202RL and 202RR are already adjusted to the second camber angle, the processing at S253 and S54 is skipped and time counting by the third timer device 385c is ended (S88) to end this camber control processing.

As hitherto described, in the third embodiment, when it is judged according to time counting by the second timer device 385b that the predetermined length of time has passed (the vehicle 201 remains in the predetermined state according to information on the vertical loads) (S74: Yes) in addition to that the vertical loads of the wheels 202 are judged to be equal to or greater than the predetermined vertical load in the partial wear load judgment processing (see Fig. 15), the partial wear load flag 73d is turned on (S75). This enables in the camber control processing (see Fig. 16) the camber angles of the wheels 202 to avoid frequent adjustment to the second camber angle by the execution of the processing at S84 and frequent switching-over of the camber angles to be restrained. As a result, when non-continuous unevenness of the road surface due to seams or partial paving invites abrupt changes in the expansion/contraction quantity of the suspensions 4 of the running vehicle 201, the camber angles of the wheels 202 can be maintained at the first camber angle.

Further in the third embodiment, when the running state flag 73c is on (S45) in the camber control processing (see Fig. 16), if it is judged that, by time counting with the third timer device 385c, the predetermined length of time has passed (S83: Yes) after the camber angles of the wheels 202 have been adjusted to the first camber angle, the camber angles of the wheels 202 are adjusted to the second camber angle (S84). Or if as a result of the processing at S83 it is judged that the predetermined length of time has not passed (the predetermined state in which the camber angles of the wheels 202 are adjusted to the first camber angle remains in the vehicle 201 on the basis of information on vertical loads) (S83: No), the camber angles of the wheels 202 are maintained at the first camber angle. In this case, too, it is possible to avoid actuation of the camber angle adjuster 244 to adjust the camber angles of the wheels 202 to the second camber angle every time the vertical loads of the wheels 202 are judged to be equal to or greater than the predetermined vertical load, and frequent switching-over of the camber angles can be thereby restrained.

Further in third embodiment, even if the running state of the vehicle 201 is judged to be the predetermined straight line state in the running state judgment processing (see Fig. 13), when it is judged according to time counting by the first timer device 385a that the predetermined length of time has passed (S64: Yes), the running state flag 73c is turned on (S65). For this reason, the processing at S247 in the camber control processing (see Fig. 16) is executed to avoid frequent adjustment of the camber angles of the wheels 202 to the first camber angle by the actuation of the camber angle adjuster 244, enabling frequent switching-over of the camber angles to be avoided.

To add, in the flow chart shown in Fig. 13 (running state judgment processing), the processing at S70 executed as a result of the processing at S64 corresponds to standby means according to Claim 6. In the flow chart shown in Fig. 15 (partial wear load judgment processing), the processing at S74 corresponds to continuous state judging means according to Claim 5. In the flow chart shown in Fig. 16 (camber control processing), the processing at S83 corresponds to continuous state judging means and the processing to skip the processing at S84 as a result of the processing at S83 corresponds to maintaining means, both according to Claim 5.

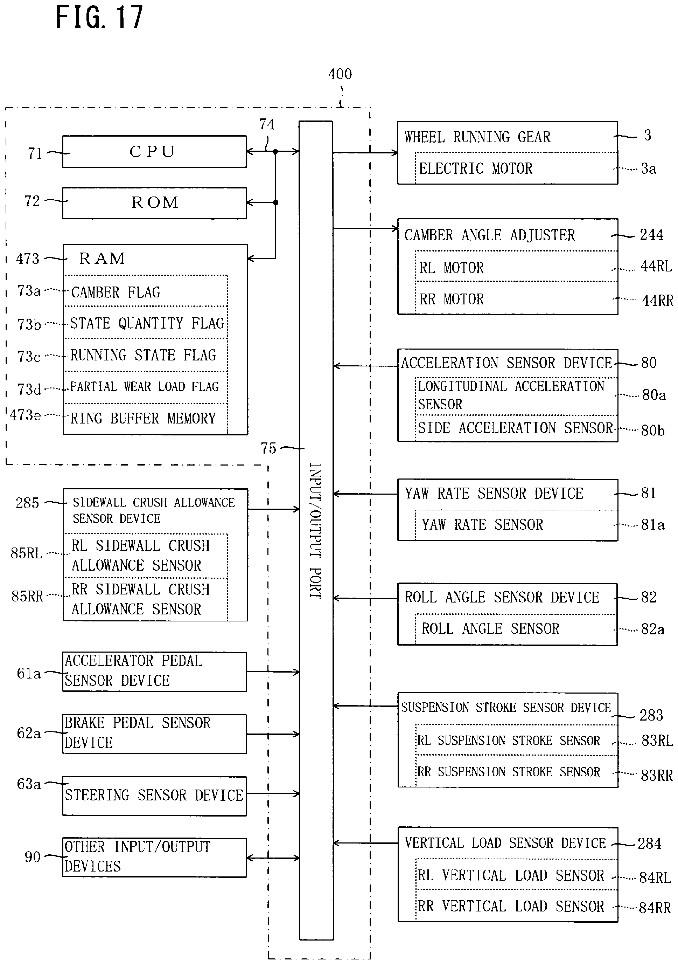

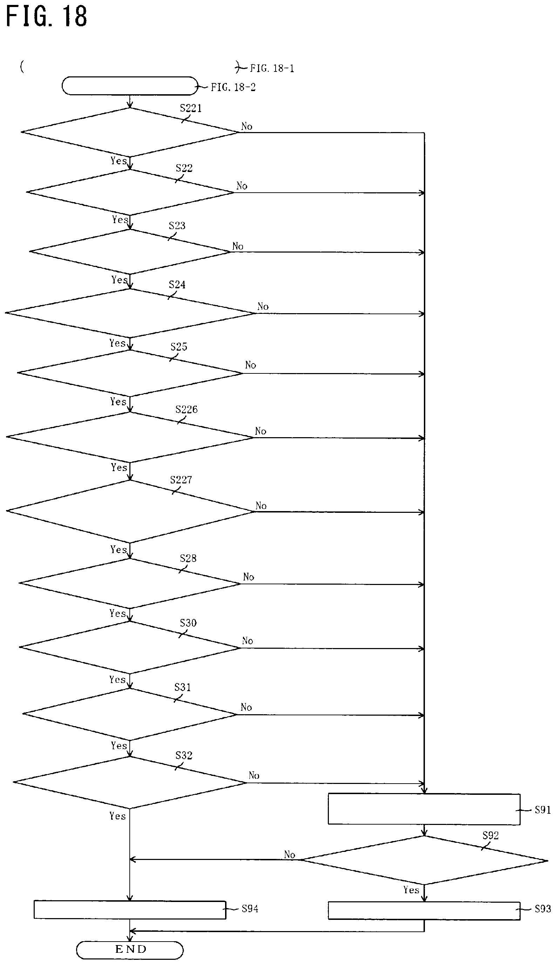

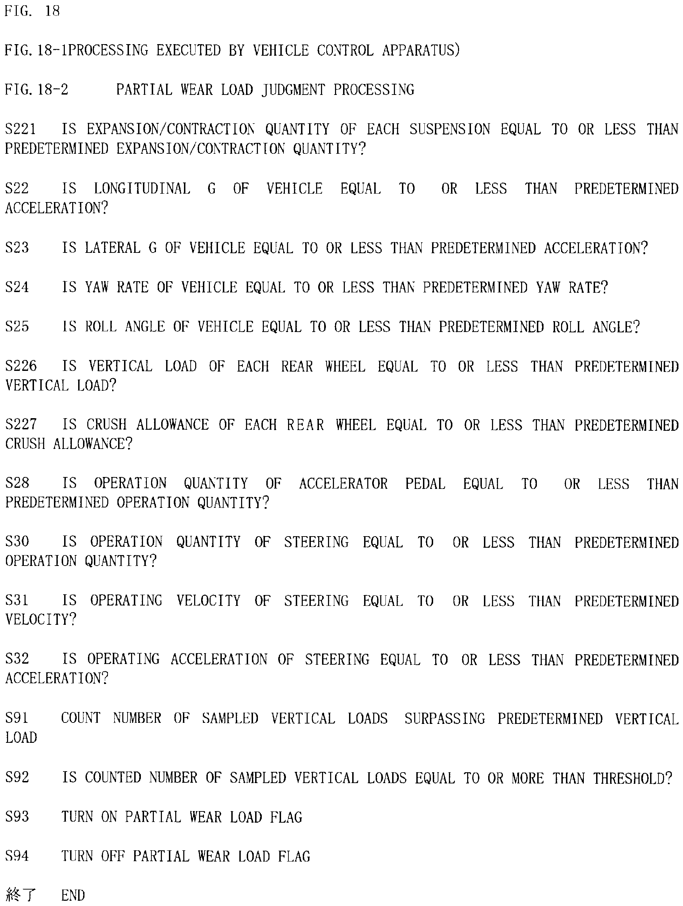

Next, a fourth embodiment will be described with reference to Fig. 17 and Fig. 18. With respect to the partial wear load judgment processing (see Fig. 15) in the third embodiment, a case in which whether to turn on the partial wear load flag 73d is judged taking account of whether or not the predetermined length of time had passed was described. In contrast, with respect to the fourth embodiment, a case in which judgment takes into account whether state values indicating the running state during a predetermined period satisfy predetermined conditions will be described. Also, a vehicle control apparatus 400 described with regard to the fourth embodiment will be described as what replaces the vehicle control apparatus 200 mounted on the vehicle 201 in the second embodiment. Incidentally, the same constituent parts as in the first embodiment and the second embodiment will be denoted by respectively the same reference signs, and their description will be dispensed with.

First with reference to Fig. 17, the electrical configuration of the vehicle control apparatus 400 in the fourth embodiment will be described. A RAM 473 is a memory that rewritably stores various kinds of data at the time of executing a control program and, as shown in Fig. 17, is provided with a ring buffer memory 473e in addition to the camber flag 73a, the state quantity flag 73b, the running state flag 73c and the partial wear load flag 73d.

The ring buffer memory 473e is a ring buffer that stores the hysteresis of the vertical loads of the rear wheels 2RL and 2RR; results of detection (vertical loads) by an RL vertical load sensor 84RL and an RR vertical load sensor 84RR of the vertical load sensor device 284 are sampled at a predetermined rate, and the vertical loads are successively written in, associated with the sampling time. This writing into the ring buffer memory 473e is accomplished sequentially from the leading address of the ring buffer and, when the writing arrives at the final address of the ring buffer, returns to the leading address of the ring buffer and is continued from that leading address onward.

The CPU 71 reads out vertical loads within a predetermined period of time from the ring buffer memory 473e, compares them with the predetermined threshold (vertical load) stored in the ROM 72, and counts the number of sampled vertical loads surpassing the threshold. If the number of sampled vertical loads surpassing the threshold is small, it can be presumed that the vertical loads of the rear wheels 2RL and 2RR are sporadically occurring.

Next, the partial wear load judgment processing in the fourth embodiment will be described with reference to Fig. 18. Fig. 18 is a flow chart showing partial wear load judgment processing. This processing, executed repeatedly (e.g. at 0.2 second intervals) by the CPU 71 as long as power is supplied to the vehicle control apparatus 400, is intended to judge whether or not, if the vehicle 201 runs in a state in which negative cambers are given to the left and right rear wheels 202RL and 202RR, the vertical loads of the rear wheels 202RL and 202RR are partial wear loads that may invite partial wear of the tires (treads). Incidentally, as the state quantity judgment processing, the running state judgment processing and the camber control processing can be accomplished in the same way as in some of the first embodiment through the third embodiment, their description will be dispensed with.

If as a result of processing at any of S221 to S32 shown in Fig. 18, the vertical load of either of the rear wheels 202RL and 202RR is presumed to be greater than the predetermined vertical load and this vertical load of the wheel 202 is judged to be a partial wear load (S221 to S32: No), the CPU 71 reads out of the ring buffer memory 473e vertical loads within the predetermined period of time, and counts the number of sampled vertical loads surpassing the threshold within the predetermined period of time (S91). Then, the CPU 71 compares the number of samples with the predetermined threshold (number of samples) stored in the ROM 72 (S92). If as a result the counted number of samples is judged to be equal to or greater than the threshold (S92: Yes), as it is judged that the state in which the rear wheels 202RL and 202RR have large vertical loads continues and that, on the basis of information on vertical loads, the vehicle 201 remains in the predetermined state involving a fear of inviting partial wear, the partial wear load flag 73d is turned on (S93) to end this partial wear load judgment processing.

Or, if as a result of the processing at S92 the counted number of samples is judged to be less than the threshold (S92: No), as it is judged that the vertical loads of the rear wheels 2RL and 2RR are sporadic and involve no fear of inviting partial wear, the partial wear load flag 73d is turned off (S94) to end this partial wear load judgment processing.

As hitherto described, in the partial wear load judgment processing in the fourth embodiment (see Fig. 18), if the counted number of samples is judged to be equal to or greater than the threshold in addition to the judgment that the vertical loads of the wheels 202 are equal to or greater than the predetermined vertical load (S92: Yes), the partial wear load flag 73d is turned on (S93). As a result, in the camber control processing, frequent adjustment of the camber angles of the wheels 202 to the second camber angle by the actuation of the camber angle adjuster 244 can be avoided to restrain frequent switching-over of the camber angles. This enables, when non-continuous unevenness of the road surface due to seams or partial paving invites abrupt working of the vertical loads of the wheels 202, the camber angles of the wheels 202 to be maintained at the first camber angle. Incidentally in the flow chart of Fig. 18 (partial wear load judgment processing), the processing at S92 corresponds to the continuous state judging means according to Claim 6.

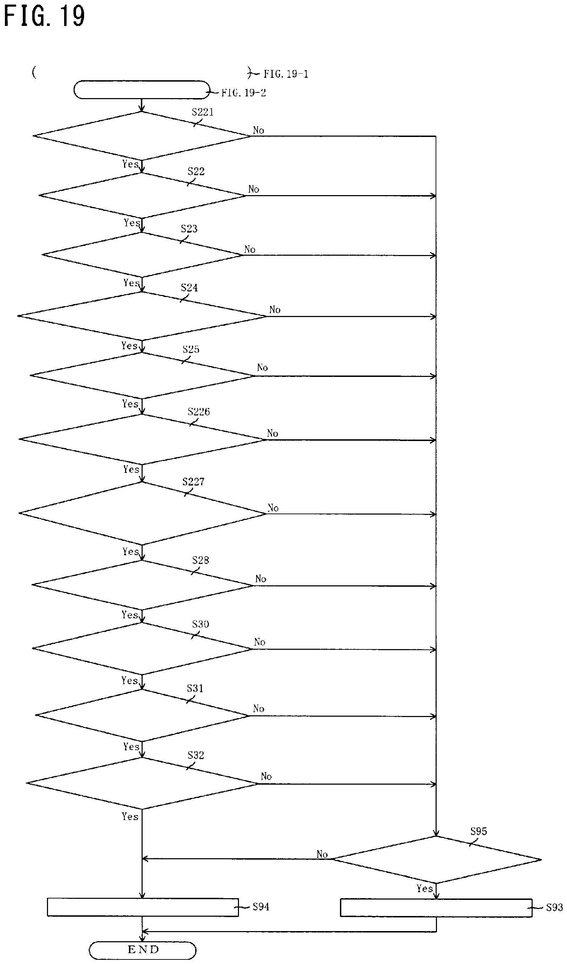

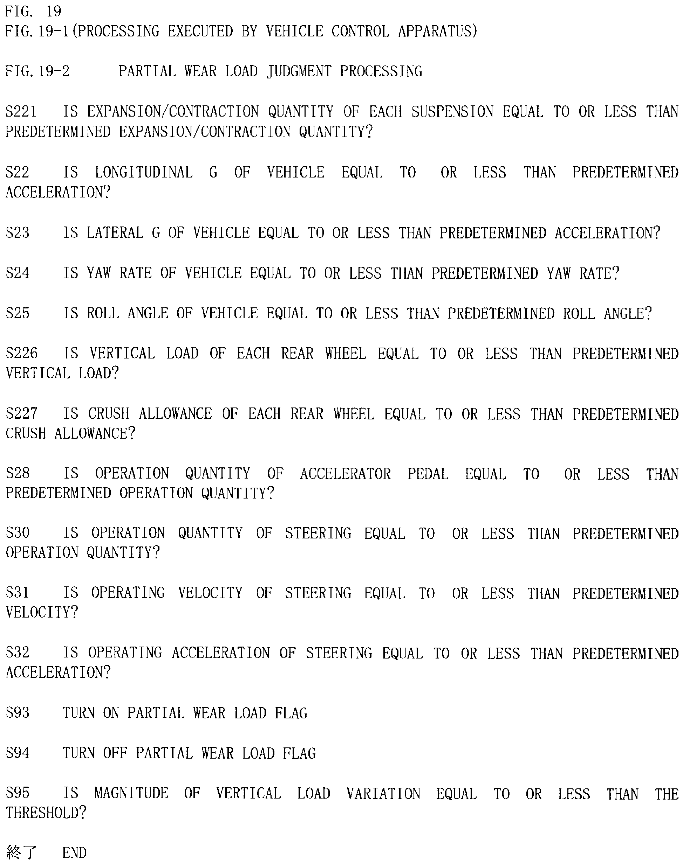

Now, a fifth embodiment will be described with reference to Fig. 19. Regarding the partial wear load judgment processing in the fourth embodiment (see Fig. 18), whether or not to turn on the partial wear load flag 73d was judged by taking account of whether or not state values during a predetermined period satisfied predetermined conditions was described. In contrast, with respect to the fifth embodiment, a case in which whether or not state values indicating the running state satisfy predetermined conditions is taken into account in making judgment will be described. Further, the partial wear load judgment processing in the fifth embodiment will be described as what is executed by the vehicle control apparatus 200 mounted on the vehicle 201 in the second embodiment. Incidentally, the same constituent parts as in the first embodiment will be denoted by respectively the same reference signs, and their description will be dispensed with.

Fig. 19 is a flow chart showing the partial wear load judgment processing in the fifth embodiment. This processing, executed repeatedly (e.g. at 0.2 second intervals) by the CPU 71 as long as power is supplied to the vehicle control apparatus 200. To add, as the state quantity judgment processing, the running state judgment processing and the camber control processing can be accomplished in the same way as in the first embodiment, their description will be dispensed with.

If as a result of processing at S221 to S32 shown in Fig. 19 the vertical load of either of the rear wheels 202RL and 202RR is presumed to be greater than the predetermined vertical load and the vertical load of this wheel 202 is judged to be a partial wear load (S221 to S32: No), the CPU 71 compares a time-differentiated value (the magnitude of vertical load variation) obtained by subjecting the vertical load detected by the vertical load sensor device 284 to time differentiation with a predetermined threshold stored in the ROM 72 (S95). If as a result the magnitude of vertical load variation is judged to be equal to or less than the threshold (S95: Yes), as it is judged that the vertical load variation, though small, is gradually increasing and the vehicle 201 remains in the predetermined state, the partial wear load flag 73d is turned on (S93) to end this partial wear load judgment processing.

Or if as a result of the processing at S95 the magnitude of vertical load variation is judged to be greater than the threshold (S95: No), as it is judged that the vertical loads of the rear wheels 2RL and 2RR are sporadically invited by impacts or the like working on the tires, the partial wear load flag 73d is turned off (S94) to end this partial wear load judgment processing.

As hitherto described, in the partial wear load judgment processing in the fifth embodiment (see Fig. 19), when the magnitude of vertical load variation is judged to be equal to or smaller than the predetermined vertical load (S95: Yes) in addition to the judgment that the vertical load of the wheel 202 is equal to or greater than the threshold, the partial wear load flag is turned on (S93). As a result, in the camber control processing, frequent adjustment of the camber angles of the wheels 202 to the second camber angle by the actuation of the camber angle adjuster 244 can be avoided to restrain frequent switching-over of the camber angles. This enables, when non-continuous unevenness of the road surface due to seams or partial paving invites abrupt variations of the vertical loads of the wheels 202, the camber angles of the wheels 202 to be maintained at the first camber angle. Incidentally in the flow chart of Fig. 19 (partial wear load judgment processing), the processing at S95 corresponds to the continuous state judging means according to Claim 5.

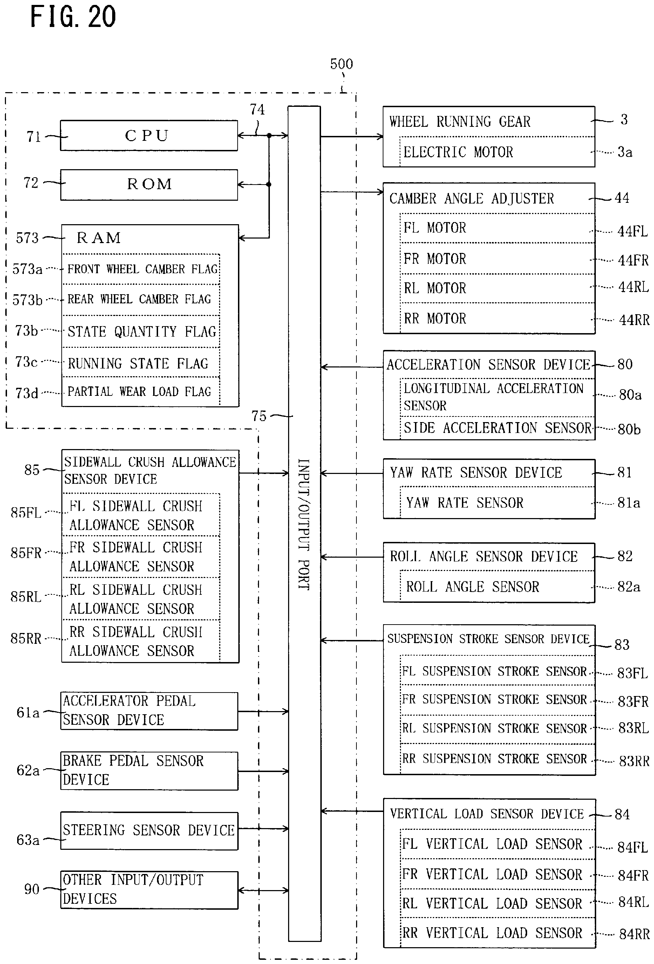

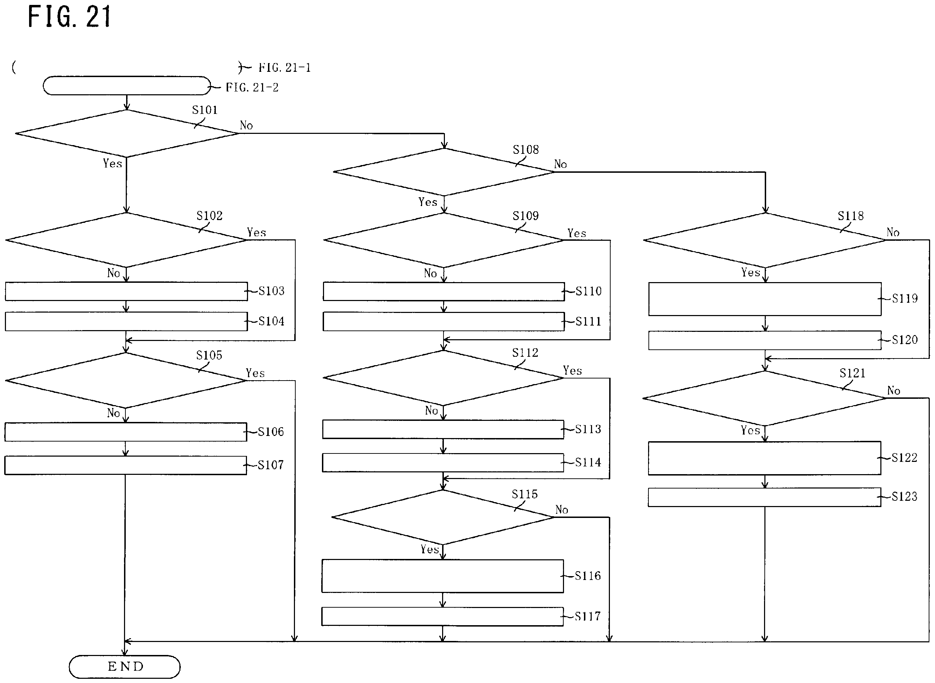

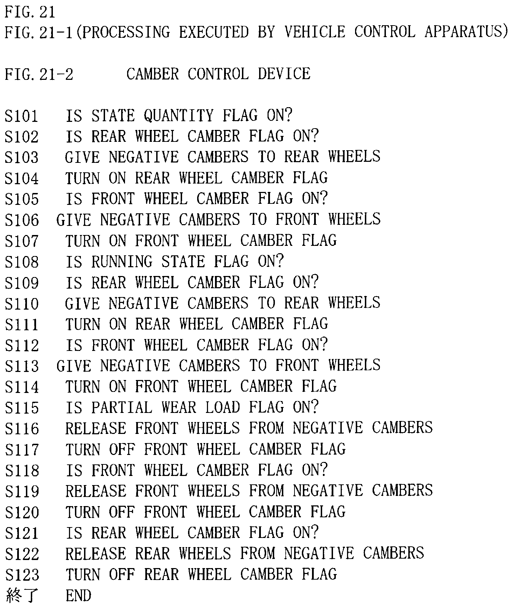

Next, a sixth embodiment will be described with reference to Fig. 20 and Fig. 21. Regarding the camber control processing in the first embodiment (see Fig. 7), a case of releasing the front wheels 2FL and 2FR and the rear wheels 2RL and 2RR from negative cambers when the partial wear load flag 73d (see Fig. 3) is on (S49: Yes) in the state in which negative cambers are given to the front wheels 2FL and 2FR and the rear wheels 2RL and 2RR was described. In contrast, with respect to the sixth embodiment, a case of releasing the front wheels 2FL and 2FR from negative cambers when the partial wear load flag 73d is on in the state in which negative cambers are given to the front wheels 2FL and 2FR and the rear wheels 2RL and 2RR will be described. Further, a vehicle control apparatus 500 in the sixth embodiment will be described as what is mounted on the vehicle 1 to replace the vehicle control apparatus 100 mounted on the vehicle 1 in the first embodiment. Incidentally, the same constituent parts as in the first embodiment will be denoted by respectively the same reference signs, and their description will be dispensed with.

First with reference to Fig. 20, the electrical configuration of the vehicle control apparatus 500 in the sixth embodiment will be described. A RAM 573 is a memory that rewritably stores various kinds of data at the time of executing a control program and, as shown in Fig. 20, is provided with a front wheel camber flag 573a, a rear wheel camber flag 573b, the state quantity flag 73b, the running state flag 73c and the partial wear load flag 73d.

The front wheel camber flag 573a is a flag that shows whether or not the camber angles of the front wheels 2FL and 2FR are in a state of being adjusted to the first camber angle; the CPU 71 judges, when this front wheel camber flag 573a is on, that the camber angles of the front wheels 2FL and 2FR are in the state of being adjusted to the first camber angle. The rear wheel camber flag 573b is a flag that shows whether or not the camber angles of the rear wheels 2RL and 2RR are in a state of being adjusted to the first camber angle; the CPU 71 judges, when this rear wheel camber flag 573b is on, that the camber angles of the rear wheels 2RL and 2RR are in the state of being adjusted to the first camber angle.

Next, the partial wear load judgment processing executed by the vehicle control apparatus 500 will be described with reference to Fig. 19. In the partial wear load judgment processing, the CPU 71 judges, in place of the processing at S221 shown in Fig. 19, whether or not the expansion/contraction quantity of at least one of the suspensions 4 is equal to or smaller than the predetermined expansion/contraction quantity. It also judges, in place of the processing at S226 shown in Fig. 19, whether or not the vertical loads of the wheels 2 (front wheels 2FL and 2FR and rear wheels 2RL and 2RR) are equal to or smaller than the predetermined vertical load. Further in place of the processing at S227 shown in Fig. 19, it judges whether or not the crush allowances of the tire sidewalls of the wheels 2 (front wheels 2FL and 2FR and rear wheels 2RL and 2RR) are equal to or smaller than the predetermined crush allowance.

If as a result of these steps of processing it is presumed that the vertical load of any of the front wheels 2FL and 2FR and rear wheels 2RL and 2RR is greater than the predetermined vertical load and the vertical load of any of these wheels 2 is judged to be a partial wear load (S221 to S32: No), the CPU 71 compares a time-differentiated value (the magnitude of vertical load variation) obtained by subjecting the vertical load detected by the vertical load sensor device 84 to time differentiation and a predetermined threshold stored in the ROM 72 (S95). If as a result the magnitude of vertical load variation is judged to be equal to or less than the threshold (S95: Yes), as it is judged that the vertical load variation, though small, is gradually increasing and the vehicle 1 remains in the predetermined state, the partial wear load flag 73d is turned on (S93) to end this partial wear load judgment processing.

Or if as a result of the processing at S95 the magnitude of vertical load variation is judged to be greater than the threshold (S95: No), as it is judged that the vertical loads of the front wheels 2FL and 2FR or the rear wheels 2RL and 2RR are sporadically invited by impacts or the like working on the tires, the partial wear load flag 73d is turned off (S94) to end this partial wear load judgment processing.

Next, the camber control processing will be described with reference to Fig. 21. Fig. 21 is a flow chart showing the camber control processing. This processing, executed repeatedly (e.g. at 0.2 second intervals) by the CPU 71 as long as power is supplied to the vehicle control apparatus 500, is intended to adjust the camber angles of the wheels 2 (left and right front wheels 2FL and 2FR and left and right rear wheels 2RL and 2RR).

The CPU 71, regarding the camber control processing, first judges whether or not the state quantity flag 73b is on (S101) and, if the state quantity flag 73b is judged to be on (S101: Yes), judges whether or not the rear wheel camber flag 573b is on (S102). If as a result the rear wheel camber flag 573b is judged to be off (S102: No), the RL and RR motors 44RL and 44RR are actuated to adjust the left and right camber angles of the rear wheels 2RL and 2RR to the first camber angle to give negative cambers to the rear wheels 2RL and 2RR (S103). After turning on the rear wheel camber flag 573b (S104), it is judged whether or not the front wheel camber flag 573a is on (S105).

To add, if as a result of the processing at S102 the rear wheel camber flag 573b is judged to be on (S102: Yes), as the camber angles of the rear wheels 2RL and 2RR are already adjusted to the first camber angle, the processing at S103 and S104 is skipped and the processing at S105 is executed.

If as a result of the processing at S105 the front wheel camber flag 573a is judged to be off (S105: No), the FL and FR motors 44FL and 44FR are actuated to adjust the left and right camber angles of the front wheels 2FL and 2FR to the first camber angle to give negative cambers to the front wheels 2FL and 2FR (S106). After turning on the front wheel camber flag 573a (S107), this camber control processing is ended.

If this enables the state quantities of the vehicle 1 to satisfy the predetermined conditions, namely if at least one of the operation quantities of the pedals 61 and 62, the operation quantity of the steering wheel 63 is equal to or greater than the applicable predetermined operation quantity and if it is judged that accelerating, braking or turning the vehicle 1 when the camber angles of the wheels 2 are in the state of the second camber angle may invite slipping of the wheels 2, the running stability of the vehicle 1 can be ensured by giving negative cambers to the wheels 2 (front wheels 2FL and 2FR and rear wheels 2RL and 2RR) and utilizing camber thrusts thereby generated on the wheels 2.

Or if the state quantities of the vehicle 1 satisfy the predetermined conditions, as negative cambers are given to the front wheels 2FL and 2FR after being given to the rear wheels 2RL and 2RR in the processing at S102 to S107, the camber angles of the front wheels 2FL and 2FR and the rear wheels 2RL and 2RR are prevented from being adjusted simultaneously, and the camber thrusts generated on the rear wheels 2RL and 2RR can be effectively utilized. This enables the running stability of the vehicle 1 when the camber angles of the wheels 2 are adjusted to be enhanced.

Or if as a result of the processing at S105 the front wheel camber flag 573a is judged to be on (S105: Yes), as the camber angles of the front wheels 2FL and 2FR are already adjusted to the first camber angle, the processing at S106 and S107 is skipped to end this camber control processing.

On the other hand, if as a result of the processing at S101 the state quantity flag 73b is judged to be off (S101: No), it is judged whether or not the running state flag 73c is on (S108) and, if the running state flag 73c is judged to be on (S108: Yes), it is judged whether or not the rear wheel camber flag 573b is on (S109). If as a result the rear wheel camber flag 573b is judged to be off (S109: No), the RL and RR motors 44RL and 44RR are actuated to adjust the left and right camber angles of the rear wheels 2RL and 2RR to the first camber angle to give negative cambers to the rear wheels 2RL and 2RR (S110). After the rear wheel camber flag 573b is turned on (S111), it is judged whether or not the front wheel camber flag 573a is on (S112).

To add, if as a result of the processing at S109 the rear wheel camber flag 573b is judged to be on (S109: Yes), as the camber angles of the rear wheels 2RL and 2RR are already adjusted to the first camber angle, the processing at S110 and S111 is skipped to execute the processing at S112.

If as a result of the processing at S112 the front wheel camber flag 573a is judged to be off (S112: No), the RL and RR motors 44RL and 44RR are actuated to adjust the left and right camber angles of the front wheels 2FL and 2FR to the first camber angle to give negative cambers to the front wheels 2FL and 2FR (S113), and the front wheel camber flag 573a is turned on (S114) to execute the processing at S115.

This enables, when the running state of the vehicle 1 is the predetermined straight line state (stable), namely when the running speed of the vehicle 1 is equal to or above the predetermined speed, the operation quantity of the steering wheel 63 is equal to or smaller than the predetermined operation quantity, and the vehicle 1 is running straight at a relatively high speed, the straight line stability of the vehicle 1 to be secured by utilizing lateral rigidity of the wheels 2 by giving negative cambers to the wheels 2.

Or if the running state of the vehicle 1 is the predetermined straight line state, as negative cambers are given to the front wheels 2FL and 2FR after being given to the rear wheels 2RL and 2RR in the processing at S109 to S114, the camber angles of the front wheels 2FL and 2FR and the rear wheels 2RL and 2RR are prevented from being adjusted simultaneously, and the camber thrusts generated on the rear wheels 2RL and 2RR can be effectively utilized. This enables the running stability of the vehicle 1 when the camber angles of the wheels 2 are adjusted to be enhanced.

Or if as a result of the processing at S112 the front wheel camber flag 573a is judged to be on (S112: Yes), as the camber angles of the front wheels 2FL and 2FR are already adjusted to the first camber angle, the processing at S113 and S114 is skipped, and it is judged whether or not the partial wear load flag 73d is on (S115). If as a result the partial wear load flag 73d is judged to be on (S115: Yes), the FL and FR motors 44FL and 44FR are actuated to adjust the left and right camber angles of the front wheels 2FL and 2FR to the second camber angle to release the front wheels 2FL and 2FR from negative cambers (S116), and at the same time the front wheel camber flag 573a is turned off (S117) to end this camber control processing.

This enables, if the vehicle 1 runs when the vertical loads of the wheels 2 are partial wear loads, namely in a state in which negative cambers are given to the front wheels 2FL and 2FR, and this may invite partial wear on the tires (treads) of the front wheels 2FL and 2FR, partial wear of the tires to be restrained by releasing the front wheels 2FL and 2FR from negative cambers. Furthermore, since the negative cambers given to the rear wheels 2RL and 2RR remain, the straight line stability of the vehicle 1 can be ensured by utilizing the lateral rigidity of the rear wheels 2RL and 2RR.

Or if as a result of the processing at S115 the partial wear load flag 73d is judged to be off (S115: No), as the vertical loads of the wheels 2 are not partial wear loads and it is judged that there is no fear that the tires (treads) incur partial wear if the vehicle 1 runs in a state in which negative cambers are given to the front wheels 2FL and 2FR, the processing at S116 and S117 is skipped to end this camber control processing.

On the other hand, if as a result of the processing at S108 the running state flag 73c is judged to be off (S108: No), it is judged whether or not the front wheel camber flag 573a is on (S118). If as a result it is judged that the front wheel camber flag 573a is on (S118: Yes), the FL and FR motors 44FL and 44FR are actuated to adjust the left and right camber angles of the front wheels 2FL and 2FR to the second camber angle to release the front wheels 2FL and 2FR from negative cambers (S119) and at the same time the front wheel camber flag 573a is turned off (S120) to execute the processing at S121.

To add, if as a result of the processing at S118 the front wheel camber flag 573a is judged to be off (S118: No), as the camber angles of the front wheels 2FL and 2FR are already adjusted to the second camber angle, the processing at S119 and S120 is skipped to execute the processing at S121.

If as a result of the processing at S121 the rear wheel camber flag 573b is judged to be on (S121: Yes), the RL and RR motors 44RL and 44RR are actuated to adjust the left and right camber angles of the rear wheels 2RL and 2RR to the second camber angle, the rear wheels 2RL and 2RR are released from negative cambers (S122), and at the same time the rear wheel camber flag 573b is turned off (S123) to end this camber control processing.

This enables, when the state quantity of the vehicle 1 does not satisfy the predetermined condition and the running state of the vehicle 1 is not the predetermined straight line state, namely when there is no need to give priority to securing the running stability of the vehicle 1, fuel consumption can be saved by releasing the wheels 2 from negative cambers and thereby avoiding the influence of camber thrusts.

Further in the processing at S119 to S123 in this case, as the rear wheels 2RL and 2RR are released from negative cambers after the front wheels 2FL and 2FR are released from negative cambers, the camber angles of the front wheels 2FL and 2FR and the rear wheels 2RL and 2RR are prevented from being adjusted simultaneously. This enables the running stability of the vehicle 1 when the camber angles of the wheels 2 are adjusted to be enhanced.

Or if as a result of the processing at S121 the rear wheel camber flag 573b is judged to be off (S121: No), as the camber angles of the rear wheels 2RL and 2RR are already adjusted to the second camber angle, the processing at S122 and S123 is skipped to end this camber control processing.

As hitherto described, in the sixth embodiment, when the vertical loads of the wheels 2 are judged to be equal to or greater than the predetermined vertical load, the camber angles of the front wheels 2FL and 2FR are adjusted to the second camber angle (a camber angle smaller in absolute value than the first camber angle) and the front wheels 2FL and 2FR are released from negative cambers. This enables partial wear of the tires of the front wheels 2FL and 2FR to be restrained.

Thus, as the vehicle 1 is mounted with the wheel running gear 3 having a large mass on the side of the front wheels 2FL and 2FR, the vertical loads of the front wheels 2FL and 2FR are apt to be greater than the vertical loads of the rear wheels 2RL and 2RR. Further, as application of the braking force results in a shift of the load of the vehicle 1 toward the front wheels 2FL and 2FR, the vertical loads of the front wheels 2FL and 2FR are apt to be greater than the vertical loads of the rear wheels 2RL and 2RR. Also, when the vehicle 1 turns, as the front wheels 2FL and 2FR are steered by the operation of the steering wheel 63, the front wheels 2FL and 2FR are apt to suffer partial wear. Therefore, when the vertical loads of the wheels 2 are equal to or greater than the predetermined vertical load, partial wear of the tires of the front wheels 2FL and 2FR can be restrained by releasing the front wheels 2FL and 2FR from negative cambers. As a result, the service lives of the tires can be extended. Further by restraining partial wear of the tires, the ground contact faces can be prevented from becoming uneven and the running stability of the vehicle 1 can be ensured. Furthermore, as partial wear of the tires can be restrained, fuel consumption can be saved correspondingly.

Or if it is judged that the vertical loads of the wheels 2 are equal to or greater than the predetermined vertical load in a state in which negative cambers are given to the front wheels 2FL and 2FR and rear wheels 2RL and 2RR, the negative cambers of the rear wheels 2RL and 2RR are maintained. By keeping the negative cambers of the rear wheels 2RL and 2RR which are hardly susceptible to partial wear, the straight line stability of the vehicle 1 can be ensured. This enables not only partial wear of the front wheels 2FL and 2FR to be prevented but also the straight line stability of the vehicle 1 to be ensured.

Further in the sixth embodiment, as the camber angles of the wheels 2 are adjusted to the first camber angle and negative cambers are given to the wheels 2 when the state quantity of the vehicle 1 is judged to be satisfying the predetermined condition, the running stability of the vehicle 1 can be ensured by utilizing the camber thrusts generated on the wheels 2. Also, the camber angles of the front wheels 2FL and 2FR are adjusted to the second camber angle (a camber angle smaller in absolute value than the first camber angle) and the front wheels 2FL and 2FR are released from negative cambers when the state quantity of the vehicle 1 is judged not to be satisfying the predetermined condition and the vertical loads of the wheels 2 are judged to be equal to or greater than the predetermined vertical load, partial wear of the tires of the front wheels 2FL and 2FR can be restrained. Therefore, ensuring the running stability and restraining the partial wear of tires can be compatibly achieved.

Also in the sixth embodiment, as the camber angles of the wheels 2 are adjusted to the first camber angle and negative cambers are given to the wheels 2 when the running state of the vehicle 1 is judged to be the predetermined straight line state, the straight line stability of the vehicle 1 can be ensured by utilizing the lateral rigidity to the wheels 2. Further, when the running state of the vehicle 1 is judged to be the predetermined straight line state and the vertical loads of the wheels 2 are judged to be equal to or greater than the predetermined vertical load, the camber angles of the front wheels 2FL and 2FR are adjusted to the second camber angle (a camber angle smaller in absolute value than the first camber angle) and the front wheels 2FL and 2FR are released from negative cambers. This enables partial wear of the tires of the front wheels 2FL and 2FR to be restrained. Therefore, ensuring the straight line and restraining the partial wear of tires can be compatibly achieved.

Further in the partial wear load judgment processing (see Fig. 19), if not only the vertical loads of the wheels 2 are judged to be equal to or greater than the predetermined vertical load but also the magnitude of vertical load variation is judged to be equal to or less than the threshold (S95: Yes), a partial wear load flag is turned on (S93). For this reason in the camber control processing, the camber angle adjuster 44 is actuated to avoid frequent adjustment of the camber angles of the wheels 2 to the second camber angle, and frequent switching-over of camber angles can be thereby avoided. This enables, when non-continuous unevenness of the road surface due to seams or partial paving invites abrupt variations of the vertical loads of the wheels 2, the camber angles of the wheels 2 to be maintained at the first camber angle.

To add, in the flow chart shown in Fig. 19 (partial wear load judgment processing), the processing at S95 corresponds to continuous state judging means according to Claim 5; in the flow chart shown in Fig. 21 (the camber control processing), the processing at S115 corresponds to vertical load judging means and the processing at S116, to first camber angle adjusting means both according to Claim 1, the processing at S101 corresponds to state quantity judging means and the processing at S103 and S106 corresponds to second camber angle adjusting means both according to Claim 2, and the processing at S108 corresponds to running state judging means and the processing at S110 and S113 to third camber angle adjusting means both according to Claim 3.

Also in the flow chart shown in Fig. 21, the processing at S108 corresponds to stable running state judging means and the processing at S110 and S113, to camber giving means, both according to Claim 8.

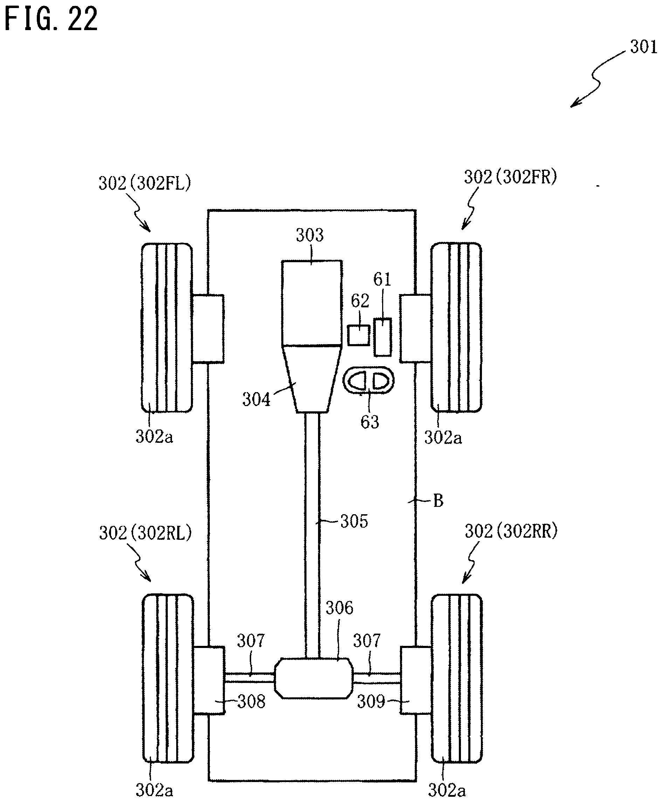

Next, a seventh embodiment will be described with reference to Fig. 22 through Fig. 29. In the following description of the seventh embodiment through a ninth embodiment, the same constituent parts as in the first embodiment will be denoted by respectively the same reference signs, and their detailed description will be dispensed with. Fig. 22 is a conceptual diagram of a vehicle 301 in the seventh embodiment of the invention. As shown in Fig. 22, left front, right front, left rear and right rear wheels 302FL, 302FR, 302RL and 302RR are turnably disposed on a body B, which is the body of the vehicle 301. To add, the front wheels comprise the wheels 302FL and 302FR, and the rear wheels, the wheels 302RL and 302RR.

In this embodiment, the vehicle 301 has a rear wheel drive type structure having an engine 303 as the prime mover, and the wheels 302RL and 302RR function as driving wheels. And the engine 303 and each of the wheels 302RL and 302RR are linked via an automatic transmission 304 as a transmission, a propeller shaft 305 as a first transmission shaft, differential gears 306 and a drive shaft 307 as a second transmission shaft among others. Revolution generated by driving the engine 303 is changed in speed at a predetermined gear ratio by the automatic transmission 304 and transmitted to the wheels 302RL and 302RR.

Although the vehicle 301 has a rear wheel drive type structure in this embodiment, it can have a front wheel drive type structure or a four wheel drive type structure as well. Also, it can be configured as a hybrid type vehicle by being equipped with, in place of the engine 303, an engine as a first prime mover and a drive unit comprising a generator and a motor as a second prime mover. It can as well be configured as a hybrid type vehicle by being equipped with an engine as a first prime mover, and a drive unit comprising a generator as a second prime mover and a motor as a third prime mover. Further, it can be configured as an electric vehicle by being equipped with a motor as a prime mover.

The vehicle 301 is provided with a steering wheel 63 as an operating unit for steering the vehicle 301 and as a steering member, an accelerator pedal 61 as an operating unit for accelerating the vehicle 301 and as an accelerating operational member, and a brake pedal 62 as an operating unit for braking the vehicle 301 and as a braking operational member.

Each of actuators 308 and 309, disposed between the body B and the wheels 302RL and 302RR, is a camber varying mechanism (camber angle adjuster) for turning the wheels 302RL and 302RR, giving cambers to the wheels 302RL and 302RR and releasing the wheels from cambers. Incidentally, while in this embodiment each of the actuators 308 and 309 (camber angle adjuster) is supposed to be disposed between the body B and the wheels 302RL and 302RR, the actuators 308 and 309 can as well be disposed between the body B and the wheels 302FL and302FR, or the actuators 308 and 309 can also be disposed between the body B and the wheels 302FL, 302FR, 302RL and 302RR.

As tires 302a, low rolling resistance tires are used, whose rolling resistance generated by tread deformation is reduced by decreasing the loss tangent over the whole breadth. Whereas the breadth of the tires 302a in this embodiment is made smaller than that of ordinary tires to reduce the rolling resistance, this can be accomplished by so shaping the tread pattern, which is the pattern of tread grooves, as to reduce the rolling resistance or using a low rolling resistance material at least for the tread part.

To add, the loss tangent represents the degree of absorption of energy at the time of tread deformation, and can be expressed in the ratio of loss shear modulus to storage shear modulus. As the smaller the loss tangent, the smaller the absorption of energy by the tread, with the result that the rolling resistance arising in the tire 302a decreases and the wear suffered by the tire 302a decreases. By contrast, as the greater the loss tangent, the greater the absorption of energy by the tread, with the result that the rolling resistance arising in the tire 302a increases and the wear suffered by the tire 302a increases. In the vehicle 301, as the rolling resistances of the tires 302a decrease, fuel efficiency can be improved.

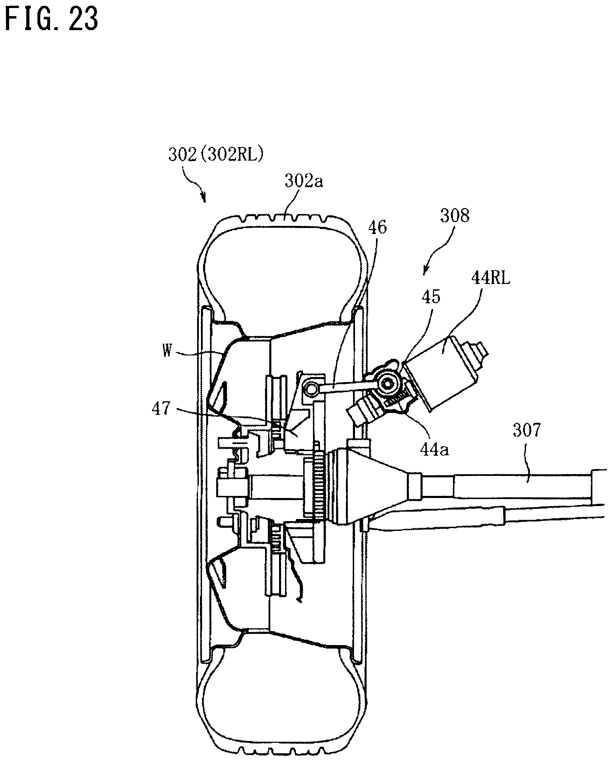

Next, the structure of the actuator 308 will be described with reference to Fig. 23. Incidentally, as the left and right actuators 308 and 309 are the same in structure, the actuator 308 of the wheel 302RL will be described. Fig. 23 shows a cross section of the wheel 302RL.

The actuator 308 is provided with a motor 44RL as a drive unit for camber control, fixed to a knuckle (not shown) as a base member, and the moving plate 47 as a movable member, disposed to be oscillable relative to the knuckle. The actuator 308 further has the output shaft 44a of the RL motor 44RL as a first convertible element to which a worm gear is fitted, the worm wheel 45 as a second convertible element disposed turnably relative to the knuckle and engaging with the worm gear, and the arm 46 as a third convertible element and as a linking element that links the worm wheel 45 and the moving plate 47.

The arm 46 at one end is linked to the worm wheel 45 via a first linking part in a position eccentric from the rotation shaft of the worm wheel 45 and at the other end is linked to the moving plate 47 via a second linking part at the upper end of the moving plate 47. In this case, a fourth convertible element is configured of the moving plate 47. When the RL motor 44RL is driven, the rotation of the output shaft 44a causes the worm wheel 45 to turn and the arm 46 to move back and forth, resulting in oscillation of the moving plate 47. As a result, a camber equal to the angle in which the moving plate 47 is inclined relative to a perpendicular on the road surface is given to the wheel 302RL. Incidentally, a wheel W, which is a member to whose outer circumference the tire 302a is fitted, is supported to be turnable relative to the moving plate 47 and is linked to the drive shaft 307.

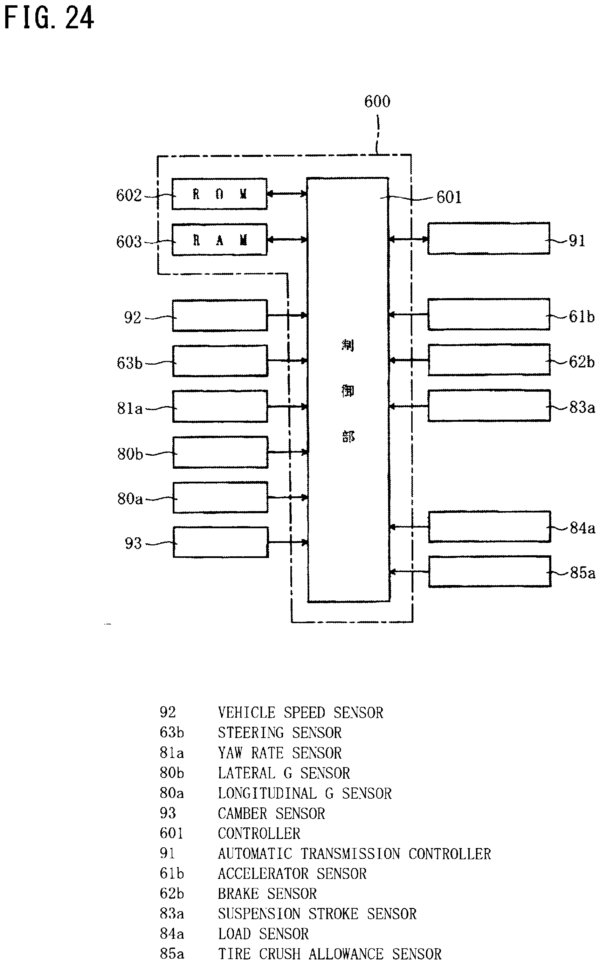

Next, a vehicle control apparatus 600 to be mounted on the vehicle 301 will be described with reference to Fig. 24. Fig. 24 is a control block diagram of the vehicle 301.

In Fig. 24, a control unit 601 is a first control device constituting a computer, to which a ROM 602 as a first memory and a RAM 603 as a second memory are connected. The automatic transmission controller 91 is a transmission controller as a second control device. A vehicle speed sensor 92 is a vehicle speed detecting unit for detecting the vehicle speed, and a camber sensor 93 is a camber detecting unit for detecting the cambers given to the wheels 302RL and 302RR.

A steering sensor 63b is a steering operation quantity detecting unit as a steering quantity detecting unit that detects the steering angle as a steering quantity as the operation quantity of the steering wheel 63 (see Fig. 22). The yaw rate sensor 81a is a yaw rate detecting unit that detects the yaw rate of the vehicle 301. A lateral G sensor 80b is a first acceleration detecting unit that detects the lateral G, and a longitudinal G sensor 80a is a second acceleration detecting unit that detects the longitudinal G. An accelerator sensor 61b is an accelerator operation quantity detecting unit that detects a depressed quantity (accelerator opening) representing the operation quantity of the accelerator pedal 61. A brake sensor 62b is a brake operation quantity detecting unit that detects a depressed quantity (brake stroke) representing the operation quantity of the brake pedal 62.

To add, the accelerator sensor 61b, the brake sensor 62b and the steering sensor 63b correspond to parts of the accelerator pedal sensor device 61a, the brake pedal sensor device 62a and the steering sensor device 63a, respectively, in the first embodiment (see Fig. 3).

Suspension stroke sensors 83a are suspension detecting units that detect the strokes of suspension devices, not shown, of the wheels 302RL and 302RR. Load sensors 84a are load detecting units that detect the loads working on the wheels 302RL and 302RR. Tire crush allowance sensors 85a are tire crush allowance detecting units that detect crush allowances which are deformation quantities of the tires 302a, namely tire crush allowances. The body B, the actuators 308 and 309, the control unit 601, the wheels 302RL and 302RR and so forth constitute a camber control device. The suspension stroke sensors 83a, the load sensors 84a and the tire crush allowance sensors 85a correspond to parts of the suspension stroke sensor device 83, the vertical load sensor device 84 and the sidewall crush allowance sensor device 85, respectively, in the first embodiment (see Fig. 3).

To add, the steering sensor 63b can as well detect the steered angles of the wheels 302FL and 302FR, the steering angle speed or the like in place of the steering angle as a steering quantity. The accelerator sensor 61b can as well detect the depressing speed, the depressing acceleration or the like in place of the depressing quantity of the accelerator pedal 61 as representing the operation quantity of the accelerator pedal 61. The brake sensor 62b can as well detect the depressing speed, the depressing acceleration or the like in place of the depressing quantity of the brake pedal 62 as representing the operation quantity of the brake pedal 62.

Further, the suspension stroke sensors 83a are configured of height sensors, magnetic sensors or the like; the load sensors 84a are configured of load cells (distortion sensors) disposed in the suspension system; and the tire crush allowance sensors 85a are configured of load cells (distortion sensors) disposed in the tires 302a.

The control unit 601 exercises overall control of the vehicle 301, and the automatic transmission controller 91 exercises overall control of the automatic transmission 304. The automatic transmission 304 is equipped with a transmission mechanism having a predetermined number of planetary gears as differential rotary devices, various frictionally engaging elements comprising clutches and brakes for selectively linking gear elements including sun gears constituting the planetary gears, ring gears and carriers and fixing predetermined gear elements to the automatic transmission case as a housing, hydraulic servos for engaging and disengaging the frictionally engaging elements, and valves for supplying engaging hydraulic pressures to the hydraulic servos among others.

And when speed change processing means, not shown, of the automatic transmission controller 91 performs speed change processing, reads in the depressed quantity of the accelerator pedal 61 (see Fig. 22), the vehicle speed and so forth, and generates a changed speed output of a predetermined gear shift out of a plurality of gear shifts on the basis of the depressed quantity, the vehicle speed and so forth, an engaging hydraulic pressure is supplied to a predetermined hydraulic servo on the basis of the changed speed output to engage or disengage frictionally engaging elements. As a result, rotation of a gear ratio corresponding to the gear shift is outputted from a predetermined gear element, and transmitted to the propeller shaft 305. To add, the gear ratio represents the ratio of the number of revolutions inputted to the automatic transmission 304 to the number of revolutions outputted from the automatic transmission 304. When the gear ratio is 1 or above, a gear shift of under-drive suitable for low-speed running is accomplished by the automatic transmission 304, or when the gear ratio is less than 1, a gear shift of over-drive suitable for high-speed running is accomplished by the automatic transmission 304.

Incidentally, while low rolling resistance tires are used as the tires 302a in this embodiment, as the tires 302a are poor in rigidity in that case, the running stability and the turning stability are correspondingly reduced. In view of this problem, in this embodiment, even though the tires 302a are low rolling resistance tires, it is judged whether or not the predetermined camber giving conditions are satisfied so that the running stability and the turning stability can be enhanced and, if the predetermined camber giving conditions are satisfied, the actuators 308 and 309 are actuated to give a predetermined negative camber θ to the wheels 302RL and 302RR.

In this case, if partial wear occurs on the tires 302a along with the running of the vehicle in a state in which the camber θ is given to the wheels 302RL and 302RR, the service lives of the tires 302a will be shortened. In view of this problem, to prevent partial wear from occurring on the tires 302a in this embodiment, it is judged whether or not the predetermined camber canceling conditions are satisfied when the vehicle 301 is running in a state in which the camber θ is given to the wheels 302RL and 302RR, and if the camber canceling conditions are satisfied, the actuators 308 and 309 are actuated to release the wheels 302RL and 302RR from the camber θ.

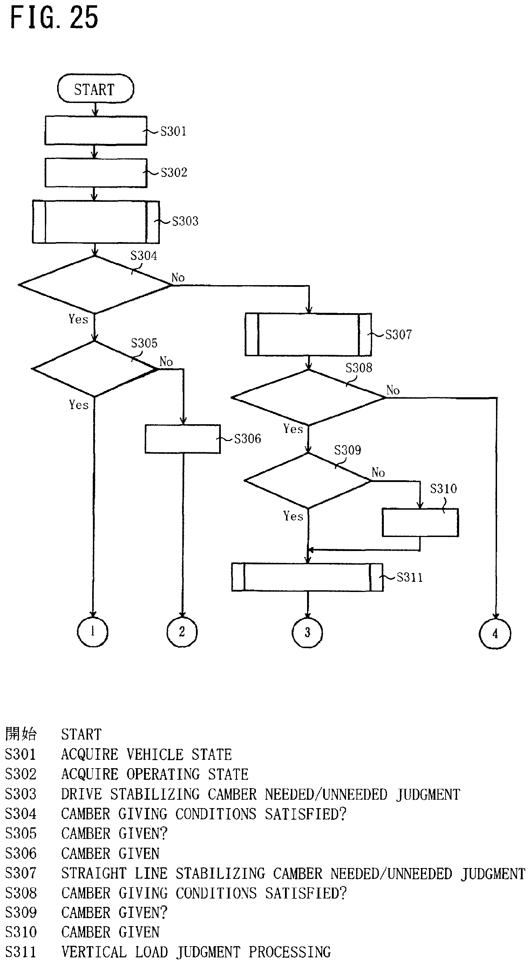

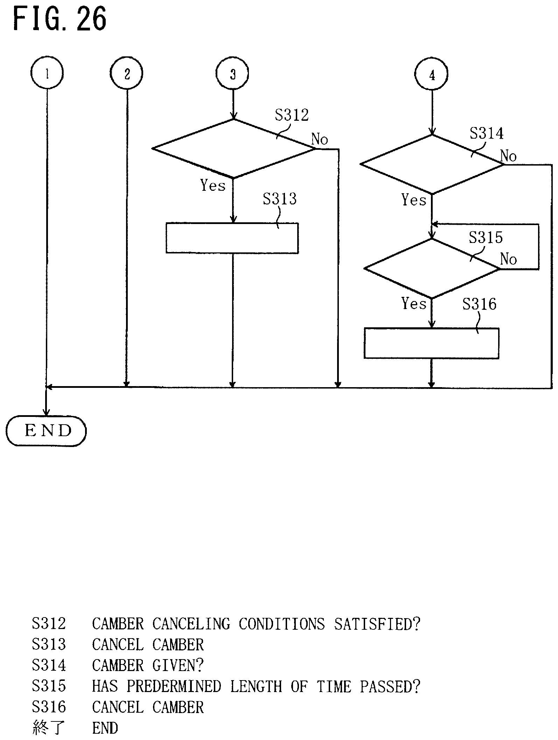

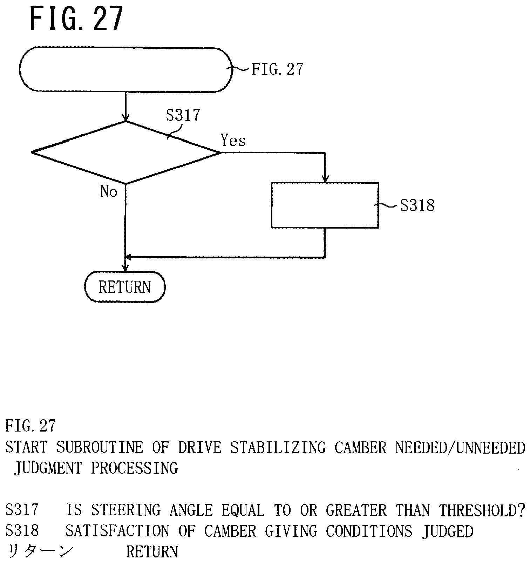

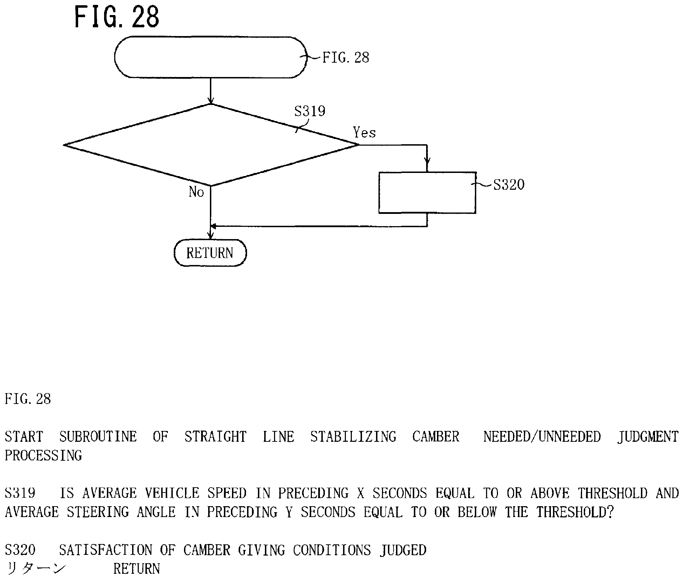

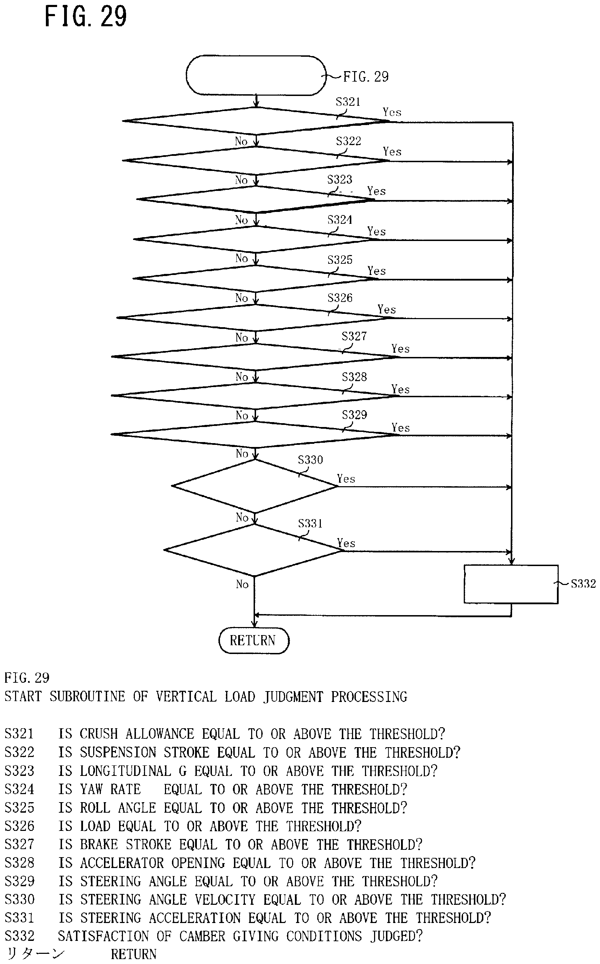

Next, the actions of the control unit 601 to give the camber θ to the wheels 302RL and 302RR and to release the wheels from the camber θ will be described. Fig. 25 is a first main flow chart showing actions of the controller 601 in the seventh embodiment of the invention; Fig. 26 is a second main flow chart showing actions of the controller 601 in the seventh embodiment; Fig. 27 shows a subroutine of drive stabilizing camber needed/unneeded judgment processing in the seventh embodiment; Fig. 28 shows a subroutine of straight line stabilizing camber needed/unneeded judgment processing in the seventh embodiment; and Fig. 29 shows a subroutine of vertical load judgment processing in the seventh embodiment.

First, judgment indicator acquiring means, not shown, of the controller 601 processes judgment indicator acquisition to acquire judgment indicators needed in giving the camber θ to the wheels 302RL and 302RR or releasing the wheels from the camber θ. In this embodiment, the vehicle state indicating the state of the vehicle 301 and the operating state indicating the state of operation of various operation units by the driver, who is the operator, are acquired as judgment indicators (S301 and S302).

For this purpose, the judgment indicator acquiring means reads in the sensor outputs of sensors including the yaw rate sensor 81a, the lateral G sensor 80b, the longitudinal G sensor 80a, the camber sensor 93, the suspension stroke sensors 83a, the load sensors 84a and the tire crush allowance sensors 85a, and acquires such vehicle state factors as the yaw rate, the lateral G, the longitudinal G, the camber θ, the suspension stroke, the load and the tire crush allowance. Also, the judgment indicator acquiring means calculates a roll angle on the basis of the suspension stroke, and acquires the roll angle as a vehicle state.

Incidentally, a roll angle sensor may as well be disposed as a roll angle detecting unit, and the roll angle can be acquired by reading in the sensor output of the roll angle sensor. Further, gear ratio acquiring means of the judgment indicator acquiring means processes gear ratio acquisition to read in gear change instructions sent from the automatic transmission controller 91 to the automatic transmission 304 and, at the time, read in from the ROM 602 gear ratios recorded in association with gear change instructions, and acquires the ratios as a vehicle state.

And the judgment indicator acquiring means reads in sensor outputs from sensors including the steering sensor 63b, the accelerator sensor 61b and the brake sensor 62b, and acquires the steering angle, the depressed quantity of the accelerator pedal 61, the depressed quantity of the brake pedal 62 and so forth as operating states. Also the judgment indicator acquiring means acquires a steering angle velocity representing the variation rate of the steering angle and a steering angle acceleration representing the variation rate of the steering angle velocity as operating states on the basis of the steering angle.

Next, drive stabilizing camber needed/unneeded judgment processing means as first camber needed/unneeded judgment processing means, not shown, of the controller 601 performs drive stabilizing camber needed/unneeded judgment processing as first camber needed/unneeded judgment processing and judges, when the vehicle 301 is turning, whether or not camber giving conditions for turning use are satisfied (S303 and S304). For this purpose, the drive stabilizing camber needed/unneeded judgment processing means reads in the steering angle and judges whether or not the steering angle is equal to or greater than a threshold γth (S317, see Fig. 27). If as a result the steering angle is found to be equal to or greater than the threshold γth (S317: Yes), it is judged that the camber giving conditions for turning use are satisfied (S318).

And if the camber giving conditions for turning use are satisfied (S304: Yes), camber judgment processing means, not shown, of the controller 601 processes camber judgment, reads in the camber θ and judges whether or not the camber θ is given to the wheels 302RL and 302RR according to whether or not the camber θ is -5[°] ≤ θ < α[°] (S305). Incidentally, the value α is a camber in a steady state preset for each individual vehicle.

If the camber θ is found given to each of the wheels 302RL and 302RR (S305: Yes), the controller 601 ends the processing or, if the camber θ is found not given (S305: No), camber control processing means, not shown, of the controller 601 processes camber control. Thus, camber giving means of the camber control processing means gives the camber and works the actuators 308 and 309 to give the camber θ -5[°] ≤ θ < α[°] to the wheels 302RL and 302RR (S306).

Then, along with the giving of the camber θ to the wheels 302RL and 302RR, camber thrusts arise on the tires 302a of the wheels 302RL and 302RR in mutually opposing directions. As a centrifugal force arises on the vehicle 301 when the vehicle 301 is to be turned leftward, the vertical load of the wheel 302RR on the outer circumferential side (outer wheel) increases, and the camber thrust arising on the tire 302a of the wheel 302RR becomes greater than the camber thrust arising on the tire 302a of the wheel 302RL on the inner circumferential side (inner wheel). Or when the vehicle 301 is to be turned rightward, the vertical load of the wheel 302RL on the outer circumferential side (outer wheel) increases, and the camber thrust arising on the tire 302a of the wheel 302RL becomes greater than the camber thrust arising on the tire 302a of the wheel 302RR on the inner circumferential side (inner wheel). Therefore, as a sufficient centripetal force can be caused to arise on the vehicle 301, even if low rolling resistance tires are used as the tires 302a, the turning stability can be enhanced.

On the other hand, if the camber giving conditions for turning use are not satisfied (S304: No) after the drive stabilizing camber needed/unneeded judgment processing (S303), straight line stabilizing camber needed/unneeded judgment processing means as second camber needed/unneeded judgment processing means, not shown, of the controller 601 and as stable running state judging means processes straight line stabilizing camber needed/unneeded judgment as second camber needed/unneeded judgment processing and as stable running state judgment processing (S307). Then, it is judged whether or not the camber giving conditions for straight line use are satisfied according to whether or not the running state of the vehicle 301 is stable when the vehicle 301 is running straight and whether or not the first and second stable running conditions are satisfied (S308).

For this purpose, the straight line stabilizing camber needed/unneeded judgment processing means reads in the vehicle speed and the steering angle. And on the basis of the vehicle speed during a predetermined length of time immediately before the vehicle speed is read in (the preceding X seconds in this embodiment) the vehicle speed count (the average vehicle speed in this embodiment) is calculated, on the basis of the steering angle during a predetermined length of time immediately before the steering angle is read in (the preceding Y seconds in this embodiment) the steering quantity count (the average steering angle in this embodiment) is calculated.

The straight line stabilizing camber needed/unneeded judgment processing means judges whether or not the average vehicle speed in the preceding X seconds is equal to or above a threshold vth1 and whether or not the average steering angle in the preceding Y seconds is equal to or below the threshold γth1 (S319, see Fig. 28) and, if the average vehicle speed in the preceding X seconds is equal to or above a threshold vth1 and the average steering angle in the preceding Y seconds is equal to or below the threshold γth1 (S319: Yes), judges that the running state of the vehicle 301 is stable and satisfies the camber giving conditions for straight line use (S320).

To add, in this embodiment, if the average vehicle speed in the preceding X seconds is equal to or above the threshold vth1, first stable running conditions are satisfied, and the average steering angle in the preceding Y seconds is equal to or below the threshold γth1, second stable running conditions are satisfied. Further, the threshold γth1 is set to be smaller than the threshold γth.

And when the camber giving conditions are satisfied (S308: Yes), the camber judgment processing means reads in the camber θ and judges whether or not the camber θ has been given to the wheels 302RL and 302RR (S309). If the camber θ has not been given to the wheels 302RL and 302RR (S309: No), the camber giving means works the actuators 308 and 309 to give the camber θ to the wheels 302RL and 302RR (S310).

Then, accompanying the giving of the camber θ to the wheels 302RL and 302RR, camber thrusts arise on the tires 302a of the wheels 302RL and 302RR in mutually opposing directions. As a result, even if low rolling resistance tires are used as the tires 302a, when external forces work on the wheels 302RL and 302RR, camber thrusts in a direction reverse to the external force increase. Therefore, the restoring force of the vehicle 301 increases, enabling the running stability to be enhanced.

Incidentally, as noted above, along with the running of the vehicle 301 in the state in which the camber θ is given to the wheels 302RL and 302RR, partial wear arises on the tires 302a and the service lives of the tires 302a are shortened. To address this problem, the vertical load judgment processing means as camber cancellation judgment processing means, not shown, of the controller 601 processes vertical load judgment as camber cancellation judgment processing to judge whether or not the camber canceling conditions are satisfied (S311 and S312).

For this purpose, the vertical load judgment processing means reads in the tire crush allowance, suspension stroke, longitudinal G, yaw rate, roll angle, load, brake stroke, accelerator opening, steering angle, steering angle velocity, steering angle acceleration and so forth as vertical load indicators, and judges whether or not the vertical load indicators are equal to or above the respective thresholds (S321 to S331, see Fig. 29). If any one of the vertical load indicators (at least the tire crush allowance in this embodiment) is equal to or above the applicable threshold (S321 to S331: Yes), it is judged that the vertical load gives rise to partial wear on the tires 302a and that camber canceling conditions are satisfied (S332).

And if the camber canceling conditions are satisfied in vertical load judgment processing, the camber cancellation judgment processing means of the camber control processing means processes camber cancellation, and works the actuators 308 and 309 to release the wheels 302RL and 302RR from the camber θ (S313).

Or if it is judged that the camber giving conditions are not satisfied after the drive stabilizing camber needed/unneeded judgment processing (S303) and the straight line stabilizing camber needed/unneeded judgment processing (S307) (S308: No), the camber judgment processing means reads in the camber θ and judges whether or not the camber θ is currently given to the wheels 302RL and 302RR (S314).

And if the camber θ is given to the wheels 302RL and 302RR (S314: Yes), the camber cancellation processing means starts time counting with a timer, not shown, as a time counting unit built into the controller 601 and, after the predetermined length of time has passed (S315: Yes), works the actuators 308 and 309 to release the wheels 302RL and 302RR from the camber θ (S316).

In this way, in this embodiment, if the average vehicle speed in the preceding X seconds is equal to or above the threshold vth1 and the average steering angle in the preceding Y seconds is equal to or below the threshold γth1, the camber θ is given to the wheels 302RL and 302RR. This means that, only when the vehicle 301 is being driven at high or medium speed on an expressway or on a trunk highway the camber θ is given to the wheels 302RL and 302RR. On the other hand when the vehicle 301 is driven at low speed elsewhere than on an expressway or a trunk highway or when an expressway or a trunk highway is congested, the camber θ is not given. Or if the camber canceling conditions are satisfied when the vehicle 301 is driven in a state in which the camber θ is given to the wheels 302RL and 302RR, the wheels 302RL and 302RR are released from the camber θ.

Therefore, as the frequency of giving the camber θ can be reduced and, moreover, the period of giving the camber θ can be shortened, occurrence of partial wear on the tires 302a can be sufficiently restrained. As a result, the service lives of the tires 302a can be extended.

Also, as the camber θ does not continue to be given to the wheels 302RL and 302RR while the vehicle 301 is driven, the rolling resistances of the tires 302a can be correspondingly reduced. Therefore, fuel efficiency can be enhanced.

To add, if the average vehicle speed in the preceding X seconds is equal to or above the threshold vth1 and the average steering angle in the preceding Y seconds is equal to or below the threshold γth1, the camber θ is given to the wheels 302RL and 302RR in this embodiment, but this is not the only possibility. For instance a vehicle mounted with a navigation system can detect its own location with a GPS sensor as a current location detecting unit, and if the vehicle is located on a road such as an expressway or a trunk highway, the average vehicle speed in the preceding X seconds is equal to or above the threshold γth1 and the average steering angle in the preceding Y seconds is equal to or below the threshold γth1, the camber θ can be given to the wheels 302RL and 302RR.

In that case, self-locating judgment processing means of a controller in the navigation system processes self-locating judgment, judges whether or not the vehicle is located on a road such as an expressway or a trunk highway on the basis of map data recorded in an information recording unit, and sends the result of judgment to the controller 601. And by the straight line stabilizing camber needed/unneeded judgment processing, if the vehicle is located on a road such as an expressway or a trunk highway, the average vehicle speed in the preceding X seconds is equal to or above the threshold vth1 and the average steering angle in the preceding Y seconds is equal to or below the threshold γth1, it is judged that the camber giving conditions are satisfied.

Or the straight line stabilizing camber needed/unneeded judgment processing means reads in traffic information and the like acquired by the navigation system from a traffic information center or elsewhere, and judges on the basis of the traffic information and the like whether or not any road is congested. If the vehicle is located on a road such as an expressway or a trunk highway, which is not congested, the average vehicle speed in the preceding X seconds is equal to or above the threshold vth1 and the average steering angle in the preceding Y seconds is equal to or below the threshold γth1, it is judged that the camber giving conditions are satisfied.

Further in this embodiment, the drive stabilizing camber needed/unneeded judgment processing means judges whether or not the steering angle is equal to or above the threshold γth and, if the steering angle is equal to or above the threshold γth, judges that the camber giving conditions are satisfied, but this is not the only possibility. For instance it is also possible to calculate the average steering angle as the steering quantity count, judge whether or not the average steering angle is equal to or above the threshold and, if the average steering angle is equal to or above the threshold, judge that the camber giving conditions are satisfied.

Or in this embodiment, the straight line stabilizing camber needed/unneeded judgment processing means judges whether or not the average vehicle speed in the preceding X seconds is equal to or above the threshold vth1 and the average steering angle in the preceding Y seconds is below the threshold γth1 and, if the average vehicle speed in the preceding X seconds is equal to or above the threshold vth1 and the average steering angle in the preceding Y seconds is below the threshold γth1, judges that the camber giving conditions are satisfied, but this is not the only possibility. For instance, it can judge whether or not the average vehicle speed in the preceding X seconds is equal to or above the threshold vth1 and the average steering angle in the preceding Y seconds did not reach or surpass the threshold and, if the average vehicle speed in the preceding X seconds is equal to or above the threshold vth1 and the average steering angle in the preceding Y seconds did not reach or surpass the threshold, judges that the camber giving conditions are satisfied.

To add, in the flow chart shown in Fig. 25, the processing to read in vertical load indicators in the processing at S311 corresponds to the vertical load information acquiring means according to Claim 1; the processing to read in the steering angle in the processing at S303 corresponds to the state quantity acquiring means, the processing at S304 corresponds to the state quantity judging means and the processing at S306 corresponds to the second camber angle adjusting means all according to Claim 2; and the processing to read in the vehicle speed and the steering angle in the processing at S307 corresponds to the running state acquiring means, the processing at S308 corresponds to the running state judging means and the processing at S310 corresponds to the third camber angle adjusting means all according to Claim 3. In the flow chart shown in Fig. 26, the processing at S312 corresponds to the vertical load judging means and the processing at S313 corresponds to the first camber angle adjusting means both according to Claim 1.

Further in the flow chart shown in Fig. 25, the processing at S308 corresponds to the stable running state judging means and the processing at S310 corresponds to the camber giving means both according to Claim 8.

Incidentally, in the straight line stabilizing camber needed/unneeded judgment processing in the seventh embodiment (see Fig. 28), it is judged that the camber giving conditions are satisfied when the average vehicle speed in the preceding X seconds is equal to or above the threshold vth1 and the average steering angle in the preceding Y seconds is below the threshold γth1 (S319: Yes), and it is judged that the camber giving conditions are not satisfied when the average vehicle speed in the preceding X seconds is below the threshold vth1 (S319: No).

However, in a road situation in which it is desirable to keep the running stability high all the time, for instance where the road traffic is heavy or when running an uphill road, even if the average vehicle speed in the preceding X seconds is below the threshold vth1, it is desirable to give the camber θ to the wheels 302RL and 302RR.

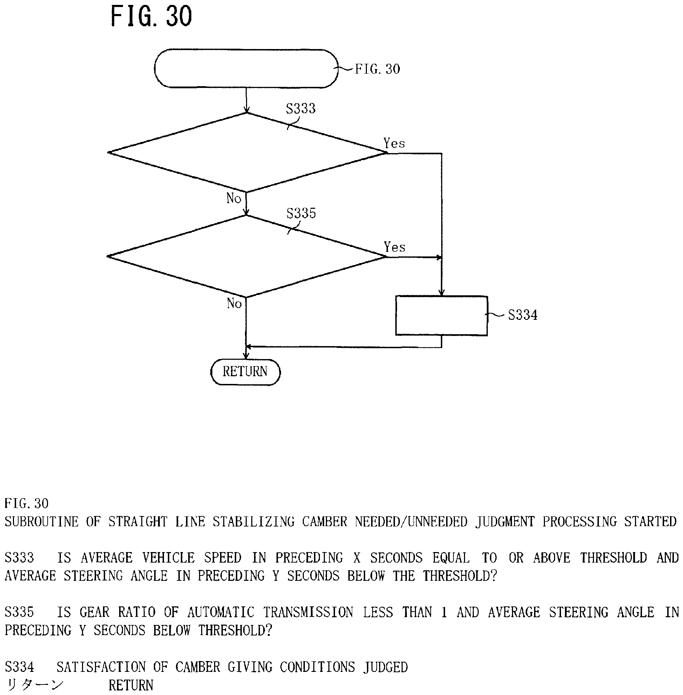

In view of this aspect, an eighth embodiment which enables the camber θ to be given to the wheels 302RL and 302RR even when the average vehicle speed in the preceding X seconds is below the threshold vth1 will be described. Incidentally, items having the same structure as in the seventh embodiment will be denoted by respectively the same reference signs, and the advantageous effects owing to the same structure will be attributed to the effects of the seventh embodiment. Fig. 30 shows a subroutine of straight line stabilizing camber needed/unneeded judgment processing in the eighth embodiment of the invention.

In this case, the straight line stabilizing camber needed/ unneeded judgment processing means as the second camber needed/unneeded judgment processing means and as the running state judging means reads in the vehicle speed and the steering angle. And it calculates the vehicle speed count (the average vehicle speed in this embodiment) on the basis of the vehicle speed during the predetermined length of time immediately before reading in the vehicle speed (the preceding X seconds in this embodiment) and at the same time calculates the steering quantity count (the average steering angle in this embodiment) on the basis of the steering angle during the predetermined length of time immediately before reading in the steering angle immediately before reading in (the preceding Y seconds in this embodiment). The straight line stabilizing camber needed/unneeded judgment processing means judges whether or not the average vehicle speed in the preceding X seconds is equal to or above the threshold vth1 and the average steering angle in the preceding Y seconds is below the threshold γth1 (S333), and it judges that the running state of the vehicle 301 is stable and the camber giving conditions for straight running are satisfied (S334) if the average vehicle speed in the preceding X seconds is equal to or above the threshold vth1 and the average steering angle in the preceding Y seconds is below the threshold γth1 (S333: Yes).

Or if the average vehicle speed in the preceding X seconds is below the threshold vth1 and the average steering angle in the preceding Y seconds is equal to or above the threshold γth1 (S333: No), the straight line stabilizing camber needed/unneeded judgment processing means reads in the gear ratio and the average steering angle of the automatic transmission 304 and judges whether or not the gear ratio is less than 1 and the average steering angle in the preceding Y seconds is below the threshold γth1 (S335). If as a result the gear ratio is less than 1 and the average steering angle in the preceding Y seconds is below the threshold γth1 (S335: Yes), judges that the running state of the vehicle 301 is stable and the camber giving conditions are satisfied (S334).

And if the gear ratio is equal to or above 1 or the average steering angle in the preceding Y seconds is equal to or above the threshold γth1 (S335: No), the straight line stabilizing camber needed/unneeded judgment processing means ends the processing. To add, in this embodiment, the first stable running conditions are satisfied when the average vehicle speed in the preceding X seconds is equal to or above the threshold vth1, the second running conditions are satisfied when the average steering angle in the preceding Y seconds is below the threshold γth1, and the third running conditions are satisfied when the gear ratio is less than 1.

In this way, as it is judged that the camber giving conditions are satisfied and the camber θ is given to the wheels 302RL and 302RR, even when the average vehicle speed in the preceding X seconds is below the threshold vth1, if the gear ratio is less than 1 and the average steering angle in the preceding Y seconds is below the threshold γth1, it is possible to keep the running stability high all the time in a road situation in which the road traffic is heavy or when running an uphill road.

To add, though it is judged in this embodiment whether or not the second and third stable running conditions are satisfied after judging whether or not the first and second stable running conditions are satisfied, it is also possible to judge whether or not the first to third stable running conditions are satisfied, and then judge that the camber giving conditions are satisfied if the first stable running conditions or the third stable running conditions are satisfied and the second stable running conditions are satisfied.

Incidentally in the seventh embodiment, it is judged in the straight line stabilizing camber needed/unneeded judgment processing that the camber giving conditions are satisfied when the average vehicle speed in the preceding X seconds is equal to or above the threshold vth1 and the average steering angle in the preceding Y seconds is below the threshold γth1, and it is judged that the camber giving conditions are not satisfied if, for instance, the average steering angle in the preceding Y seconds is equal to or above the threshold γth1.

However, in a road situation in which it is desirable to keep the running stability high continuously, for instance where a curve with a relatively large radius of curvature continues or when the steering wheel 63 (see Fig. 22) is operated to a great extent to temporarily avoid unevenness or the like on the road, it is desirable to give the camber θ to the wheels 302RL and 302RR even if the average steering angle in the preceding Y seconds is equal to or above the threshold γth1.

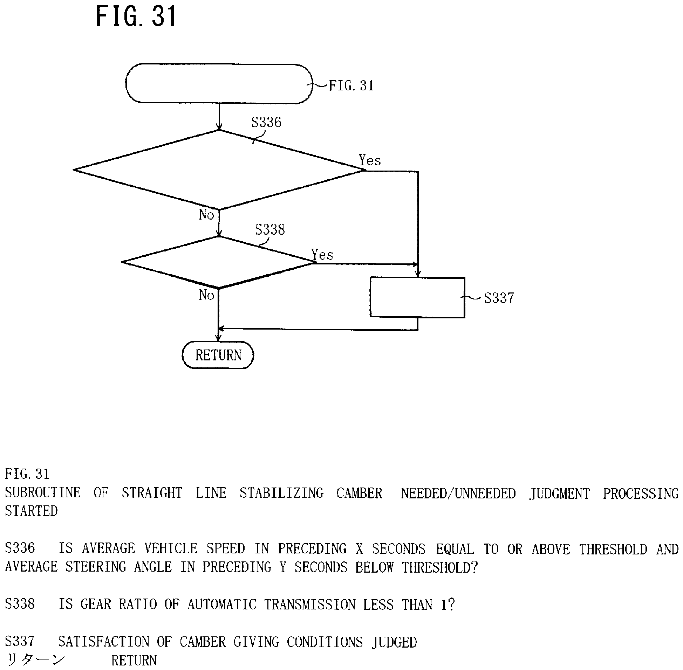

In view of this point, a ninth embodiment of the invention in which the camber θ can be given to the wheels 302RL and 302RR even if the average steering angle in the preceding Y seconds is equal to or above the threshold γth1 will be described. Incidentally, items having the same structure as in the seventh embodiment and the eighth embodiment will be denoted by respectively the same reference signs, and the advantageous effects owing to the same structure will be attributed to the effects of those embodiments. Fig. 31 shows a subroutine of straight line stabilizing camber needed/unneeded judgment processing in the ninth embodiment of the invention.

In this case, the straight line stabilizing camber needed/ unneeded judgment processing means as second camber needed/unneeded judgment processing means and as stable running judgment processing means reads in the vehicle speed and the steering angle. And it calculates the vehicle speed count (the average vehicle speed in this embodiment) on the basis of the vehicle speed in the predetermined length of time immediately before reading in the vehicle speed (the preceding X seconds in this embodiment) and at the same time calculates the steering quantity count (the average steering angle in this embodiment) on the basis of the steering angle in the predetermined length of time immediately before reading in the steering angle (the preceding Y seconds in this embodiment). The straight line stabilizing camber needed/unneeded judgment processing means judges whether or not the average vehicle speed in the preceding X seconds is equal to or above the threshold vth1 and the average steering angle in the preceding Y seconds is below the threshold γth1 (S336), and judges that the running state of the vehicle 301 is stable and the camber giving conditions for straight running are satisfied (S337) if the average vehicle speed in the preceding X seconds is equal to or above the threshold vth1 and the average steering angle in the preceding Y seconds is below the threshold γth1 (S336: Yes).

Or if the average vehicle speed in the preceding X seconds is below the threshold vth1 and the average steering angle in the preceding Y seconds is equal to or above the threshold γth1 (S336: No), the straight line stabilizing camber needed/unneeded judgment processing means reads in the gear ratio of the automatic transmission 304 (see Fig. 22), judges whether or not the gear ratio is below 1 (S338) and, if the gear ratio is below 1 (S338: Yes), judges that the running state of the vehicle 301 is stable and the camber giving conditions for straight running are satisfied (S337).

And if the gear ratio is equal to or above 1 (S338: No), the straight line stabilizing camber needed/unneeded judgment processing means ends the processing. To add, in this embodiment, the first stable running conditions are satisfied when the average vehicle speed in the preceding X seconds is equal to or above the threshold vth1, the second stable running conditions are satisfied when the average steering angle in the preceding Y seconds is below the threshold γth1, and the third stable running conditions are satisfied when the gear ratio is less than 1.

In this way, even if the average steering angle in the preceding Y seconds is equal to or above the threshold γth1, it is judged that the camber giving conditions are satisfied if the gear ratio is less than 1 and the camber θ is given to the wheels 302RL and 302RR, with the result that, for instance where a curve with a relatively large radius of curvature continues or when the steering wheel 63 is operated to a great extent to temporarily avoid unevenness or the like on the road, it is possible to continuously keep the running stability high.

Though it is judged in this embodiment whether or not the third stable running conditions are satisfied after judging whether or not the first and second stable running conditions are satisfied, it is also possible to judge whether or not the first to third stable running conditions are satisfied, and then judge that the camber giving conditions are satisfied if the first stable running conditions or the second stable running conditions are satisfied and the third stable running conditions are satisfied.

Further in this embodiment the straight line stabilizing camber needed/unneeded judgment processing is accomplished on the basis of the gear ratio of the automatic transmission 304, it is also possible to perform the straight line stabilizing camber needed/unneeded judgment processing on the basis of the gear ratio of such other transmissions as a continuously variable transmission or a manual transmission.

In the case of a continuously variable transmission, the gear ratio acquiring means reads in gear change instructions sent to the continuously variable transmission from a continuously variable transmission controller as a transmission controller, at the same time reads in from the ROM 602 gear ratios recorded in association with gear change instructions, and acquires them as a vehicle state. Or in the case of a manual transmission, the gear ratio acquiring means reads in signals representing gear ratios from a shift lever or the like as a speed change device, and acquires them as a vehicle state.

Although the invention has been described so far with reference to embodiments thereof, the invention is in no way limited to these embodiments, but it can be readily inferred that various improvements and modifications are possible without deviating from the intent of the invention.

Numerical values cited in connection with these embodiments are mere examples, and some other values can obviously be used as well. For instance, the values of the first camber angle and the second camber angle described with reference to these embodiments can be set as desired.

Regarding these embodiments, cases in which whether or not the state quantities of the vehicle 1, 201 or 301 satisfy predetermined conditions is judged on the basis of the operation quantities of the accelerator pedal 61, the brake pedal 62 and the steering wheel 63 were described, but the possibility is not limited to these cases, but whether or not the state quantities of the vehicle 1, 201 or 301 satisfy predetermined conditions can obviously be judged on the basis of some other state quantities in place of the operation quantities of the accelerator pedal 61, the brake pedal 62 and the steering wheel 63. Such other state quantities may be, for instance, indicators of the states of operational members operated by the driver, such as the operating velocities and the operation accelerations of the pedals 61 and 62 and of the steering wheel 63, or what represents the state of the vehicle 1, 201 or 301 itself. Exemplary indicators of the states of the vehicle 1, 201 or 301 include the longitudinal G, the lateral G, the yaw rate, the roll angle and so forth of the vehicle 1, 201 or 301.

Regarding the embodiments described above, cases in which whether or not the running state of the vehicle 1, 201 or 301 is stable (in the predetermined straight line state) is judged on the basis of the running speed of the vehicle 1, 201 or 301 and the operation quantity of the steering wheel 63 were described, but the possibility is not limited to these cases; whether or not the running state of the vehicle 1, 201 or 301 is stable can be judged only on the basis of the operation quantity of the steering wheel 63. Or, whether or not the running state of vehicle 1, 201 or 301 can as well be judged on the basis of the operating state of the steering wheel 63 in place of the operation quantity of the steering wheel 63, the operating velocity of the steering wheel 63 or the operation acceleration; or whether or not the running state of vehicle 1, 201 or 301 can also be judged on the basis of the state quantity of the vehicle 1, 201 or 301 itself, such as the lateral G or the yaw rate of the vehicle 1, 201 or 301.

Or it is obviously possible to judge whether or not the running state of the vehicle 1, 201 or 301 is stable on the basis of some other information in place of the running speed of the vehicle 1, 201 or 301 or the operation quantity of the steering wheel 63. Such other information includes information acquired by the navigation system cited as an example of another input/output device 90, which may be the current position of the vehicle 1, 201 or 301 located on a straight road in a predetermined section, such as on an expressway or a trunk highway on map data, where the vehicle 1, 201 or 301 is expected to run straight. In this case, in a situation in which a curve lies ahead of a straight road or a right or left turn is required, the camber angle adjuster 44 or 244 or the actuators 308 and 309 need not be operated every time the vehicle 1, 201 or 301 makes a turn, thereby preventing frequent switching-over of the camber angle.

In each of the embodiments described above, state quantity judgment processing to judge where or not the state quantities of the vehicle 1 or 201 satisfy the predetermined conditions used as the criteria of judgment on the operation quantities as to whether or not the operation quantity of the accelerator pedal 61, the operation quantity of the brake pedal 62 and the operation quantity of the steering wheel 63 are equal to or greater than the respectively predetermined operation quantities are limit values beyond which the wheels 2 or 202 may slip when the vehicle 1 or 201 accelerates, brakes or turns in the state in which the camber angles of the wheels 2 or 202 are the second camber angle, but this is not the only possibility. For instance, the setting may as well be simply based on state quantities of the vehicle 1 or 201 (e.g. the operation quantities of the pedals 61 and 62, the operation quantity of the steering wheel 63 and so forth).

Further regarding the cited embodiments, in the partial wear load judgment processing to judge whether or not the vertical loads of the wheels 2, 202 or 302 are partial wear loads, the criteria of judgment as to whether or not the expansion/contraction quantities of the suspensions 4, the longitudinal G, the lateral G, the yaw rate and roll angle of the vehicle 1, 201 or 301, or the vertical load and the crush allowance of the tire sidewall of each wheel 2, 202 or 302, the operation quantity of the accelerator pedal 61, the operation quantity of the brake pedal 62, the operation quantity of the steering wheel 63, the operating velocity and the operation acceleration are equal to or below the respectively predetermined values are fixed values stored in advance in the ROM 72, but this is not the only possibility; for instance the weather condition and the road surface situation may be acquired, and the criteria of judgment may be modified according to the acquired weather condition and road surface situation. In this case, it can be judged more precisely whether or not the vertical loads of the wheels 2, 202 or 302 are partial wear loads, and partial wear of tires can be restrained on that basis.

Although description was dispensed with regarding the embodiments cited above, in the processing at S53, S253, S119 and S122 in the camber control processing (see Fig. 7, Fig. 11 and Fig. 21), when each wheel 2 or the left and right rear wheels 202RL and 202RR are to be released from negative cambers, the release may be executed after the lapse of a predetermined length of time (e.g. 3 seconds). In this case, the camber angle adjuster 44 or 244 need not be actuated every time the vehicle 1 or 201 makes a turn in a road situation in which the vehicle 1 or 201 has to make frequent turns, such as on a mountainous road, and accordingly frequent switching-over of the camber angle can be prevented.

The foregoing description of the fourth embodiment, the fifth embodiment and the sixth embodiment referred to a case in which vertical loads during a predetermined period or the variation magnitudes of the vertical loads are taken into account as state values in the partial wear load judgment processing in addition to the judgment that the vertical loads of the wheels 2 or 202 are equal to or greater than the predetermined vertical load. However, this is not the only possibility, but it is also possible to use other state values that can replace the vertical loads of the wheels 2 or 202.

Such other state values include, for instance, the expansion/contraction quantities of the suspensions 4 detected by the suspension stroke sensor device 83 or 283, the longitudinal G and the lateral G detected by the acceleration sensor device 80, the yaw rate detected by the yaw rate sensor device 81, the roll angle detected by the roll angle sensor device 82, the crush allowance of the tire sidewall detected by the sidewall crush allowance sensor device 85 or 285, the operation quantity of the accelerator pedal 61 detected by the accelerator pedal sensor device 61a, and the operating velocity of the steering wheel 63 or the operation acceleration detected by the steering sensor device 63a. These state values can be used individually or in combination.

Description of the fourth embodiment above took up the case of comparing a state value (vertical load) within a predetermined period and a preset threshold, but this is not the only possibility; some other form can also be used. Available other forms include, for instance, averaging state values (vertical loads) within a predetermined period and comparing sampled state values with this average used as a threshold.

Regarding the camber control processing in the sixth embodiment described above, a case in which, when the vertical loads of the wheels 2 are judged to be equal to or greater than the predetermined vertical load, the camber angles of the front wheels 2FL and 2FR are adjusted to the second camber angle was described, but this is not the only possibility, and it is obviously possible to adjust the camber angles of the rear wheels 2RL and 2RR to the second camber angle while maintaining the camber angles of the front wheels 2FL and 2FR at the first camber angle. Thus, in a vehicle in which the loads on the side of the rear wheels 2RL and 2RR are greater than the loads on the side of the front wheels 2FL and 2FR, such as a rear wheel-drive vehicle that runs on the driving force of the rear wheels 2RL and 2RR or a vehicle whose wheel running gear 3 is mounted on the side of the rear wheels 2RL and 2RR, the rear wheels 2RL and 2RR are more susceptible to wear than the front wheels 2FL and 2FR. In such a case, the stability of the vehicle can be ensured with the front wheels 2FL and 2FR, while preventing the rear wheels 2RL and 2RR from suffering partial wear, by adjusting the camber angles of the front wheels 2FL and 2FR to the second camber angle.

Also in the sixth embodiment described above, it is possible to judge which of the front wheels 2FL and 2FR and the rear wheels 2RL and 2RR have vertical loads equal to or greater than the predetermined vertical load and to subject whichever of the front wheels 2FL and 2FR or the camber angles of the rear wheels 2RL and 2RR having vertical loads judged to be equal to or greater than the predetermined vertical load to adjustment to the second camber angle. For instance, when the vehicle 1 is braked, there is seen a tendency for the vertical loads of the front wheels 2FL and 2FR to be greater than the vertical loads of the rear wheels 2RL and 2RR and, when the vehicle 1 is accelerated, for the vertical loads of the rear wheels 2RL and 2RR to be greater than the vertical loads of the front wheels 2FL and 2FR. By switching over the wheels 2 whose camber angle is to be adjusted to the second camber angle according to the situation, partial wear of the wheels 2 can be effectively prevented.

Regarding the first embodiment through the ninth embodiment described above, a case in which negative cambers are to be given to the front wheels 2FL and 2FR and the rear wheels 2RL and 2RR (or 202RL and 202RR or 302RL and 302RR) and a case in which negative cambers are to be given to the rear wheels 2RL and 2RR (or 202RL and 202RR or 302RL and 302RR) were described, but these are not the only possibilities. Instead of giving negative cambers to the rear wheels 2RL and 2RR or giving negative cambers to the rear wheels 2RL and 2RR, positive cambers can as well be given to the front wheels 2FL and 2FR by adjusting the camber angles of the front wheels 2FL and 2FR.

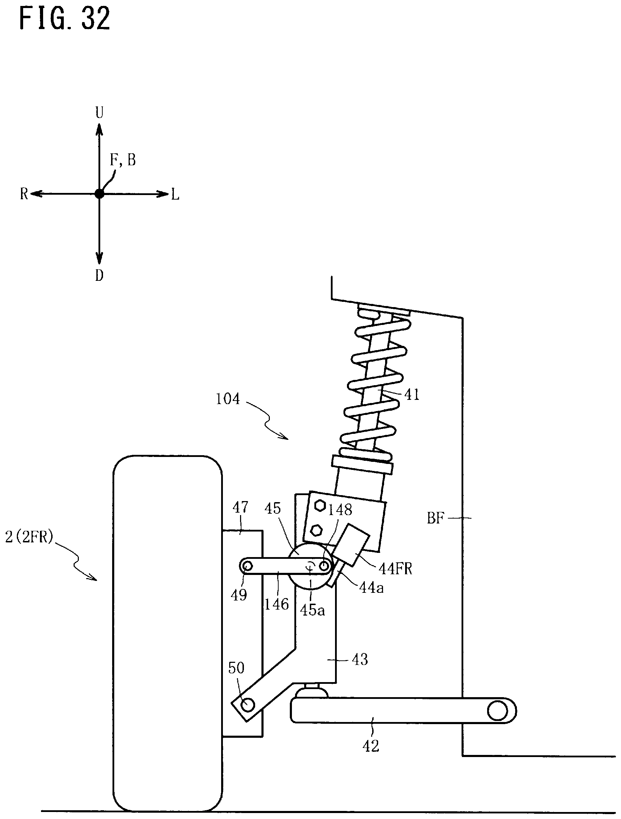

Hereupon, a detailed configuration of a suspension 104 for giving positive cambers to the front wheels 2FL and 2FR will be described with reference to Fig. 32. Fig. 32 shows a front view of the suspension 104. Incidentally, only the configurational part that is to function as a camber angle adjusting mechanism will be described, and a description of the configurational part that is to function as a suspension as such will be dispensed with because it is the same as a known configuration. Also, as the configuration of the suspension 104 is common between the left and right front wheels 2FL and 2FR, a suspension 104 matching the right front wheel 2FR is shown in Fig. 32 as a typical example. However, illustration of drive shafts 31 and some other elements is dispensed with in Fig. 32 to facilitate understanding. Further, the same constituent parts as in the first embodiment will be denoted by respectively the same reference signs, and their detailed description will be dispensed with.

An arm 146 transmits the driving force of the FR motor 44FR transmitted from the worm wheel 45 to the moving plate 47 and, as shown in Fig. 32, one end (right side in Fig. 32) is linked via a first coupling shaft 148 to a position eccentric from the rotation shaft 45a of the worm wheel 45 and the other end (left side in Fig. 2) is linked via the second coupling shaft 49 to the upper end (upper side in Fig. 32) of the moving plate 47.

The suspension 104 so functions that, when the FR motor 44FR is driven, the worm wheel 45 turns and the rotational motion of the worm wheel 45 is converted into a linear motion of the arm 146. The resultant linear motion of the arm 146 causes the moving plate 47 to oscillate around the camber shaft 50 as a shaft of oscillation to adjust the camber angles of the wheels 2.

To add, in this embodiment the camber angles of the wheels 2 are so adjusted as to take on either the first camber state in which the coupling shafts 148 and 49 and the rotation shaft 45a of the worm wheel 45 are positioned along a straight line in the direction from the body frame BF to the wheels 2 (in the direction of arrow R) in the order of the rotation shaft 45a, the first coupling shaft 148 the second coupling shaft 49 or the second camber state (the state shown in Fig. 32) in which the shafts are positioned along a straight line in the order of the first coupling shaft 148, the rotation shaft 45a and the second coupling shaft 49 are positioned along a straight line. As a result, in the state in which the camber angles of the wheels 2 are adjusted and, even if an external force works on the wheels 2, no force to rotate the arm 146 is generated, enabling the camber angles of the wheels 2 to be maintained.

Further in this embodiment, the camber angles of the wheels 2 are adjusted to a predetermined angle in the plus direction (the first camber angle) in the first camber state to give positive cambers to the wheels 2. On the other hand, in the second camber state (the state shown in Fig. 32), the camber angles of the wheels 2 are adjusted to 0° (the second camber angle). The front wheels 2FL and 2FR (wheels 2) are adjusted to a predetermined angle in the plus direction to give positive cambers to the front wheels 2FL and 2FR, the running stability of the vehicle 1 can be secured by utilizing the generated camber thrusts.

Although description was dispensed with respect to each individual embodiment, some or all of the wheels 2, 202 or 302 of the vehicle 1, 201 or 301 in each embodiment may be replaced with some or all of the wheels 2, 202 or 302 in another embodiment. For instance, the wheels 2 of the vehicle 1 in the first embodiment controlled by the vehicle control apparatus 100 may be replaced with the wheels 202 of the vehicle 201 in the second embodiment.

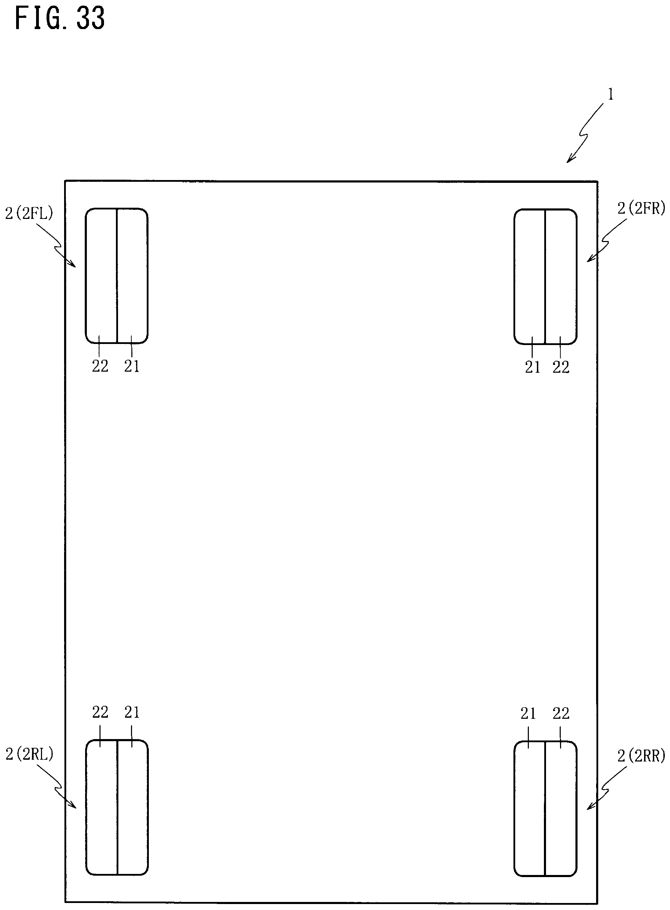

Although a case in which all the wheels 2 of the vehicle 1 to be controlled by the vehicle control apparatus 100 are configured to have the same shape and characteristics and their tread widths are the same was described above with regard to the first embodiment, this is not the only possibility. For instance, as shown in Fig. 33, the configuration may have two kinds of treads including a first tread 21 and a second tread 22. In this case, for each wheel 2, it is desirable that, while the first tread 21 is arranged on the inner side of the vehicle 1 and the second tread 22 is arranged on the outer side of the vehicle 1, the second tread 22 is composed of a harder material than the first tread 21 and the first tread 21 is configured to have a characteristic of greater gripping force (high grip characteristic) than the second tread 22, the second tread 22 is configured to have a characteristic of a lower rolling resistance (low rolling characteristic) than the first tread 21. This enables, by adjusting the camber angles of the wheels 2 to the first camber angle to give negative cambers to the wheels 2, the first tread 21 to exert its high grip characteristic to secure the running stability of the vehicle 1. On the other hand, by adjusting the camber angles of the wheels 2 to the second camber angle and releasing the wheels 2 from negative cambers, the second tread 22 is enabled to exert its low rolling characteristic to save fuel consumption. Incidentally, Fig. 33 is a diagram schematically showing the vehicle 1.

Regarding the second embodiment, as a technique to make the left and right rear wheels 202RL and 202RR have lower rolling resistance than the left and right front wheels 202FL and 202FR, an instance of making the tread width of the left and right rear wheels 202RL and 202RR narrower that that of the left and right front wheels 202FL and 202FR was described, but this is not the only possibility and other techniques can be applied as well.

Other conceivable techniques include a first technique by which the treads of the left and right rear wheels 202RL and 202RR are configured to have a lower rolling resistance characteristic (low rolling resistance) than the treads of the left and right front wheels 202FL and 202FR while configuring the treads of the left and right rear wheels 202RL and 202RR of a harder material than the treads of the left and right front wheels 202FL and 202FR and configuring the treads of the left and right front wheels 202FL and 202FR to have a higher gripping force (high grip characteristic) than the treads of the left and right rear wheels 202RL and 202RR, a second technique by which the tread pattern of the left and right rear wheels 202RL and 202RR is made lower in rolling resistance than the tread pattern of the left and right front wheels 202FL and 202FR (e.g. the tread pattern of the left and right rear wheels 202RL and 202RR is made a lug type or a block type and the tread pattern of the left and right rear wheels 202RL and 202RR is made a rib type), a third technique by which the air pressure of the left and right rear wheels 202RL and 202RR is set higher than that of the left and right front wheels 202FL and 202FR, a fourth technique by which the tread thickness of the left and right rear wheels 202RL and 202RR is made thinner than the tread thickness of the left and right front wheels 202FL and 202FR, and a fifth technique which combines some or all of these first through fourth techniques and a technique used in the second embodiment (differentiation of the tread width).

Regarding the second embodiment, a case of setting the tread width of the left and right rear wheels 202RL and 202RR narrower than the tread width of the left and right front wheels 202FL and 202FR was described, but this is not the only possibility; the tread width of the left and right rear wheels 202RL and 202RR may as well be set equal to the tread width of the left and right front wheels 202FL and 202FR. In this case, too, by combining some or all of the first through fourth techniques, the left and right rear wheels 202RL and 202RR can be set lower in rolling resistance than the left and right front wheels 202FL and 202FR. Therefore, ensuring the running stability of the vehicle 1 and fuel saving can be compatibly achieved.

Further regarding the second embodiment, a case of setting the tread width of the left and right rear wheels 202RL and 202RR narrower than the tread width of the left and right front wheels 202FL and 202FR was described, and it is desirable to configure the tread width of the left and right rear wheels 202RL and 202RR in the following way in addition to this feature. Thus, it is desirable to make the quotient (L/R) of the division of the tire width L (in mm) by the tire external diameter R (in mm) larger than 0.1 and smaller than 0.4 (0.1 < L/R < 0.4), and even more desirable to make it larger than 0.1 and smaller than 0.3 (0.1 < L/R < 0.3). This enables the rolling resistance to be reduced while ensuring the running stability of the vehicle 201 and fuel efficiency to be further enhanced. Incidentally, the tread width is made greater than the rim width and smaller than the tire width.

Regarding the second embodiment, a case of setting the tread width of the left and right rear wheels 202RL and 202RR narrower than the tread width of the left and right front wheels 202FL and 202FR was described. The method of setting the tread width of the left and right rear wheels 202RL and 202RR in this case will now be described.

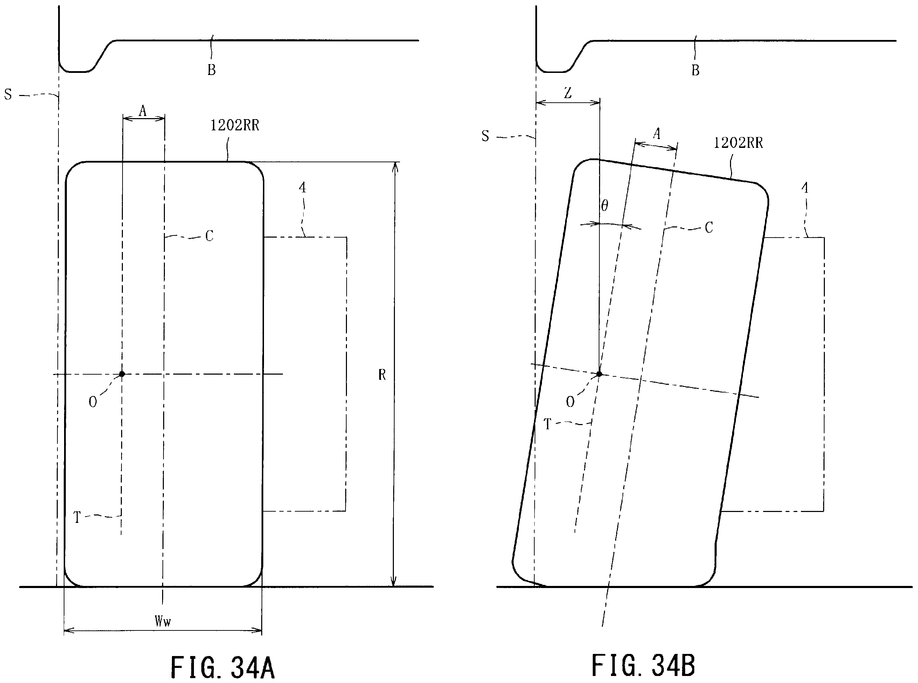

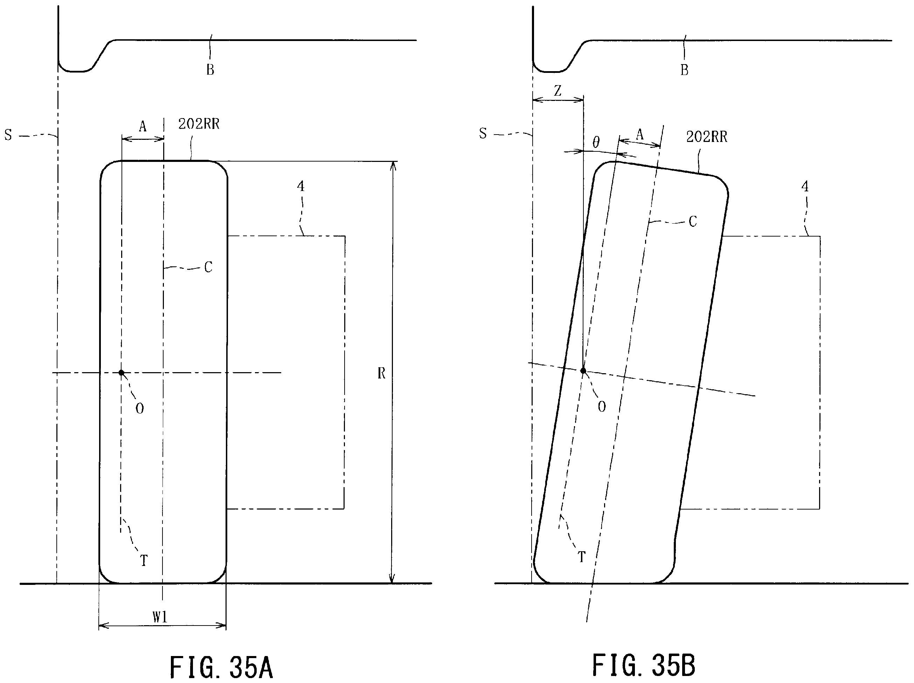

Fig. 34 (a) and Fig. 34 (b) show front views of rear wheels 1202RL and 1202RR supported by the suspensions 4, and Fig. 35 (a) and Fig. 35 (b) show front views of rear wheels 202RL and 202RR supported by the suspensions 4. To add, these drawings including Fig. 34 (a) through Fig. 35(b) show front views matching Fig. 2; they illustrate only the right rear wheels 1202RR and 202RR, and illustration of the suspensions 4 is simplified. Further in Fig. 34 (a) through Fig. 35 (b), a vertical line (in the direction of arrow U-D; see Fig. 2) passing the contour of the body B is represented by two-dot chain lines as contour line S passing the external shape of the body B (namely lines representing the total width of the vehicle 201).

The rear wheels 1202RL and 1202RR are wheels configured to have the same width as the front wheels 202FL and 202FR described with regard to the second embodiment. The vehicle 201 here is a vehicle in whose configuration the extraction/contraction function of the RL and RR motors 44RL and 44RR is added to only the rear wheel side suspensions 204 to make them the suspensions 4 unlike in the conventional vehicle in which all the front and rear wheels 202 are supported by the suspensions 204. Therefore, in the vehicle 201 the rear wheels 1202RL and 1202RR are fitted so as not to protrude out of the contour line S (namely satisfy the pertinent safety standards) at least when the camber angle is a constant angle (= 0°) as shown in Fig. 34 (a).

However, when control to adjust the camber angles of the rear wheels 1202RL and 1202RR was to be performed, there was a problem that, as shown in Fig. 34 (b), the rear wheels 1202RL and 1202RR protruded out beyond the contour line S and thereby failed to satisfy the safety standards. For this reason, there was a further problem that the adjustable range of the camber angles of the rear wheels 1202RL and 1202RR was limited to make it impossible to give sufficient camber angles.

In this case, it is conceivable to secure a sufficient adjustable range of camber angles by shifting the positions of arranging the suspensions 4 themselves deeper inside the vehicle 201 (rightward in Fig. 34 (a)), but this requires a substantial change in the structure of the vehicle 201, and this entails an increased cost and is therefore unrealistic. On the other hand, it is made possible to give relatively large camber angles to the rear wheels 1202RL and 1202RR by shifting the wheel offset of the rear wheels 1202RL and 1202RR toward the outside of the vehicle 201 (leftward in Fig. 34 (a)) from the wheel center line C without have to change the structure of the vehicle 201. In this case, however, as the rear wheels 1202RL and 1202RR themselves are as much shifted deeper inside the vehicle 201 as the shift of the wheel offset, interference with the body B is unavoidable.

In view of this problem, the present applicant conceived a configuration in which, as shown in Fig. 35 (a) and Fig. 35 (b), a sufficient adjustable range of the camber angles can be secured by narrowing the tire width Wl of the rear wheels 202RL and 202RR while making unnecessary any major structural change in the conventional vehicle (the vehicle 201) and satisfying the safety standards.

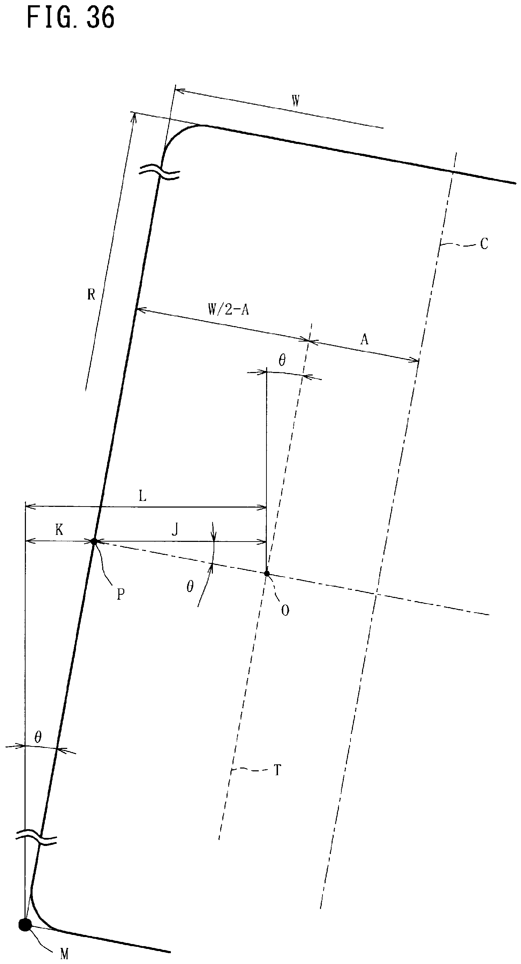

A method of setting the tire width Wl of the rear wheels 202RL and 202RR will be described with reference to Fig. 34 (a) through Fig. 36. Fig. 36 is a diagram schematically showing the wheel supported by the suspension 4, wherein a state in which a negative camber of the camber angle θ is given is illustrated.

As shown in Fig. 36, the width of the wheel is predetermined as the tire width W, the radius as the tire radius R, and the distance from the tire center line (wheel center line) C to the wheel bearing surface T as the wheel offset A. In this case, a distance L, which is a distance in the horizontal direction from the tire outer end M, where the wheel protrudes farthest outward to the origin O, which is the intersection between the rotational shaft of the wheel and the wheel bearing surface T, is calculated in the following way.

Thus, as shown in Fig. 36, since the distance between a position P which is the intersection between the rotational shaft of the wheel and the outer surface of the wheel, and the origin O is the balance of the subtraction of the half of the tire width W by the wheel offset A (W/2-A), the distance J which is the distance from the position P to the origin O in the horizontal direction is represented by J = (W/2-A)- cos θ in trigonometric ratio.

On the other hand, as the distance between the position P and the tire outer end M is a value equal to the tire radius R (R/2), the distance K, which is the distance between the tire outer end M and the position P in the horizontal direction is represented by K = (R/2)·sin θ in trigonometric ratio.

As the distance L accordingly is the sum of the distance J and the distance K, these elements are added to give L = (W/2-A)·cos θ + (R/2)·sin θ. This relation can be rewritten as follows with focus on the tire width W, W = 2A
- R·tan θ + 2L/cos θ.

In order for the tire outer end M of the wheel not to protrude outside the contour line S of the vehicle 201 and for the safety standards to be satisfied, the distance L should be shorter than a distance Z, which is the distance in the horizontal direction from the position P to the origin O (see Fig. 34 (b) and Fig. 35 (b)). Therefore, by fitting the maximum value of the distance L (namely the distance Z) and the maximum value of the camber angle θ to be given to the wheel (e.g. 3°) into the foregoing equation that determines the tire width W, the maximum value of the tire outer width W can be determined.

Thus, regarding the rear wheels 1202RL and 1202RR shown in Fig. 34 (a) and Fig. 34 (b), the maximum camber angle at which the tire outer end M does not protrude outside beyond the contour line S being represented by θw, that tire width Ww will be W = 2A - R·tan θw + 2Z/cosθW and, regarding the rear wheels 202RL and 202RR shown in Fig. 35(a) and Fig. 35 (b), the maximum camber angle at which the tire outer end M does not protrude outside beyond the contour line S being represented by θl, that tire width Wl will be W = 2A - R·tan θl + 2Z/cosθl.

To add, the tread width of each wheel is set within a range where it does not surpass the tire width W. Incidentally, the minimum value of the tire width W is a value twice as large as the wheel offset A because the tire outer end M cannot be arranged farther inside the wheel bearing surface T.

As hitherto stated, by using the foregoing equation defining the tire width W, the maximum value of the camber angle θ to be given to the wheel can be increased by narrowing the tire width W of the wheel (namely the tread width). As described with regard to the second embodiment, by setting the tread width of the rear wheels 202RL and 202RR (the tire width W) narrower than the tread width of the front wheels 202FL and 202FR, substantial restructuring of the existing vehicle (the vehicle 201) can be made unnecessary, a sufficient adjustable range of the camber angles for the rear wheels 202RL and 202RR can be secured while satisfying the safety standards.

To add, as the tread width of the front wheels 202FL and 202FR can be expanded in this case, the braking force can be strengthened. Especially in the second embodiment wherein the front wheels 202FL and 202FR serve as driving wheels, the acceleration performance can be enhanced. On the other hand, by making the tread width of the rear wheels 202RL and 202RR narrower than the tread width of the left and right front wheels 202FL and 202FR, the rolling resistance of these rear wheels 202RL and 202RR can be made lower than the rolling resistance of the front wheels 202FL and 202FR with a corresponding saving in fuel consumption.

A vehicle control apparatus A according to Claim 8 of the invention and modified versions will be described below. A vehicle control apparatus A provided with a body, a plurality of wheels disposed to be rotatable relative to the body, and a camber angle adjuster that is disposed on a predetermined one of the plurality of wheels and adjusts the camber angle of that wheel, further provided with stable running state judging means that judges whether or not the running state of the vehicle is stable, and camber giving means that actuates the camber angle adjuster to give a negative camber to the predetermined wheel when the stable running state judging means judges that the running state of the vehicle is stable.

A vehicle control apparatus A1 that is the vehicle control apparatus A further provided with a vehicle speed detecting unit that detects a vehicle speed, wherein the stable running state judging means judges whether or not a vehicle speed count calculated on the basis of a vehicle speed in a predetermined length of time is equal to or greater than a threshold and, when the vehicle speed count is equal to or greater than the threshold, judges that the running state of the vehicle is stable.

The vehicle control apparatus A1 is enabled to refrain from giving the camber θ to wheels when the vehicle is driven at low speed. This can reduce the frequency of giving the camber θ to the wheels and, at the same time, can shorten the length of time in which the camber θ is given. As a result, occurrence of partial wear on tires can be restrained to extend the service lives of the tires.

A vehicle control apparatus A3, which is a version of the vehicle control apparatus A1 or A2 further having a steering quantity detecting unit that detects a steering quantity, wherein the stable running state judging means judges whether or not a steering quantity count calculated on the basis of a steering quantity count calculated in a predetermined length of time is smaller than a threshold and, when the steering quantity count is smaller than the threshold, judges that the running state of the vehicle is stable.

The vehicle control apparatus A3 is enabled to refrain from giving the camber θ to wheels except when the vehicle is driven in a predetermined straight line state. This can reduce the frequency of giving the camber θ to the wheels and, at the same time, can shorten the length of time in which the camber θ is given. As a result, occurrence of partial wear on tires can be restrained to extend the service lives of the tires.

A vehicle control apparatus A4, which is a version of any of the vehicle control apparatuses A1 through A3 further provided with a gear ratio acquiring means that acquires the gear ratio of a transmission disposed in the vehicle, wherein the stable running state judging means judges that the running state of the vehicle is stable when the gear ratio is less than 1.

The vehicle control apparatus A4, if steering is done to temporarily avoid, for instance, unevenness or the like on the road during high speed running in a state in which the gear ratio is less than 1, maintains a state in which the camber θ is given to wheels. This enables the actuation of a camber angle adjuster to adjust the camber angles of wheels every time the vertical loads of the wheels become equal to or greater than the predetermined vertical load in a state in which the camber angles of the wheels are adjusted by the camber giving means, thereby to restrain frequent switching-over of the camber angles and to prevent the running stability from being reduced by the frequent switching-over of the camber angles.

A vehicle control apparatus A5, which is a version of any of the vehicle control apparatuses A1 through A4 wherein the predetermined wheels are rear wheels.

The vehicle control apparatus A5 can keep the vehicle in a stable under-steered tendency by giving negative cambers to rear wheels when the running state of the vehicle is table and simplify the hardware configuration of the vehicle.

A modified version B of the invention will be disclosed below. Vehicles which allow negative cambers to be given to rear wheels are already made available. When a vehicle of this kind is to run straight, namely during straight running of the vehicle, as camber thrusts can be generated in mutually opposing directions on the tires of left rear and right rear wheels, the stability of the vehicle during straight running (hereinafter referred to as "running stability") can be enhanced. Also, when the vehicle is to be turned by operating the steering wheel, namely at the time of vehicle turning, a centrifugal force arises on the vehicle to increase the vertical loads of wheels on the outer circumferential side (outer wheels) out of the left rear and right rear wheels, and camber thrusts arising on the tires of the outer circumferential side wheels become greater than the camber thrusts arising on the tires of the inner circumferential side wheels (inner wheels). As a sufficient centripetal force can be generated on the vehicle, the stability of the vehicle at the time of turning (hereinafter referred to as "turning stability") can be enhanced. To add, the aforementioned vertical load is a load arising from the pressing of the road surface by tires.

However, if a vehicle is driven at low speed in a state in which cambers are given to its wheels, generally partial wear occurs on its tires to shorten the service lives of the tires. In view of this problem, the running speed of the vehicle is detected and, by giving negative cambers to rear wheels only during high speed running of the vehicle, generation of partial wear on the tires is restrained (Patent Literature 1).

However, the technique disclosed in Patent Literature 1 involves frequent giving of negative cambers to wheels and, moreover since negative cambers are given for a long period of time, occurrence of partial wear cannot be sufficiently restrained. Also, as negative cambers are continuously given to the wheels during high speed running of the vehicles, the rolling resistance of the tires correspondingly increases with an adverse effect on fuel efficiency.

The modified version B of the invention is intended to provide a camber control device that can solve the problems with conventional vehicle to extend the service lives of tires and improve fuel efficiency.

A camber control device B having a vehicle body, a plurality of wheels disposed to be turnable relative to the body, a camber varying mechanism that is disposed on a predetermined wheel out of all the wheels and intended to give a camber to the wheel, stable running state judging means that judges whether or not the running state of the vehicle is stable, and camber giving means that gives a negative camber to the predetermined wheel when the stable running state judging means judges that the running state of the vehicle is stable.

The camber control device B can reduce the frequency of giving the negative camber because the negative camber is given to the predetermined wheel when the running state of the vehicle is stable. Moreover, it can shorten the length of time in which n the negative camber is given. Therefore, the occurrence of partial wear on the tire of the predetermined wheel can be sufficiently restrained to extend the service lives of the tire. Furthermore, as the negative camber does not continue to be given to the predetermined wheel while the vehicle is being driven, the rolling resistance of the tire can be correspondingly reduced. Therefore, fuel efficiency can be enhanced.

### Reference Signs List

100, 200, 300, 400, 500, 600: Vehicle control apparatus
1, 201, 301: Vehicle
2, 202, 302: Wheel
2FL, 202FL, 302FL: Left front wheel (part of wheel)
2FR, 202FR, 302FR: Right front wheel (part of wheel)
2RL, 202RL, 302RL: Left rear wheel (part of wheel)
2RR, 202RR, 302RR: Right rear wheel (part of wheel)
4, 104: Suspension
44, 244: Camber angle adjuster
44FL: FL motor (part of camber angle adjuster)
44FR: FR motor (part of camber angle adjuster)
44RL: RL motor (part of camber angle adjuster)
44RR: RR motor (part of camber angle adjuster)
308, 309: Actuator (camber angle adjuster)
B: Body
BF: Body frame (part of body)

## Claims

1. A vehicle control apparatus (100) for use in a vehicle (1) equipped with front wheels (2FL, 2FR) and rear wheels (2RL, 2RR) as wheels and a camber angle adjuster (44, 244) for adjusting the camber angles of the wheels, the apparatus comprising:
running state acquiring means adapted to acquire a running state of the vehicle (1) on the basis of a running speed of the vehicle (1) and an operation quantity of a steering wheel (63) of the vehicle (1),
running state judging means adapted to judge that the running state of the vehicle (1) acquired by the running state acquiring means is a predetermined straight running state, if the running speed of the vehicle (1) is equal to or more than a predetermined level and the operation quantity of the steering wheel (63) is equal to or less than a predetermined operation quantity,
vertical load information acquiring means adapted to acquire information on vertical loads of the wheels (2FL, 2FR, 2RL, 2RR),
vertical load judging means adapted to judge whether or not the vertical loads of the wheels (2FL, 2FR, 2RL, 2RR) are equal to or more than a predetermined vertical load on the basis of information on the vertical loads of the wheels (2FL, 2FR, 2RL, 2RR) acquired by the vertical load information acquiring means, **characterized by**
first camber angle adjusting means adapted to adjust the camber angles of the wheels (2FL, 2FR, 2RL, 2RR) with the camber angle adjuster (44, 244) to a first camber angle giving positive cambers or negative cambers to the wheels if the running state judging means judges that the running state of the vehicle (1) is the predetermined straight running state, and
second camber angle adjusting means adapted to adjust the camber angles of the wheels (2FL, 2FR, 2RL, 2RR), if the running state judging means judges that the running state of the vehicle (1) is the predetermined straight running state and the vertical load judging means judges that the vertical loads of the wheels (2FL, 2FR, 2RL, 2RR) are equal to or more than the predetermined vertical load, from the first camber angle to a second camber angle, wherein the absolute value of the second camber angle is smaller than the absolute value of the first camber angle.

2. The vehicle control apparatus according to Claim 1, further comprising:
state quantity acquiring means that acquires a state quantity or quantities of the vehicle (1);
state quantity judging means that judges whether or not the state quantity or quantities of the vehicle (1) acquired by the acquiring means satisfy predetermined condition or conditions; third camber angle adjusting means adapted to adjust the camber angles of the wheels (2FL, 2FR, 2RL, 2RR) with the camber angle adjuster (44, 244) and gives positive cambers or negative cambers to the wheels (2FL, 2FR, 2RL, 2RR), if the state quantity judging means judges that the state quantity or quantities of the vehicle satisfy the predetermined condition or conditions,
wherein the second camber angle adjusting means are adapted to adjust the camber angles of the wheels (2FL, 2FR, 2RL, 2RR), if the state quantity judging means judges that the state quantity or quantities of the vehicle (1) do not satisfy the predetermined condition or conditions and the vertical load judging means judges that the vertical loads of the wheels (2FL, 2FR, 2RL, 2RR) are equal to or more than a predetermined vertical load, so as to be at least smaller in absolute value than the camber angles adjusted by the first camber angle adjusting means.

3. The vehicle control apparatus according to Claim 1,
wherein the first camber angle adjusting means is to adjust the camber angles of front wheels (2FL, 2FR) and rear wheels (2RL, 2RR), and
the second camber angle adjusting means is to adjust the camber angles of the front wheels (2FL, 2FR) or the rear wheels (2RL, 2RR).

4. The vehicle control apparatus according to Claim 1 or 3, further comprising:
continuous state judging means that judges whether or not the predetermined state or states of the vehicle (1) are continued on the basis of information on the vertical loads of the wheels (2FL, 2FR, 2RL, 2RR) acquired by the vertical load information acquiring means,
wherein the second camber angle adjusting means is provided with maintaining means that maintains the camber angles adjusted by the camber angle adjusting means if the running state judging means judges that the running state of the vehicle (1) is the predetermined straight running state, the vertical load judging means judges that the vertical loads of the wheels (2FL, 2FR, 2RL, 2RR) are equal to or more than the predetermined vertical load and the continuous state judging means judges that the vehicle continues to satisfy the predetermined condition or conditions.

5. The vehicle control apparatus according to any of Claims 1 and 3 to 4,
wherein the first camber angle adjusting means is provided with standby means that stands by for a start of adjustment of the camber angles of the wheels (2FL, 2FR, 2RL, 2RR).

6. The vehicle control apparatus according to any of Claims 1 and 3 to 5,
wherein the vehicle (1) has expandably configured suspensions (41) that suspend the wheels (1) from the body (BF), and
the apparatus comprises expansion/contraction quantity acquiring means that acquires an expansion/contraction quantity of the suspension (41), and
the vertical load judging means judges whether or not the vertical loads of the wheels (2FL, 2FR, 2RL, 2RR) are equal to or more than the predetermined vertical load on the basis of the expansion/contraction quantity of the suspension (41) acquired by the expansion/contraction quantity acquiring means.

## Patentansprüche

1. Fahrzeugsteuerungsvorrichtung (100), zur Verwendung in einem Fahrzeug (1), das mit Fronträdern (2FL, 2FR) und Heckrädern (2RL, 2RR) als Rädern und einem Sturzwinkeleinsteller (44, 244) zum Einstellen der Sturzwinkel der Räder ausgestattet ist, wobei die Vorrichtung aufweist:
eine Fahrzustandserfassungseinrichtung, die angepasst ist, einen Fahrzustand des Fahrzeugs (1) basierend auf einer Fahrgeschwindigkeit des Fahrzeugs (1) und einem Betätigungsumfang eines Lenkrads (63) des Fahrzeugs (1) zu erfassen,
eine Fahrzustandsbewertungseinrichtung, die angepasst ist, zu bewerten, dass der Fahrzustand des Fahrzeugs (1), der durch die Fahrzustandserfassungseinrichtung erfasst ist, ein vorbestimmter Geradeausfahrzustand ist, wenn die Fahrgeschwindigkeit des Fahrzeugs (1) gleich wie oder größer als ein vorbestimmtes Niveau ist und der Betätigungsumfang des Lenkrads (63) gleich wie oder kleiner als ein vorbestimmter Betätigungsumfang ist,
eine Vertikallastinformationserfassungseinrichtung, die angepasst ist, eine Information über Vertikallasten der Räder (2FL, 2FR, 2RL, 2RR) zu erfassen,
eine Vertikallastbewertungseinrichtung, die angepasst ist, zu bewerten, ob die Vertikallasten der Räder (2FL, 2FR, 2RL, 2RR) gleich wie oder größer als eine vorbestimmte Vertikallast sind oder nicht, basierend auf einer Information über die Vertikallasten der Räder (2FL, 2FR, 2RL, 2RR), die durch die Vertikallastinformationserfassungseinrichtung erfasst sind, **gekennzeichnet durch**
eine erste Sturzwinkeleinstelleinrichtung, die angepasst ist, die Sturzwinkel der Räder (2FL, 2FR, 2RL, 2RR) mit dem Sturzwinkeleinsteller (44, 244) auf einen ersten Sturzwinkel einzustellen, der die Räder mit einem positiven Sturz oder einem negativen Sturz versieht, wenn die Fahrzustandsbewertungseinrichtung bewertet, dass der Fahrzustand des Fahrzeugs (1) der vorbestimmte Geradeausfahrzustand ist, und
eine zweite Sturzwinkeleinstelleinrichtung, die angepasst ist, die Sturzwinkel der Räder (2FL, 2FR, 2RL, 2RR) von dem ersten Sturzwinkel auf einen zweiten Sturzwinkel einzustellen, wenn die Fahrzustandsbewertungseinrichtung bewertet, dass der Fahrzustand des Fahrzeugs (1) der vorbestimmte Geradausfahrzustand ist und die Vertikallastbewertungseinrichtung bewertet, dass die Vertikallasten der Räder (2FL, 2FR, 2RL, 2RR) gleich wie oder größer als die vorbestimmte Vertikallast sind, wobei der Betrag des zweiten Sturzwinkels kleiner ist als der Betrag des ersten Sturzwinkels.

2. Fahrzeugsteuerungsvorrichtung nach Anspruch 1, ferner aufweisend:
eine Zustandsgrößenerfassungseinrichtung, die eine Zustandsgröße oder -größen des Fahrzeugs (1) erfasst;
eine Zustandsgrößenbewertungseinrichtung, die bewertet, ob die Zustandsgröße oder -größen des Fahrzeugs (1), die durch die Erfassungseinrichtung erfasst ist/sind, eine vorbestimmte Bedingung oder Bedingungen erfüllen; eine dritte Sturzwinkeleinstelleinrichtung, die angepasst ist, die Sturzwinkel der Räder (2FL, 2FR, 2RL, 2RR) mit dem Sturzwinkeleinsteller (44, 244) einzustellen und die Räder (2FL, 2FR, 2RL, 2RR) mit einem positiven Sturz oder einem negativen Sturz versieht, wenn die Zustandsgrößenbewertungseinrichtung bewertet, dass die Zustandsgröße oder -größen des Fahrzeugs die vorbestimmte Bedingung oder Bedingungen erfüllen,
wobei die zweite Sturzwinkeleinstelleinrichtung angepasst ist, die Sturzwinkel der Räder (2FL, 2FR, 2RL, 2RR) einzustellen, um mindestens vom Betrag kleiner zu sein als die Sturzwinkel, die durch die erste Sturzwinkeleinstelleinrichtung eingestellt sind, wenn die Zustandsgrößenbewertungseinrichtung bewertet, dass die Zustandsgröße oder -größen des Fahrzeugs (1) die vorbestimmte Bedingung oder Bedingungen nicht erfüllen und die Vertikallastbewertungseinrichtung bewertet, dass die Vertikallasten der Räder (2FL, 2FR, 2RL, 2RR) gleich wie oder größer als eine vorbestimmte Vertikallast sind.

3. Fahrzeugsteuerungsvorrichtung nach Anspruch 1,
wobei die erste Sturzwinkeleinstelleinrichtung die Sturzwinkel der Fronträder (2FL, 2FR) und Heckräder (2RL, 2RR) einstellen soll, und
die zweite Sturzwinkeleinstelleinrichtung die Sturzwinkel der Fronträder (2FL, 2FR) oder der Heckräder (2RL, 2RR) einstellen soll.

4. Fahrzeugsteuerungsvorrichtung nach Anspruch 1 oder 3, ferner aufweisend:
eine Dauerzustandsbewertungseinrichtung, die bewertet, ob der/die vorbestimmte(n) Zustand oder Zustände des Fahrzeugs (1) andauern, basierend auf einer Information über die Vertikallasten der Räder (2FL, 2FR, 2RL, 2RR), die durch die Vertikallastinformationserfassungseinrichtung erfasst sind,
wobei die zweite Sturzwinkeleinstelleinrichtung mit einer Aufrechterhaltungseinrichtung versehen ist, die die Sturzwinkel aufrechterhält, die durch die Sturzwinkeleinstelleinrichtung eingestellt sind, wenn die Fahrzustandsbewertungseinrichtung bewertet, dass der Fahrzustand des Fahrzeugs (1) der vorbestimmte Geradeausfahrzustand ist, die Vertikallastbewertungseinrichtung bewertet, dass die Vertikallasten der Räder (2FL, 2FR, 2RL, 2RR) gleich wie oder größer als die vorbestimmte Vertikallast sind, und die Dauerzustandsbewertungseinrichtung bewertet, dass das Fahrzeug damit fortfährt, die vorbestimmte(n) Bedingung oder Bedingungen zu erfüllen.

5. Fahrzeugsteuerungsvorrichtung nach einem der Ansprüche 1 und 3 bis 4,
wobei die erste Sturzwinkeleinstelleinrichtung mit einer Bereitschaftseinrichtung versehen ist, die für einen Beginn einer Einstellung der Sturzwinkel der Räder (2FL, 2FR, 2RL, 2RR) bereitsteht.

6. Fahrzeugsteuerungsvorrichtung nach einem der Ansprüche 1 und 3 bis 5,
wobei das Fahrzeug (1) expandierbar eingerichtete Aufhängungen (41) hat, die die Räder (1) an der Karosserie (BF) aufhängen, und
die Vorrichtung eine Expansions-/Kontraktionsumfangserfassungseinrichtung aufweist, die einen Expansions-/Kontraktionsumfang der Aufhängung (41) erfasst, und
die Vertikallastbewertungseinrichtung bewertet, ob die Vertikallasten der Räder (2FL, 2FR, 2RL, 2RR) gleich wie oder größer als die vorbestimmte Vertikallast sind oder nicht, basierend auf dem Expansions-/Kontraktionsumfang der Aufhängung (41), der durch die Expansions-/Kontraktionsumfangserfassungseinrichtung erfasst ist.

## Revendications

1. Appareil de commande de véhicule (100) pour une utilisation dans un véhicule (1) équipé de roues avant (2FL, 2FR) et de roues arrière (2RL, 2RR) en tant que roues et un ajusteur d'angle de carrossage (44, 244) pour l'ajustement des angles de carrossage des roues, l'appareil comprenant :
un moyen d'acquisition d'état de roulement adapté pour acquérir un état de roulement du véhicule (1) sur la base d'une vitesse de roulement du véhicule (1) et une quantité d'opération d'une roue de direction (63) du véhicule (1),
un moyen de jugement d'état de roulement adapté pour juger que l'état de roulement du véhicule (1) acquis par le moyen d'acquisition d'état de roulement est un état de roulement droit prédéterminé, si la vitesse de roulement du véhicule (1) est égale à ou supérieure à un niveau prédéterminé et la quantité d'opération de la roue de direction (63) est égale ou inférieure à une quantité d'opération prédéterminée,
un moyen d'acquisition d'informations de charge verticale adapté pour acquérir des informations sur des charges verticales des roues (2FL, 2FR, 2RL, 2RR),
un moyen de jugement de charge verticale adapté pour juger si les charges verticales des roues (2FL, 2FR, 2RL, 2RR) sont égales ou supérieures ou non à une charge verticale prédéterminée sur la base d'informations sur les charges verticales des roues (2FL, 2FR, 2RL, 2RR) acquises par le moyen d'acquisition d'informations de charge verticale, **caractérisé par**
un premier moyen d'ajustement d'angle de carrossage adapté pour ajuster les angles de carrossage des roues (2FL, 2FR, 2RL, 2RR) avec l'ajusteur d'angle de carrossage (44, 244) à un premier angle de carrossage donnant des carrossages positifs ou des carrossages négatifs aux roues si le moyen de jugement d'état de roulement juge que l'état de roulement du véhicule (1) est l'état de roulement droit prédéterminé, et
un deuxième moyen d'ajustement d'angle de carrossage adapté pour ajuster les angles de carrossage des roues (2FL, 2FR, 2RL, 2RR) si le moyen de jugement d'état de roulement juge que l'état de roulement du véhicule (1) est l'état de roulement droit prédéterminé et le moyen de jugement de charge verticale juge que les charges verticales des roues (2FL, 2FR, 2RL, 2RR) sont égales ou supérieures à la charge verticale prédéterminée, du premier angle de carrossage à un second angle de carrossage, dans lequel la valeur absolue du second angle de carrossage est inférieure à la valeur absolue du premier angle de carrossage.

2. Appareil de commande de véhicule selon la revendication 1, comprenant en outre :
un moyen d'acquisition de quantité d'état qui acquiert une quantité ou des quantités d'état du véhicule (1) ;
un moyen de jugement de quantité d'état qui juge si la quantité ou les quantités d'état du véhicule (1) acquises par le moyen d'acquisition satisfont ou ne satisfont pas à la condition ou aux conditions prédéterminées ; un troisième moyen d'ajustement d'angle de carrossage adapté pour ajuster les angles de carrossage des roues (2FL, 2FR, 2RL, 2RR) avec l'ajusteur d'angle de carrossage (44, 244) et donne des carrossages positifs ou carrossages négatifs aux roues (2FL, 2FR, 2RL, 2RR), si le moyen de jugement de quantité d'état juge que la quantité ou les quantités d'état du véhicule satisfont à la condition ou aux conditions prédéterminées,
dans lequel les deuxièmes moyens d'ajustement d'angle de carrossage sont adaptés pour ajuster les angles de carrossage des roues (2FL, 2FR, 2RL, 2RR), si le moyen de jugement de quantité d'état juge que la quantité ou les quantités d'état du véhicule (1) ne satisfont pas à la condition ou aux conditions prédéterminées et le moyen de jugement de charge verticale juge que les charges verticales des roues (2FL, 2FR, 2RL, 2RR) sont égales ou supérieures à une charge verticale prédéterminée de sorte à être au moins plus petites en valeur absolue que les angles de carrossage ajustés par le premier moyen d'ajustement d'angle de carrossage.

3. Appareil de commande de véhicule selon la revendication 1,
dans lequel le premier moyen d'ajustement d'angle de carrossage doit ajuster les angles de carrossage des roues avant (2FL, 2FR) et des roues arrière (2RL, 2RR), et le deuxième moyen d'ajustement d'angle de carrossage doit ajuster les angles de carrossage des roues avant (2FL, 2FR) ou des roues arrière (2RL, 2RR).

4. Appareil de commande de véhicule selon la revendication 1 ou 3, comprenant en outre :
un moyen de jugement d'état continu qui juge si l'état ou les états prédéterminés du véhicule (1) sont continus ou non sur la base d'informations sur les charges verticales des roues (2FL, 2FR, 2RL, 2RR) acquises par le moyen d'acquisition d'informations de charge verticale,
dans lequel le deuxième moyen d'ajustement d'angle de carrossage est doté d'un moyen de maintien qui maintient les angles de carrossage ajustés par le moyen d'ajustement d'angle de carrossage si le moyen de jugement d'état de roulement juge que l'état de roulement du véhicule (1) est l'état de roulement droit prédéterminé, le moyen de jugement de charge verticale juge que les charges verticales des roues (2FL, 2FR, 2RL, 2RR) sont égales ou supérieures à la charge verticale prédéterminée et le moyen de jugement d'état continu juge que le véhicule continue à satisfaire à la condition ou aux conditions prédéterminées.

5. Appareil de commande de véhicule selon l'une quelconque des revendications 1 et 3 à 4,
dans lequel le premier moyen d'ajustement d'angle de carrossage est doté d'un moyen de veille qui met en veille pendant un lancement d'ajustement des angles de carrossage des roues (2FL, 2FR, 2RL, 2RR).

6. Appareil de commande de véhicule selon l'une quelconque des revendications 1 et 3 à 5,
dans lequel le véhicule (1) présente des suspensions (41) configurées de manière expansible qui suspendent les roues (1) du corps (BF), et
l'appareil comprend un moyen d'acquisition de quantité d'expansion et de contraction qui acquiert une quantité d'expansion et de contraction de la suspension (41), et
le moyen de jugement de charge verticale juge si les charges verticales des roues (2FL, 2FR, 2RL, 2RR) sont égales ou supérieures ou non à la charge verticale prédéterminée sur la base de la quantité d'expansion et de contraction de la suspension (41) acquise par le moyen d'acquisition de quantité d'expansion et de contraction.
